# EUROPEAN PATENT SPECIFICATION

(11) **EP 4 574 639 B1**
(45) Date of publication and mention of the grant of the patent: **08.04.2026**
(21) Application number: 24208895.3
(22) Date of filing: 25.10.2024
(51) Int. Cl.: B62J 37/00, B62J 40/10, F02D 11/10, F02D 9/02, F02D 9/10

(54) **STRADDLED VEHICLE**
GRÄTSCHSITZFAHRZEUG
VÉHICULE À SELLE

(30) Priority: 20.12.2023 JP 2023214853
(43) Date of publication of application: 25.06.2025
(73) Proprietor: Yamaha Hatsudoki Kabushiki Kaisha, Iwata-shi, Shizuoka 438-8501 (JP)
(72) Inventor: Higaki, Yuji, Shizuoka, 4388501 (JP)
(74) Representative: Grünecker Patent- und Rechtsanwälte PartG mbB

(56) References cited:
- EP-A1- 2 339 149
- CN-A- 102 126 539
- CN-A- 106 103 943
- CN-A- 109 563 780
- JP-A- 2002 256 896
- JP-A- 2011 149 277
- JP-A- 2013 011 209

## Description

The present invention relates to a straddled vehicle according to the preamble of independent claim 1. Such a straddled vehicle can be taken from the prior art document WO 2019/186923 A1.

In particular WO 2019/186923 A1 discloses a straddled vehicle that includes an engine, an intake pipe, a throttle valve, a motor, a gear box, a fuel injection device, and a fuel pipe. The intake pipe is connected to the engine. The throttle valve is provided in the intake pipe. The gear box is coupled to the throttle valve. The motor is coupled to the gear box. The motor drives the throttle valve via the gear box. The fuel injection device is attached to a portion of the intake pipe from the throttle valve to the engine. Hereinafter, the portion of the intake pipe from the throttle valve to the engine is appropriately referred to as a "downstream portion". The fuel pipe has a first end. The first end of the fuel pipe is connected to the fuel injection device.

The gear box is disposed more rearward than the first end of the fuel pipe. The gear box does not overlap the first end of the fuel pipe in side view of the straddled vehicle. As described above, the gear box is coupled to the throttle valve. The first end of the fuel pipe is connected to the fuel injection device. Therefore, it is difficult to dispose the throttle valve at a position close to the fuel injection device. In other words, it is difficult to shorten the portion of the intake pipe from the throttle valve to the fuel injection device. The portion of the intake pipe from the throttle valve to the fuel injection device is included in the downstream portion. Therefore, it is difficult to shorten the downstream portion. As a result, the downstream portion is long.

The intake pipe supplies air to the engine. The throttle valve adjusts the amount of air flowing through the intake pipe. The amount of air flowing through the intake pipe corresponds to the amount of intake air of the engine. The fuel pipe supplies fuel to the fuel injection device. The fuel injection device injects fuel to the downstream portion to generate an air-fuel mixture. The engine takes in the air-fuel mixture. Specifically, the engine has a combustion chamber. The air-fuel mixture enters the combustion chamber from the downstream portion.

In the straddled vehicle of WO 2019/186923 A1, the downstream portion of the intake pipe is long. Therefore, in the straddled vehicle of WO 2019/186923 A1, the downstream portion has a large volume. More particularly, the downstream portion has air flow path with a large volume. Several problems arise when the downstream portion has a large volume.

First, when the downstream portion has a large volume, it is difficult to quickly change the amount of intake air of the engine by the throttle valve. As the volume of the downstream portion increases, the time delay between the change in the opening degree of the throttle valve and the change in the amount of intake air of the engine increases.

Second, when the downstream portion has a large volume, gas may return from the engine to the downstream portion. For example, unburned or exhaust gases flow back from the combustion chamber to the downstream portion. As a result, the fuel consumption of the engine may be reduced. Alternatively, it may be difficult to purify the exhaust gas of the engine.

It is the object of the present invention to provide a straddled vehicle in which a downstream portion of an intake pipe is shortened. According to the present invention said object is solved by a straddled vehicle having the features of independent claim 1. Preferred embodiments are laid down in the dependent claims.

First, it has been studied to dispose the gear box so that the gear box overlaps the first end of the fuel pipe in side view of the straddled vehicle. Here, the gear box is coupled to the throttle valve. The first end of the fuel pipe is connected to the fuel injection device. Therefore, it is easy to dispose the throttle valve at a position close to the fuel injection device. In other words, it is easy to shorten the portion of the intake pipe from the throttle valve to the fuel injection device. Therefore, it is easy to shorten the downstream portion.

However, when the gear box overlaps the first end of the fuel pipe in side view of the straddled vehicle, a new problem occurs. The new problem is the interference between the gear box and the fuel pipe.

The straddled vehicle according to the present teaching is constituted by:
an engine;
an intake pipe connected to the engine;
a throttle valve provided in the intake pipe;
a gear box coupled to the throttle valve;
a motor coupled to the gear box and configured to drive the throttle valve via the gear box;
a fuel injection device attached to a portion of the intake pipe from the throttle valve to the engine; and
a fuel pipe having a first end connected to the fuel injection device; wherein
the gear box overlaps the first end of the fuel pipe in side view of the straddled vehicle,
the gear box is disposed in one of a right area located rightward of the fuel injection device and a left area located leftward of the fuel injection device, and
the first end of the fuel pipe is disposed in the other of the right area and the left area.

A straddled vehicle includes an engine, an intake pipe, a throttle valve, a gear box, a motor, a fuel injection device, and a fuel pipe. The intake pipe is connected to the engine. The throttle valve is provided in the intake pipe. The gear box is coupled to the throttle valve. The motor is coupled to the gear box. The motor drives the throttle valve via the gear box. The fuel injection device is attached to a portion of the intake pipe from the throttle valve to the engine. Hereinafter, the portion of the intake pipe located between the engine and the throttle valve is appropriately referred to as a "downstream portion". The fuel injection device is attached to the downstream portion of the intake pipe. The fuel pipe has a first end. The first end of the fuel pipe is connected to the fuel injection device.

The gear box overlaps the first end of the fuel pipe in side view of the straddled vehicle. As described above, the gear box is coupled to the throttle valve. The first end of the fuel pipe is connected to the fuel injection device. Therefore, it is easy to dispose the throttle valve at a position close to the fuel injection device. In other words, it is easy to shorten the portion of the intake pipe from the throttle valve to the fuel injection device. The portion of the intake pipe from the throttle valve to the fuel injection device is included in the downstream portion. Therefore, it is easy to shorten the downstream portion.

The right area is an area located rightward of the fuel injection device. The left area is an area located leftward of the fuel injection device. The gear box is disposed in one of the right area and the left area. The first end of the fuel pipe is disposed in the other of the right area and the left area. Therefore, the gear box and the first end of the fuel pipe do not interfere with each other. Thus, it is easy to prevent interference between the gear box and the fuel pipe.

In summary, it is easy for the straddled vehicle to shorten the downstream portion of the intake pipe. Further, it is easy for the straddled vehicle to prevent interference between the gear box and the fuel pipe.

It is preferred in the above-described straddled vehicle that
the entire fuel pipe is disposed in the other of the right area and the left area.

Thus, it is easier to prevent interference between the gear box and the fuel pipe.

It is preferred in the above-described straddled vehicle that
the entire gear box is disposed in one of the right area and the left area.

Thus, it is easier to prevent interference between the gear box and the fuel pipe.

It is preferred in the above-described straddled vehicle that
the gear box overlaps the fuel injection device in side view of the straddled vehicle.

Therefore, it is easier to dispose the throttle valve at a position close to the fuel injection device. Therefore, it is easier to shorten the downstream portion of the intake pipe.

It is preferred in the above-described straddled vehicle that
the intake pipe extends upward from the engine,
the fuel injection device is disposed above the engine, and
the throttle valve is disposed higher than the fuel injection device.

The intake pipe extends upward from the engine. The fuel injection device is disposed above the engine. The throttle valve is disposed higher than the fuel injection device. Therefore, it is easy to attach the fuel injection device to the downstream portion of the intake pipe.

It is preferred that in the above-described straddled vehicle that
the throttle valve is disposed at the same height position as the gear box.

Therefore, it is easier to dispose the throttle valve at a position close to the fuel injection device.

It is preferred in the above-described straddled vehicle that
the fuel injection device extends forward and upward from the intake pipe, and
the gear box extends forward from the throttle valve.

Therefore, it is easy for the gear box to overlap the first end of the fuel pipe in side view of the straddled vehicle.

It is preferred in the above-described straddled vehicle that
the first end of the fuel pipe extends forward from the fuel injection device.

Therefore, it is easier for the gear box to overlap the first end of the fuel pipe in side view of the straddled vehicle.

It is preferred in the above-described straddled vehicle that
the intake pipe includes:
a throttle body that accommodates the throttle valve; and
a first pipe extending from the engine to the throttle body; wherein
the fuel injection device is attached to the first pipe.

The intake pipe includes a throttle body. The throttle body accommodates a throttle valve. Therefore, it is easy to provide the throttle valve in the intake pipe. The intake pipe includes a first pipe. The first pipe extends from the engine to the throttle body. Therefore, the first pipe is included in the downstream portion. The fuel injection device is attached to the first pipe. Therefore, it is easy to attach the fuel injection device to the downstream portion.

It is preferred in the above-described straddled vehicle that
the first pipe extends upward and rearward from the engine, and
the throttle body extends upward from the first pipe.

The first pipe extends upward and rearward from the engine. Therefore, it is easy to lower the height position of the throttle body. In other words, it is easy to reduce the distance in the up-down direction of the straddled vehicle between the engine and the throttle body. The throttle body extends upward from the first pipe. Therefore, it is easier for the gear box to overlap the first end of the fuel pipe in side view of the straddled vehicle.

It is preferred in the above-described straddled vehicle that
the engine includes an intake passage connected to the first pipe,
the first pipe extends upward and rearward from the intake passage, and
the intake passage extends downward and rearward from the first pipe.

Therefore, the air smoothly flows from the first pipe to the intake passage.

It is preferred in the above-described straddled vehicle that
the motor is disposed in front of the throttle valve.

Therefore, it is easy to dispose the motor at a position close to the throttle valve. Therefore, it is easy for the motor to drive the throttle valve.

It is preferred in the above-described straddled vehicle that
the motor is disposed higher than the engine.

Therefore, the motor and the engine do not interfere with each other.

It is preferred in the above-described straddled vehicle that
the motor is disposed higher than the first end of the fuel pipe.

Therefore, the motor and the first end of the fuel pipe do not interfere with each other.

It is preferred in the above-described straddled vehicle that
the motor is disposed higher than the fuel injection device.

Therefore, the motor and the fuel injection device do not interfere with each other.

It is preferred in the above-described straddled vehicle that
the motor overlaps the fuel injection device in a plan view of the straddled vehicle.

Therefore, it is easy to dispose the motor at a position close to the fuel injection device. As described above, the motor is coupled to the gear box. The fuel injection device is connected to the first end of the fuel pipe. Therefore, it is easy to dispose the gear box at a position close to the first end of the fuel pipe. Therefore, it is easy for the gear box to overlap the first end of the fuel pipe in side view of the straddled vehicle.

It is preferred in the above-described straddled vehicle that
the straddled vehicle includes:
the seat; and
a storage box disposed below the seat; wherein
the intake pipe is disposed in front of the storage box.

A straddled vehicle includes a seat and a storage box. The storage box is disposed below the seat. The intake pipe is disposed in front of the storage box. Therefore, the intake pipe and the storage box do not interfere with each other.

It is preferred in the above-described straddled vehicle that
the motor is disposed in front of the storage box.

Therefore, the motor and the storage box do not interfere with each other.

It is preferred in the above-described straddled vehicle that
the intake pipe is disposed below the seat.

Therefore, the intake pipe and the seat do not interfere with each other.

It is preferred in the above-described straddled vehicle that
the motor is disposed below the seat.

Therefore, the motor and the seat do not interfere with each other.

It is preferred in the above-described straddled vehicle that
the straddled vehicle further includes an air cleaner connected to the intake pipe, and
the motor is disposed below the air cleaner.

Therefore, the motor and the air cleaner do not interfere with each other.

### BRIEF DESCRIPTION OF DRAWINGS

For the purpose of illustrating the present teaching, there are shown in the drawings several forms which are presently preferred.
FIG. 1 is a left side view of a straddled vehicle according to an embodiment;
FIG. 2 is a left side view of the straddled vehicle;
FIG. 3 is a left side view of the straddled vehicle;
FIG. 4 is a left side view of the straddled vehicle;
FIG. 5 is a perspective view of the throttle device and the fuel injection device;
FIG. 6 is a plan view of the throttle device, the fuel injection device, and the fuel pipe;
FIG. 7 is a side view of the throttle device, the fuel injection device, and the fuel pipe;
FIG. 8 is a right side view of the air cleaner;
FIG. 9 is a plan view illustrating the inside of the air cleaner;
FIG. 10 is a left side view of the air cleaner;
FIG. 11 is a plan view of the straddled vehicle;
FIG. 12 is a plan view of the straddled vehicle;
FIG. 13 is a plan view of the straddled vehicle;
FIG. 14 is a plan view of the straddled vehicle;
FIG. 15 is a front view of the straddled vehicle;
FIG. 16 is a bottom view of the straddled vehicle; and
FIG. 17 is a front view of the air cleaner and the fuel tank.

### DETAILED DESCRIPTION OF PREFERRED EMBODIMENTS

A straddled vehicle 1 according to the present teaching will be described hereinafter with reference to the drawings.

### 1. Outline Construction of Straddled Vehicle 1

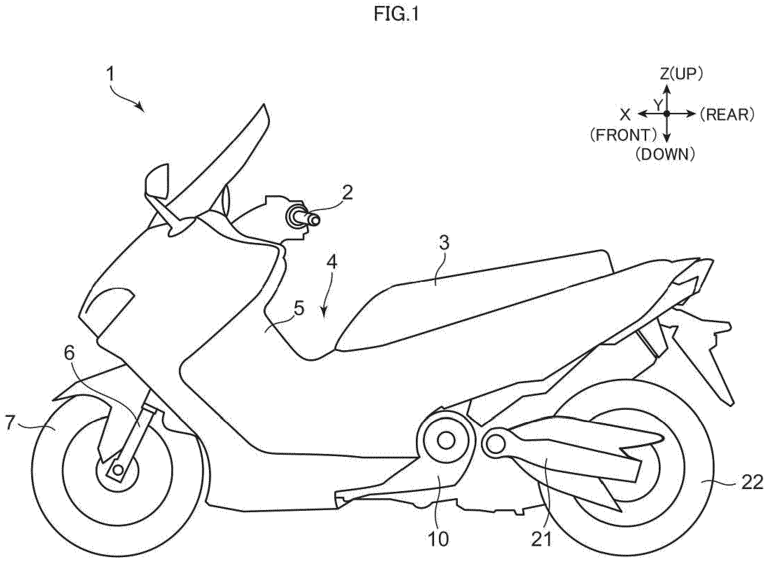

FIG. 1 is a left side view of a straddled vehicle 1 according to an embodiment. The straddled vehicle 1 is classified as, for example, a scooter-type vehicle.

FIG. 1 shows a longitudinal direction X, a transverse direction Y, and an up-down direction Z of the straddled vehicle 1. The longitudinal direction X, transverse direction Y, and up-down direction Z are defined with reference to a driver (also called a rider) riding the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

In the present specification, "in side view of the straddled vehicle 1" is appropriately referred to as "in vehicle side view". Similarly, "in a plan view of the straddled vehicle 1" is appropriately referred to as "in vehicle plan view". "In a front view of the straddled vehicle 1" is appropriately referred to as "in vehicle front view". "In a bottom view of the straddled vehicle 1" is appropriately referred to as "in vehicle bottom view".

The straddled vehicle 1 includes a handlebar 2 and a seat 3. The seat 3 is disposed behind the handlebar 2. The straddled vehicle 1 forms a recessed space 4. The recessed space 4 is an unoccupied space. The straddled vehicle 1 does not have a portion existing in the recessed space 4. The recessed space 4 is disposed behind the handlebar 2 and in front of the seat 3. The recessed space 4 is located lower than the seat 3. At least a part of the recessed space 4 is located lower than the entire seat 3. The recessed space 4 is opened upward.

The straddled vehicle 1 includes a center cover 5. The center cover 5 is disposed lower than the seat 3. At least a part of the center cover 5 is disposed lower than the entire seat 3. The center cover 5 extends forward from the seat 3. The center cover 5 is disposed below the recessed space 4. The center cover 5 defines the recessed space 4.

A driver of the straddled vehicle 1 grips the handlebar 2. The driver sits on the seat 3. The recessed space 4 allows the driver to easily get on and off the straddled vehicle 1. For example, the driver easily gets on and off the straddled vehicle 1 by passing the driver's legs through the recessed space 4.

The straddled vehicle 1 includes a front fork 6 and a front wheel 7. The front fork 6 is coupled to the handlebar 2. The front fork 6 extends downward and forward from the handlebar 2. The front wheel 7 is supported by a lower portion of the front fork 6.

The straddled vehicle 1 includes an engine 10, a swing arm 21, and a rear wheel 22. The engine 10, the swing arm 21, and the rear wheel 22 are each disposed below the seat 3. The swing arm 21 is disposed more rearward than the engine 10. The rear wheel 22 is supported by the swing arm 21.

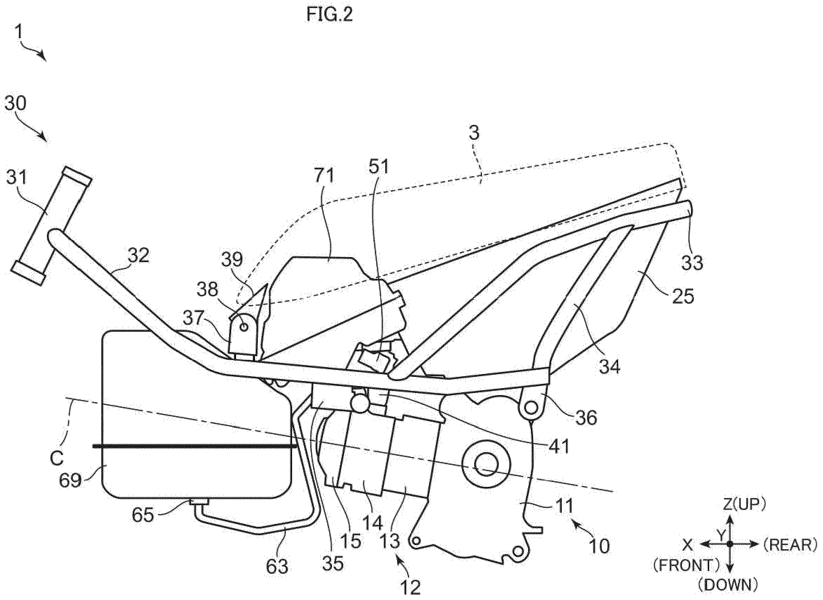

FIG. 2 is a left side view of the straddled vehicle 1. FIG. 2 omits illustration of the center cover 5 and the like. The straddled vehicle 1 includes a vehicle body frame 30. The vehicle body frame 30 supports the engine 10.

The straddled vehicle 1 includes a storage box 25. The storage box 25 is supported by the vehicle body frame 30. The storage box 25 is fixed to the vehicle body frame 30. The storage box 25 is disposed below the seat 3. The storage box 25 has a box shape opened upward. The storage box 25 is relatively large. The storage box 25 accommodates a helmet of the driver. Furthermore, the storage box 25 may store a luggage of the driver other than the helmet.

The straddled vehicle 1 includes an intake pipe 41. The intake pipe 41 is connected to the engine 10. The intake pipe 41 supplies air to the engine 10.

The straddled vehicle 1 includes a throttle device 51. The throttle device 51 is provided in the intake pipe 41. The throttle device 51 adjusts the amount of air flowing through the intake pipe 41. The amount of air flowing through the intake pipe 41 corresponds to the amount of intake air of the engine 10. The throttle device 51 adjusts the amount of intake air of the engine 10. For example, the throttle device 41 is classified as an electronic control throttle.

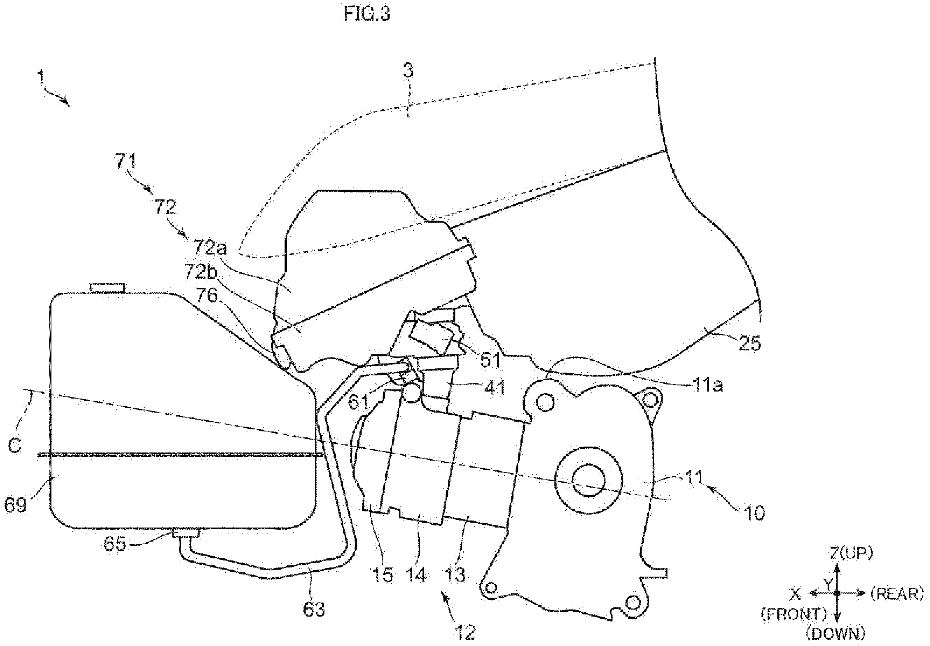

FIG. 3 is a left side view of the straddled vehicle 1. FIG. 3 omits illustration of the vehicle body frame 30 and the like. The straddled vehicle 1 includes a fuel injection device 61. The fuel injection device 61 is attached to the intake pipe 41. The fuel injection device 61 supplies fuel to the engine 10. The fuel injection device 61 supplies fuel to the engine 10 through the intake pipe 41.

The straddled vehicle 1 includes a fuel pipe 63. The fuel pipe 63 is connected to the fuel injection device 61. The fuel pipe 63 supplies fuel to the fuel injection device 61.

The straddled vehicle 1 includes a fuel tank 69. The fuel tank 69 is connected to the fuel pipe 63. The fuel tank 69 supplies fuel to the fuel pipe 63. The fuel tank 69 supplies fuel to the fuel injection device 61 via the fuel pipe 63.

The straddled vehicle 1 includes an air cleaner 71. The air cleaner 71 is connected to the intake pipe 41. The air cleaner 71 supplies air to the intake pipe 41.

### 2. Vehicle Body Frame 30

An example of a configuration of the vehicle body frame 30 will be described.

Refer to FIG. 2. The vehicle body frame 30 includes a head pipe 31, a main frame 32, a rear frame 33, and a back stay 34. The head pipe 31 is disposed at a front part of the straddled vehicle 1. The main frame 32 is connected to the head pipe 31. The main frame 32 extends rearward from the head pipe 31. The rear frame 33 and the back stay 34 are each connected to the main frame 32. The connection position between the main frame 32 and the back stay 34 is more rearward than the connection position between the main frame 32 and the rear frame 33. The rear frame 33 extends rearward and upward from the main frame 32. The back stay 34 extends rearward and upward from the main frame 32. The back stay 34 is connected to the rear frame 33. The connection position between the rear frame 33 and the back stay 34 is more rearward than and higher than the connection position between the main frame 32 and the back stay 34.

The vehicle body frame 30 supports the engine 10. The vehicle body frame 30 is connected to the engine 10. For example, the vehicle body frame 30 includes a first engine bracket 35 and a second engine bracket 36. The second engine bracket 36 is disposed more rearward than the first engine bracket 35. The first engine bracket 35 and the second engine bracket 36 are each connected to the main frame 32. The first engine bracket 35 and the second engine bracket 36 are connected to the engine 10. The main frame 32 supports the engine 10 via the first engine bracket 35 and the second engine bracket 36.

The engine 10 is fixed to the vehicle body frame 30. The engine 10 cannot swing with respect to the vehicle body frame 30. The engine 10 is not rotatable with respect to the vehicle body frame 30.

The engine 10 is rigidly supported by the vehicle body frame 30. The engine 10 is classified as a rigid mount engine.

The vehicle body frame 30 supports the seat 3. Specifically, the vehicle body frame 30 includes a seat bracket 37. The straddled vehicle 1 includes a hinge shaft 38 and a stay 39. The seat bracket 37 is connected to the main frame 32. The hinge shaft 38 is supported by the seat bracket 37. The hinge shaft 38 extends in the transverse direction Y. The stay 39 is supported by the hinge shaft 38. The stay 39 is fixed to the seat 3. The main frame 32 supports the seat 3 via the seat bracket 37, the hinge shaft 38, and the stay 39.

The stay 39 is rotatable about the hinge shaft 38. The stay 39 is rotatable with respect to the seat bracket 37. The stay 39 is rotatable with respect to the vehicle body frame 30. The seat 3 rotates integrally with the stay 39. Therefore, the seat 3 is rotatable with respect to the vehicle body frame 30. The seat 3 is swingable with respect to the vehicle body frame 30. The seat 3 is rotatable about the hinge shaft 38 with respect to the vehicle body frame 30.

The seat 3 swings with respect to the storage box 25. The seat 3 opens and closes the storage box 25.

The seat 3 is movable to the closed position. FIG. 2 shows the seat 3 in the closed position. When the seat 3 is in the closed position, the seat 3 extends rearward from the hinge shaft 38. When the seat 3 is at the closed position, the seat 3 closes the storage box 25. When the seat 3 is in the closed position, the driver sits on the seat 3.

The seat 3 is movable to an opened position (not illustrated). When the seat 3 is in the opened position, the seat 3 extends upward from the hinge shaft 38. When the seat 3 is in the opened position, the seat 3 opens the storage box 25.

The vehicle body frame 30 further supports the air cleaner 71. For example, the main frame 32 supports the air cleaner 71.

The air cleaner 71 is fixed to the vehicle body frame 30. The air cleaner 71 cannot swing with respect to the vehicle body frame 30. The air cleaner 71 is not rotatable with respect to the vehicle body frame 30.

### 3. Engine 10

A configuration of the engine 10 will be described.

Refer to FIG. 2. The engine 10 includes a crankcase 11 and a cylinder unit 12. The crankcase 11 accommodates a crankshaft (not illustrated). The cylinder unit 12 is connected to the crankcase 11.

The cylinder unit 12 includes a cylinder body 13, a cylinder head 14, and a head cover 15. The cylinder body 13 is connected to the crankcase 11. The cylinder head 14 is connected to the cylinder body 13. The head cover 15 is connected to the cylinder head 14.

The crankcase 11 is connected to the second engine bracket 36. The cylinder unit 12 is connected to the first engine bracket 35. The cylinder head 14 is connected to the first engine bracket 35.

The cylinder unit 12 is provided in front of the crankcase 11. The cylinder unit 12 is disposed at substantially the same height position as the crankcase 11. The cylinder unit 12 extends forward from the crankcase 11.

The cylinder body 13 is provided in front of the crankcase 11. The cylinder body 13 is disposed at substantially the same height position as the crankcase 11. The cylinder body 13 extends forward from the crankcase 11.

The cylinder head 14 is provided in front of the crankcase 11. The cylinder head 14 is disposed at substantially the same height position as the crankcase 11.

The cylinder head 14 is provided in front of the cylinder body 13. The cylinder head 14 is disposed at substantially the same height position as the cylinder body 13. The cylinder head 14 extends forward from the cylinder body 13.

The head cover 15 is provided in front of the cylinder head 14.

In FIG. 2, the cylinder axis C is indicated by an alternate long and short dash line. The cylinder axis C is a virtual straight line. The cylinder unit 12 extends on the cylinder axis C. The cylinder body 13 extends on the cylinder axis C. The cylinder head 14 extends on the cylinder axis C.

The cylinder axis C is closer to the longitudinal direction X than the up-down direction Z. For example, the cylinder axis C is substantially horizontal.

Refer to FIG. 3. The cylinder unit 12 is smaller than the crankcase 11. For example, the length of the cylinder unit 12 in the up-down direction Z is smaller than the length of the crankcase 11 in the up-down direction Z.

The cylinder head 14 is smaller than the crankcase 11. For example, the length of the cylinder head 14 in the up-down direction Z is smaller than the length of the crankcase 11 in the up-down direction Z.

The crankcase 11 has an upper end 11a. The cylinder unit 12 is disposed lower than the upper end 11a. For example, the entire cylinder unit 12 is disposed lower than the upper end 11a.

The cylinder head 14 is disposed lower than the upper end 11a. For example, the entire cylinder head 14 is disposed lower than the upper end 11a.

The intake pipe 41 is connected to the cylinder head 14.

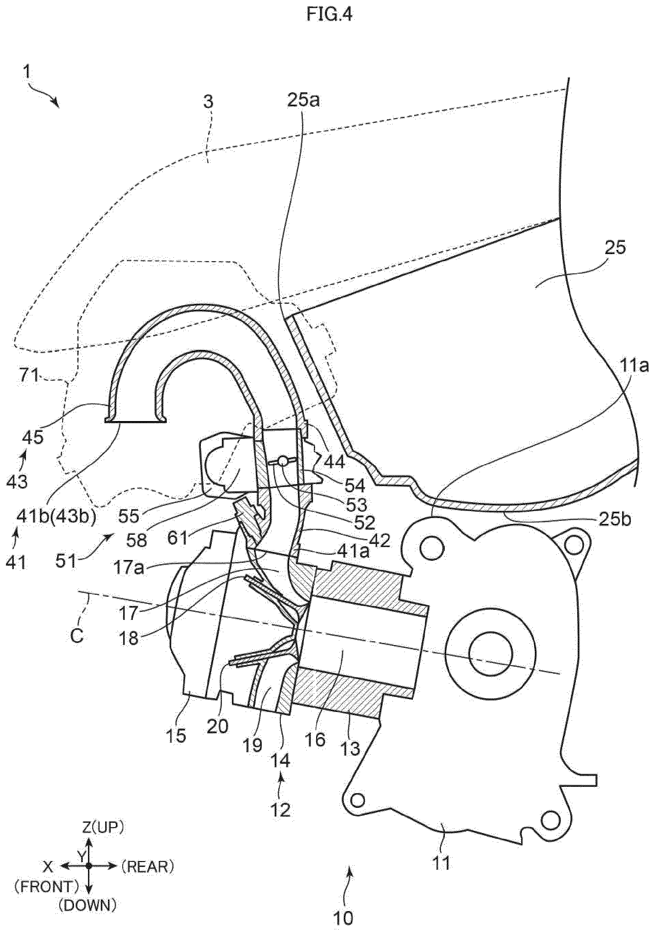

FIG. 4 is a left side view of the straddled vehicle 1. FIG. 4 illustrates a part of the straddled vehicle 1 in a cross section. The cylinder body 13 forms a cylinder bore 16. The cylinder bore 16 is a space. The cylinder bore 16 is located inside the cylinder body 13. The cylinder axis C passes through the center of the cylinder bore 16. The cylinder bore 16 extends on the cylinder axis C. The cylinder bore 16 accommodates a piston (not illustrated). The piston is coupled to the crankshaft described above. A part of the cylinder bore 16 is a combustion chamber.

The number of cylinder bores 16 in the engine 10 is one. The engine 10 is classified as single cylinder engine.

The cylinder head 14 forms an intake passage 17. The intake passage 17 is a space. The intake passage 17 is located inside the cylinder head 14. The intake passage 17 communicates with the cylinder bore 16. The intake passage 17 communicates with the combustion chamber. The intake passage 17 extends forward from the cylinder bore 16. More specifically, the intake passage 17 extends forward and upward.

The cylinder head 14 has a peripheral surface. The peripheral surface of the cylinder head 14 extends in the circumferential direction around the cylinder axis C. The peripheral surface of the cylinder head 14 includes an upper surface. The upper surface of the cylinder head 14 is located above the cylinder axis C. The intake passage 17 extends to the upper surface of the cylinder head 14. The intake passage 17 reaches the upper surface of the cylinder head 14.

The cylinder head 14 forms an intake connection port 17a. The intake connection port 17a is disposed on the upper surface of the cylinder head 14. The intake connection port 17a is one end of the intake passage 17. The intake connection port 17a is an inlet of the intake passage 17. The intake connection port 17a is connected to the intake pipe 41. The intake passage 17 is connected to the intake pipe 41.

The cylinder bore 16 is disposed lower than the upper end 11a of the crankcase 11. The entire cylinder bore 16 is disposed lower than the upper end 11a of the crankcase 11.

The upper surface of the cylinder head 14 is disposed lower than the upper end 11a of the crankcase 11. For example, the entire upper surface of the cylinder head 14 is disposed lower than the upper end 11a.

The intake connection port 17a is disposed lower than the upper end 11a. The entire intake connection port 17a is disposed lower than the upper end 11a.

The cylinder head 14 includes an intake valve 18. The intake valve 18 is provided inside the cylinder head 14. The intake valve 18 is provided in the intake passage 17. The intake valve 18 opens and closes the intake passage 17.

The cylinder head 14 forms an exhaust passage 19. The exhaust passage 19 is a space. The exhaust passage 19 is located inside the cylinder head 14. The exhaust passage 19 communicates with the cylinder bore 16. The exhaust passage 19 extends forward from the cylinder bore 16. The exhaust passage 19 extends forward and downward.

The peripheral surface of the cylinder head 14 includes a lower surface. The lower surface of the cylinder head 14 is located below the cylinder axis C. The exhaust passage 19 extends to the lower surface of the cylinder head 14. The exhaust passage 19 reaches the lower surface of the cylinder head 14.

The cylinder head 14 includes an exhaust valve 20. The exhaust valve 20 is provided inside the cylinder head 14. The exhaust valve 20 is provided in the exhaust passage 19. The exhaust valve 20 opens and closes the exhaust passage 19.

### 4. Throttle Device 51

A configuration of the throttle device 51 will be described.

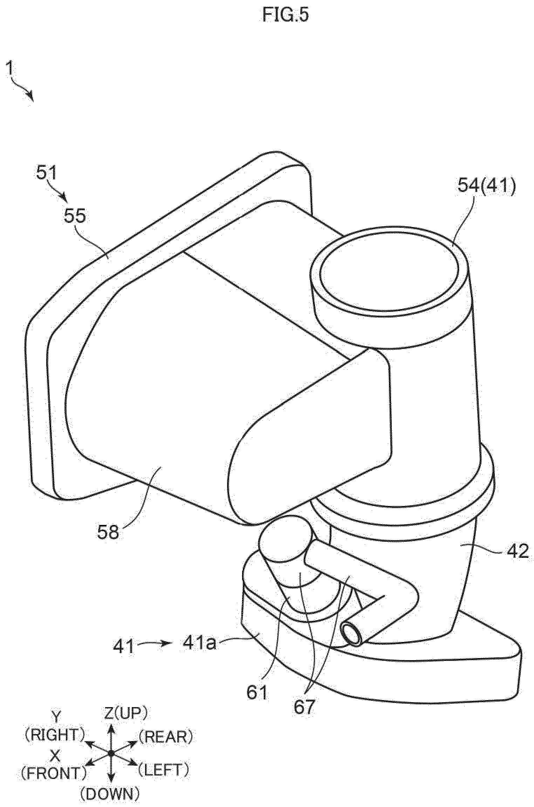

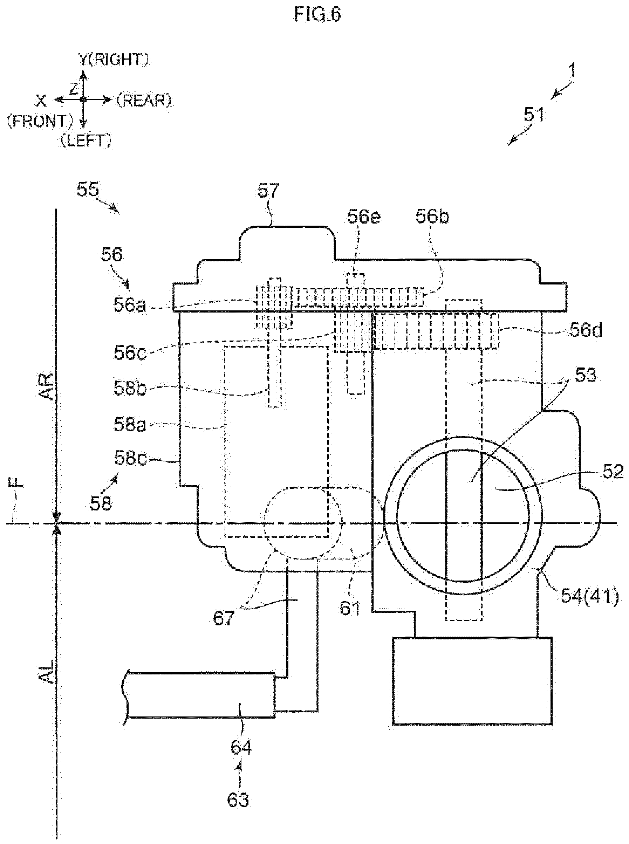

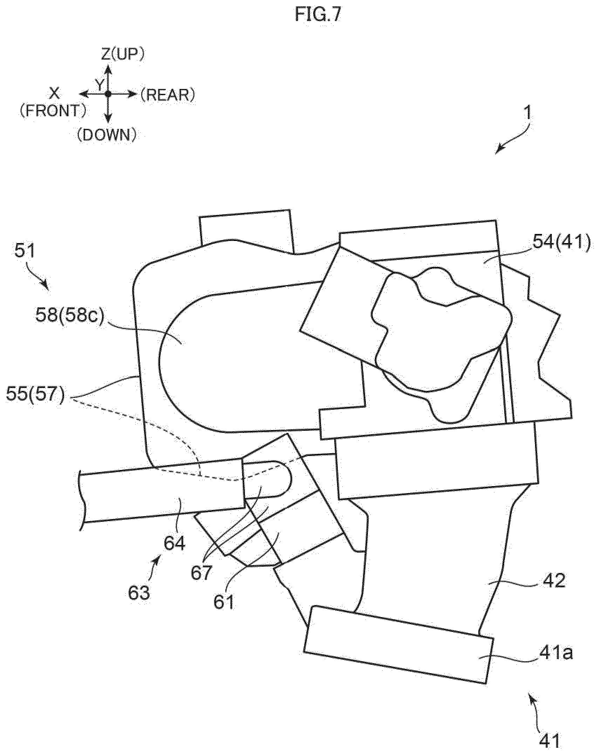

Refer to FIGS. 4-7. FIG. 5 is a perspective view of the throttle device 51. FIG. 6 is a plan view of the throttle device 51. FIG. 7 is a side view of the throttle device 51.

The throttle device 51 includes a throttle valve 52. The throttle valve 52 is provided in the intake pipe 41. The throttle valve 52 opens and closes the intake pipe 41. The throttle valve 52 adjusts the amount of air flowing through the intake pipe 41. The throttle valve 52 is classified as, for example, a butterfly valve. The throttle valve 52 has, for example, a disk shape. The throttle valve 52 has, for example, a circular plate shape.

The throttle device 51 includes a valve shaft 53. The valve shaft 53 supports the throttle valve 52. The valve shaft 53 is connected to the throttle valve 52. The throttle valve 52 is fixed to the valve shaft 53. The throttle valve 52 rotates integrally with the valve shaft 53. The throttle valve 52 rotates about the valve shaft 53.

The throttle device 51 includes a throttle body 54. The throttle body 54 constitutes a section of the intake pipe 41. The throttle body 54 has a substantially tubular shape. The air flows in the throttle body 54. The throttle body 54 accommodates the throttle valve 52. The throttle body 54 supports the valve shaft 53.

The throttle valve 52 is provided in the throttle body 54. The throttle valve 52 is rotatable with respect to the throttle body 54. The valve shaft 53 is also rotatable with respect to the throttle body 54. When the throttle valve 52 rotates with respect to the throttle body 54, the throttle valve 52 opens and closes the throttle body 54, and the throttle valve 52 adjusts the amount of air flowing through the throttle body 54.

The throttle device 51 includes a gear box 55. The gear box 55 is coupled to the throttle valve 52. The gear box 55 is coupled to the throttle valve 52 via a valve shaft 53.

The throttle device 51 includes a motor 58. The motor 58 is coupled to the gear box 55. The motor 58 is coupled to the throttle valve 52 via the gear box 55. The motor 58 generates power. The gear box 55 transmits the power of the motor 58 to the throttle valve 52. The motor 58 drives the throttle valve 52 via the gear box 55. The motor 58 opens and closes the throttle valve 52 via the gear box 55.

The configurations of the gear box 55 and the motor 58 will be exemplified.

Refer to FIG. 6. The gear box 55 includes a gear mechanism 56. The gear mechanism 56 is coupled to the throttle valve 52. The gear mechanism 56 is coupled to the throttle valve 52 via a valve shaft 53. The gear mechanism 56 is coupled to the motor 58. The motor 58 is coupled to the throttle valve 52 via the gear mechanism 56.

The motor 58 includes a motor body 58a and an output shaft 58b. The motor body 58a generates rotational power. The output shaft 58b is connected to the motor body 58a. The motor body 58a outputs rotational power to the output shaft 58b. The output shaft 58b rotates. The output shaft 58b is coupled to the gear mechanism 56.

The gear mechanism 56 includes a first gear 56a, a second gear 56b, a third gear 56c, a fourth gear 56d, and an intermediate shaft 56e. The first gear 56a is fixed to the output shaft 58b. The first gear 56a rotates integrally with the output shaft 58b. The first gear 56a rotates about the output shaft 58b. The second gear 56b and the third gear 56c are fixed to each other. For example, the second gear 56b and the third gear 56c are integrally molded. The second gear 56b and the third gear 56c are supported by the intermediate shaft 56e. The third gear 56c rotates integrally with the second gear 56b. The second gear 56b and the third gear 56c rotate about the intermediate shaft 56e. The second gear 56b and the third gear 56c rotate with respect to the intermediate shaft 56e. The fourth gear 56d is fixed to the valve shaft 53. The fourth gear 56d rotates integrally with the valve shaft 53. The fourth gear 56d rotates about the valve shaft 53. The first gear 56a meshes with the second gear 56b. The third gear 56c meshes with the fourth gear 56d.

The gear mechanism 56 transmits rotational power from the motor 58 to the throttle valve 52. Therefore, when the output shaft 58b rotates, the throttle valve 52 rotates.

More specifically, when the output shaft 58b rotates, the first gear 56a rotates. When the first gear 56a rotates, the second gear 56b and the third gear 56c rotate. When the third gear 56c rotates, the fourth gear 56d rotates. When the fourth gear 56d rotates, the valve shaft 53 and the throttle valve 52 rotate.

For example, the motor 58 is controlled, for example, according to an accelerator operation by the driver. For example, the straddled vehicle 1 includes an accelerator operator and an accelerator sensor (not illustrated). The accelerator operator is, for example, at least one of an accelerator grip and an accelerator pedal. The driver operates the accelerator operator. The accelerator sensor detects an operation amount of an accelerator operator by the driver. The motor 58 is controlled according to a detection result of the accelerator sensor.

The gear box 55 includes a gear cover 57. The gear cover 57 accommodates the gear mechanism 56. The gear cover 57 is attached to the throttle body 54. The gear cover 57 is connected to the throttle body 54.

The motor 58 includes a motor case 58c. The motor case 58c accommodates the motor body 58a and the output shaft 58b. The motor case 58c is attached to the gear box 55. The motor case 58c is connected to the gear cover 57. The motor case 58c may be further joined to the throttle body 54. For example, the motor case 58c may be formed integrally with the throttle body 54. Alternatively, the motor case 58c may be further attached to the throttle body 54. The motor case 58c may be connected to the throttle body 54.

A shape of the throttle device 51 will be described.

Refer to FIGS. 4-7. The motor 58 is disposed at the same height position as the throttle valve 52. At least a part of the motor 58 is disposed at the same height position as at least a part of the throttle valve 52.

The motor 58 is disposed in front of the throttle valve 52. At least a part of the motor 58 is disposed more forward than the entire throttle valve 52. For example, the entire motor 58 is disposed more forward than the entire throttle valve 52. The motor 58 does not overlap the throttle valve 52 in vehicle side view. The motor 58 does not overlap the throttle valve 52 in vehicle plan view. Although not illustrated, the motor 58 overlaps the throttle valve 52 in vehicle front view.

The motor 58 is disposed at the same height position as the throttle body 54. At least a part of the motor 58 is disposed at the same height position as at least a part of the throttle body 54.

The motor 58 is disposed in front of the throttle body 54. At least a part of the motor 58 is disposed more forward than the entire throttle body 54. For example, the entire motor 58 is disposed more forward than the entire throttle body 54. The motor 58 does not overlap the throttle body 54 in vehicle side view. The motor 58 does not overlap the throttle body 54 in vehicle plan view. Although not illustrated, the motor 58 overlaps the throttle body 54 in vehicle front view.

The gear box 55 is disposed at the same height position as the throttle valve 52. At least a part of the gear box 55 is disposed at the same height position as at least a part of the throttle valve 52.

The gear box 55 is disposed rightward of the throttle valve 52. The entire gear box 55 is disposed more rightward than the entire throttle valve 52. The gear box 55 overlaps the throttle valve 52 in vehicle side view. The gear box 55 does not overlap the throttle valve 52 in vehicle plan view. Although not illustrated, the gear box 55 does not overlap the throttle valve 52 in vehicle front view.

The gear box 55 is disposed at the same height position as the throttle body 54. At least a part of the gear box 55 is disposed at the same height position as at least a part of the throttle body 54.

The gear box 55 is disposed rightward of the throttle body 54. The entire gear box 55 is disposed more rightward than the entire throttle body 54. The gear box 55 overlaps the throttle body 54 in vehicle side view.

The gear box 55 is connected to the right portion of the throttle body 54. The gear cover 57 is connected to the right portion of the throttle body 54.

The gear box 55 is disposed at the same height position as the motor 58. At least a portion of the gear box 55 is disposed at the same height position as at least a portion of the motor 58.

The gear box 55 is disposed rightward of the motor 58. The entire gear box 55 is disposed more rightward than the entire motor 58. The gear box 55 overlaps the motor 58 in vehicle side view. For example, the gear box 55 overlaps the entire motor 58 in vehicle side view.

The gear box 55 is connected to the right portion of the motor 58. The gear cover 57 is connected to the right portion of the motor case 58c. For example, the right portion of the motor case 58c is open. The motor case 58c has a right opening (not illustrated). The right opening is located at the right portion of the motor case 58c. The gear cover 57 covers the right opening of the motor case 58c. The gear cover 57 closes the right opening of the motor case 58c.

The gear box 55 extends in the longitudinal direction X. The gear box 55 extends forward from the throttle valve 52. The gear box 55 extends from the throttle valve 52 to the motor 58.

The gear box 55 extends forward from the throttle body 54. The gear box 55 extends from the throttle body 54 to the motor 58. The gear box 55 extends from the right side of the throttle body 54 to the right side of the motor 58.

The valve shaft 53 extends from the throttle valve 52 to the gear box 55. The valve shaft 53 extends from the throttle valve 52 to the gear mechanism 56. The valve shaft 53 penetrates the throttle body 54. The valve shaft 53 extends in the transverse direction Y. The valve shaft 53 extends rightward from the throttle valve 52.

The output shaft 58b extends from the motor body 58a to the gear box 55. The output shaft 58b extends from the motor body 58a to the gear mechanism 56. The output shaft 58b extends in the transverse direction Y. The output shaft 58b extends rightward from the motor body 58a.

Refer to FIG. 7. The gear box 55 further extends downwardly from the motor 58. The gear box 55 extends to a position lower than the motor 58. The gear box 55 extends to a position lower than the entire motor 58.

The gear box 55 has a lower portion. FIG. 7 shows a lower edge of the lower portion of the gear box 55 in solid and dashed lines. The lower portion of the gear box 55 does not overlap the motor 58 in vehicle side view. The lower portion of the gear box 55 is disposed below the motor 58 in vehicle side view. The lower portion of the gear box 55 does not overlap the throttle body 54 in vehicle side view. The lower portion of the gear box 55 is disposed in front of the throttle body 54 in vehicle side view. Although not illustrated, the lower portion of the gear box 55 does not overlap the throttle valve 52 in vehicle side view. The lower portion of the gear box 55 is disposed in front of the throttle valve 52 in vehicle side view.

### 5. Intake Pipe 41

A configuration of the intake pipe 41 will be described.

Refer to FIG. 4. The intake pipe 41 extends from the engine 10 to the air cleaner 71.

The intake pipe 41 has a first end 41a and a second end 41b. The first end 41a is connected to the engine 10. The second end 41b is connected to the air cleaner 71. The intake pipe 41 extends from the first end 41a to the second end 41b.

The first end 41a is connected to the cylinder head 14. The first end 41a is connected to the upper surface of the cylinder head 14. The first end 41a is connected to the intake passage 17. The first end 41a is connected to the intake connection port 17a. The intake pipe 41 communicates with the intake passage 17 through the first end 41a.

The second end 41b is inserted into the air cleaner 71. The second end 41b is disposed in the air cleaner 71. The intake pipe 41 communicates with the air cleaner 71 through the second end 41b.

The intake pipe 41 includes a first pipe 42. The first pipe 42 extends from the engine 10 to the throttle body 54. The first pipe 42 extends from the cylinder head 14 to the throttle body 54.

The first pipe 42 includes the first end 41a of the intake pipe 41. The first pipe 42 is connected to the engine 10. The first pipe 42 is connected to the cylinder head 14. The first pipe 42 is connected to the upper surface of the cylinder head 14. The first pipe 42 is connected to the intake passage 17. The first pipe 42 is connected to the intake connection port 17a.

The first pipe 42 is connected to the throttle body 54. The first pipe 42 extends from the first end 41a of the intake pipe 41 to the throttle body 54. The first pipe 42 is connected to the throttle body 54 from the first end 41a of the intake pipe 41.

As described above, the throttle body 54 is a section of the intake pipe 41. Therefore, the throttle body 54 is one element of the throttle device 51 and is also one element of the intake pipe 41. Therefore, it can also be said that "the intake pipe 41 includes the throttle body 54".

The first end 41a is disposed outside the air cleaner 71. The first pipe 42 is disposed outside the air cleaner 71. The throttle body 54 is disposed outside the air cleaner 71. The throttle device 51 is disposed outside the air cleaner 71.

The intake pipe 41 includes a second pipe 43. The second pipe 43 extends from the throttle body 54 to the air cleaner 71.

The second pipe 43 is connected to the throttle body 54.

The second pipe 43 includes the second end 41b of the intake pipe 41. The second pipe 43 is connected to the air cleaner 71. The second pipe 43 extends from the throttle body 54 to the second end 41b of the intake pipe 41.

The second pipe 43 is inserted into the air cleaner 71 from the outside of the air cleaner 71. The second pipe 43 has an exterior portion 44 and an interior portion 45. The exterior portion 44 is located outside the air cleaner 71. The interior portion 45 is located in the air cleaner 71.

The shape of the intake pipe 41 will be described.

The intake pipe 41 extends upward from the first end 41a. Specifically, the intake pipe 41 extends upward from the engine 10. The intake pipe 41 extends upward from the cylinder head 14. Thereafter, the intake pipe 41 is curved forward. The intake pipe 41 extends forward. Thereafter, the intake pipe 41 is curved downward. The intake pipe 41 extends downward. Thereafter, the intake pipe 41 reaches the second end 41b.

The second end 41b is disposed more forward than the first end 41a. The entire second end 41b is disposed more forward than the entire first end 41a.

The second end 41b is disposed higher than the first end 41a. The entire second end 41b is disposed higher than the entire first end 41a.

The first end 41a corresponds to the lower end of the intake pipe 41. The second end 41b corresponds to the front end of the intake pipe 41.

The shape of the first pipe 42 will be described.

The first pipe 42 extends upward from the first end 41a. Specifically, the first pipe 42 extends upward from the engine 10. The first pipe 42 extends upward from the cylinder head 14.

More specifically, the first pipe 42 extends upward and rearward from the engine 10. The first pipe 42 extends upward and rearward from the cylinder head 14.

The first pipe 42 extends upward and rearward from the intake passage 17. The intake passage 17 extends downward and rearward from the first pipe 42.

Thereafter, the first pipe 42 reaches the throttle body 54.

The first pipe 42 is disposed higher than the first end 41a. The entire first pipe 42 is disposed higher than at least a part of the first end 41a. For example, the entire first pipe 42 is disposed higher than the entire first end 41a.

The first pipe 42 is disposed more rearward than the second end 41b. The entire first pipe 42 is disposed more rearward than the entire second end 41b.

The first pipe 42 is disposed lower than the second end 41b. The entire first pipe 42 is disposed lower than the entire second end 41b.

A shape of the throttle body 54 will be described.

Refer to FIGS. 4 and 7. The throttle body 54 extends upward from the first pipe 42. The throttle body 54 extends in the up-down direction Z.

The throttle body 54 is disposed higher than the first end 41a. The entire throttle body 54 is disposed higher than the entire first end 41a.

The throttle body 54 is disposed more rearward than the second end 41b. The entire throttle body 54 is disposed more rearward than the entire second end 41b.

The throttle body 54 is disposed lower than the second end 41b. The entire throttle body 54 is disposed lower than the entire second end 41b.

The throttle body 54 is disposed above the first pipe 42. The entire throttle body 54 is disposed higher than at least a part of the first pipe 42. For example, the entire throttle body 54 is disposed higher than the entire first pipe 42.

The shape of the second pipe 43 will be described.

Refer to FIG. 4. The second pipe 43 extends upward and forward from the throttle body 54.

More specifically, the exterior portion 44 extends upward from the throttle body 54 outside the air cleaner 71. The exterior portion 44 extends in the up-down direction Z.

The second pipe 43 penetrates the air cleaner 71. The second pipe 43 penetrates the bottom of the air cleaner 71. The second pipe 43 enters the air cleaner 71 from the outside of the air cleaner 71.

The interior portion 45 extends upward from the exterior portion 44. The interior portion 45 curves forward in the air cleaner 71. The interior portion 45 extends forward in the air cleaner 71. The interior portion 45 then curves downward in the air cleaner 71. The interior portion 45 extends downward in the air cleaner 71.

In other words, the interior portion 45 extends upward and forward from the exterior portion 44. The interior portion 45 curves convexly upward in vehicle side view.

Thereafter, the interior portion 45 reaches the second end 41b of the intake pipe 41. The interior portion 45 is opened into the air cleaner 71.

The second pipe 43 is disposed higher than the first end 41a. The entire second pipe 43 is disposed higher than the entire first end 41a.

The second pipe 43 is disposed more rearward than the second end 41b. The entire second pipe 43 is disposed more rearward than at least a part of the second end 41b. For example, the entire second pipe 43 is disposed more rearward than the entire second end 41b.

The second pipe 43 is disposed higher than the first pipe 42. The entire second pipe 43 is disposed higher than the entire first pipe 42.

The second pipe 43 is disposed higher than the throttle body 54. The entire second pipe 43 is disposed higher than at least a part of the throttle body 54. For example, the entire second pipe 43 is disposed higher than the entire throttle body 54.

The exterior portion 44 is shorter than the first pipe 42. The exterior portion 44 is shorter than the throttle body 54. The exterior portion 44 is shorter than the interior portion 45.

The interior portion 45 is longer than the first pipe 42. The interior portion 45 is longer than the throttle body 54. The interior portion 45 is longer than the exterior portion 44.

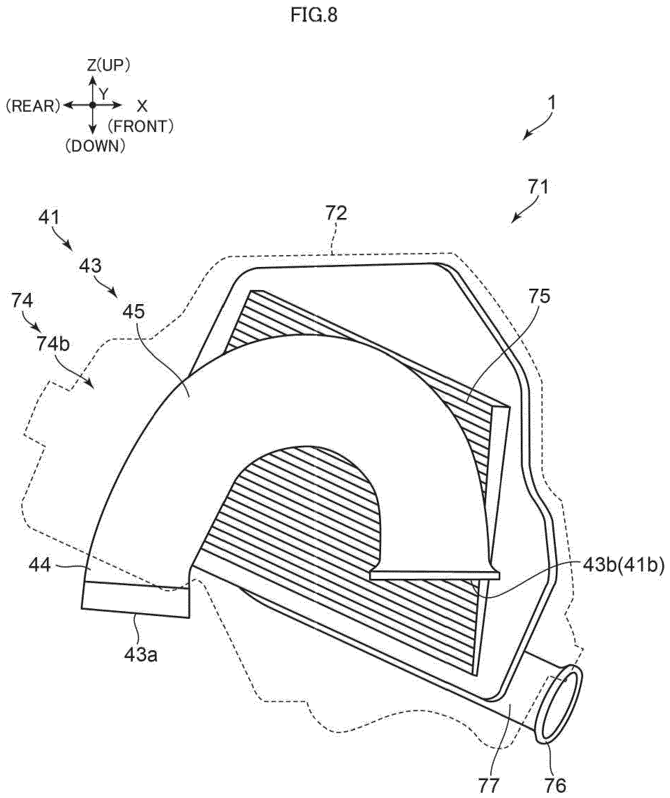

FIG. 8 is a right side view of the air cleaner 71. The second pipe 43 has a first end 43a and a second end 43b. The first end 43a is connected to the throttle body 54. The second end 43b is the second end 41b of the intake pipe 41. The second pipe 43 extends from the first end 43a to the second end 43b.

The first end 43a is disposed outside the air cleaner 71. The second end 43b is disposed in the air cleaner 71.

The second end 43b is disposed more forward than the first end 43a. The entire second end 43b is disposed more forward than the entire first end 43a.

The second end 43b is disposed higher than the first end 43a. The entire second end 43b is disposed higher than the entire first end 43a.

### 6. Fuel Injection Device 61, Fuel Pipe 63, and Fuel Tank 69

Configurations of the fuel injection device 61, the fuel pipe 63, and the fuel tank 69 will be described.

Refer to FIGS. 4 and 5. The intake pipe 41 has a downstream portion. The downstream portion is a portion of the intake pipe 41 from the engine 10 to the throttle valve 52. In other words, the downstream portion is a portion of the intake pipe 41 located between the engine 10 and the throttle valve 52.

The downstream portion includes, for example, the first pipe 42 and the throttle body 54. The downstream portion includes the entire first pipe 42. The downstream portion includes a part of the throttle body 54. For example, the downstream portion includes a lower portion of the throttle body 54.

The fuel injection device 61 is attached to the downstream portion of the intake pipe 41. For example, the fuel injection device 61 is attached to the first pipe 42.

Refer to FIG. 6. The fuel pipe 63 has a first end 64. The first end 64 is connected to the fuel injection device 61. The first end 64 extends forward from the fuel injection device 61. The first end 64 extends in the longitudinal direction X.

Refer to FIGS. 5, 6, and 7. For example, the straddled vehicle 1 includes a joint 67. The fuel injection device 61 and the fuel pipe 63 are connected via a joint 67. Specifically, the joint 67 is attached to the fuel injection device 61. The fuel pipe 63 is attached to the joint 67. The first end 64 is attached to the joint 67.

The fuel injection device 61 and the joint 67 are separable from each other.

The joint 67 extends leftward from the fuel injection device 61.

More specifically, the joint 67 is provided above the fuel injection device 61. The joint 67 is connected to the fuel injection device 61. The joint 67 extends upward from the fuel injection device 61. Then, the joint 67 extends leftward. Then, the joint 67 extends forward.

The first end 64 is disposed in front of the joint 67. The first end 64 is connected to the joint 67. The first end 64 extends forward from the joint 67.

The first end 64 is disposed leftward of the fuel injection device 61. The entire first end 64 is disposed more leftward than the entire fuel injection device 61. The first end 64 does not overlap the fuel injection device 61 in vehicle plan view.

Refer to FIG. 3. The fuel pipe 63 is also referred to as a fuel hose. For example, at least a part of the fuel pipe 63 has flexibility.

The fuel pipe 63 has a second end 65. The second end 65 is connected to the fuel tank 69. For example, the second end 65 is connected to the fuel tank 69 via a fuel pump (not illustrated).

The fuel tank 69 is a substantially closed container. The fuel tank 69 stores fuel.

### 7. Air Cleaner 71

A configuration of the air cleaner 71 will be described.

Refer to FIG. 3. The air cleaner 71 includes an air cleaner case 72. The air cleaner case 72 is a substantially closed container. The air cleaner case 72 has a substantially box shape.

The air cleaner case 72 includes an upper portion 72a and a lower portion 72b. The lower portion 72b is disposed below the upper portion 72a. The lower portion 72b is connected to the upper portion 72a. The upper portion 72a and the lower portion 72b are separable from each other.

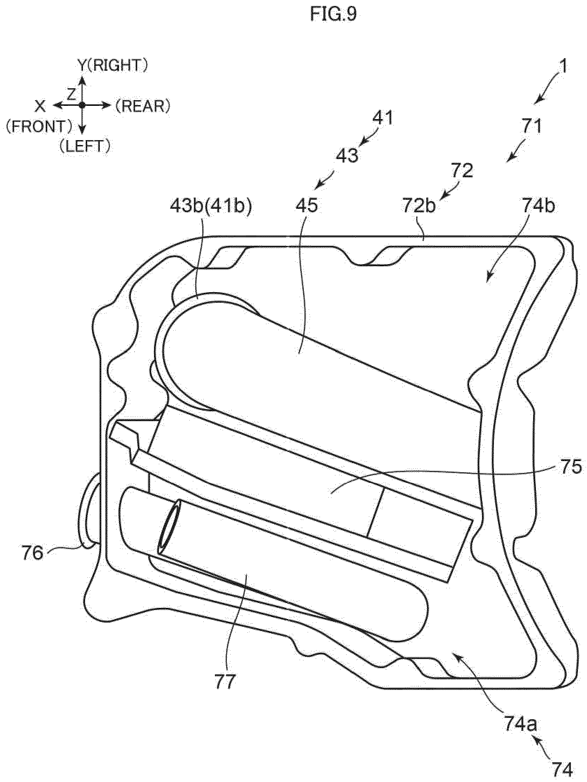

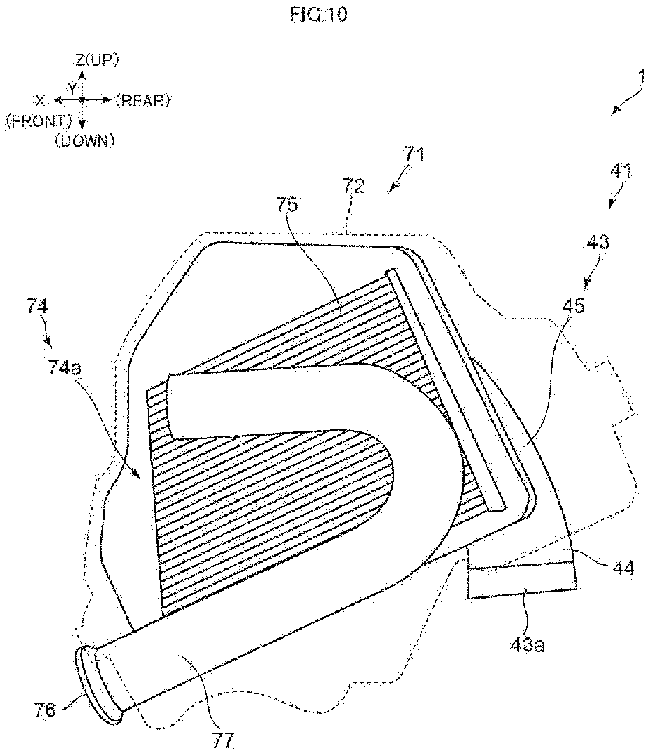

Refer to FIGS. 8, 9, and 10. FIG. 9 is a plan view illustrating the inside of the air cleaner 71. FIG. 9 omits illustration of the upper portion 72a. FIG. 10 is a left side view of the air cleaner 71. In FIG. 8, the air cleaner case 72 is indicated by a broken line. In FIG. 10, the air cleaner case 72 is indicated by a broken line. The first end 43a is disposed outside the air cleaner case 72. The second end 43b is disposed in the air cleaner case 72.

The air cleaner case 72 forms an internal space 74. The internal space 74 is located inside the air cleaner case 72. The internal space 74 is located below the upper portion 72a. The internal space 74 is located above the lower portion 72b.

The air cleaner 71 includes a filter 75. The filter 75 removes foreign substances from the air. The filter 75 is installed in the air cleaner case 72. The filter 75 partitions the internal space 74 into an upstream space 74a and a downstream space 74b.

The filter 75 has a plate shape. For example, the filter 75 extends in the longitudinal direction X. The filter 75 extends in the up-down direction Z. For example, the upstream space 74a is located leftward of the filter 75. The downstream space 74b is located rightward of the filter 75.

The intake pipe 41 is connected to the air cleaner case 72. Specifically, the second pipe 43 is connected to the air cleaner case 72.

The intake pipe 41 is connected to the lower portion 72b. The second pipe 43 is connected to the lower portion 72b.

The intake pipe 41 penetrates the air cleaner case 72. The second pipe 43 penetrates the air cleaner case 72.

The intake pipe 41 penetrates the lower portion 72b. The second pipe 43 penetrates the lower portion 72b.

The interior portion 45 of the second pipe 43 is disposed in the internal space 74. The entire interior portion 45 is disposed in the internal space 74.

The interior portion 45 is disposed in the downstream space 74b. The entire interior portion 45 is disposed in the downstream space 74b.

The second end 41b of the intake pipe 41 is disposed in the internal space 74. In other words, the second end 43b of the second pipe 43 is disposed in the internal space 74.

The second end 41b is disposed in the downstream space 74b. The second end 43b is disposed in the downstream space 74b.

The intake pipe 41 is opened to the internal space 74. The second pipe 43 is opened to the internal space 74.

The intake pipe 41 is opened to the downstream space 74b. The second pipe 43 is opened to the downstream space 74b.

The air cleaner 71 has an intake port 76. The intake port 76 takes in air. The intake port 76 is opened to the outside of the air cleaner 71. The intake port 76 takes in air outside the air cleaner 71. The intake port 76 introduces air into the air cleaner 71.

The internal space 74 communicates with the intake port 76. The internal space 74 communicates with an area outside the air cleaner 71 through the intake port 76. The intake port 76 introduces air outside the air cleaner 71 into the internal space 74.

The upstream space 74a communicates with the intake port 76. The upstream space 74a communicates with an area outside the air cleaner 71 through the intake port 76. The intake port 76 introduces air outside the air cleaner 71 into the upstream space 74a.

The structure of the intake port 76 is simple. For example, the intake port 76 does not have a labyrinth structure. For example, the straddled vehicle 1 does not include a waterproof cover attached to the intake port 76.

The intake port 76 is disposed at a front part of the air cleaner 71. The intake port 76 is opened to an area in front of the air cleaner 71. The intake port 76 takes in air in front of the air cleaner 71. Specifically, the intake port 76 takes in air in the area in front of the air cleaner 71.

The intake port 76 is disposed more forward than the intake pipe 41. The entire intake port 76 is disposed more forward than the entire intake pipe 41.

The intake port 76 is disposed more forward than the second end 41b of the intake pipe 41. The entire intake port 76 is disposed more forward than the entire second end 41b.

The intake port 76 is disposed lower than the second end 41b of the intake pipe 41. The entire intake port 76 is disposed lower than the entire second end 41b.

The intake port 76 is disposed more forward than the second pipe 43. The entire intake port 76 is disposed more forward than the entire second pipe 43.

The intake port 76 is disposed lower than the second pipe 43. The entire intake port 76 is disposed lower than the entire second pipe 43.

The air cleaner 71 includes an intake duct 77. The intake duct 77 extends from the intake port 76 to the air cleaner 71. The intake duct 77 extends from the intake port 76 to the internal space 74. The internal space 74 communicates with the intake port 76 via the intake duct 77.

The intake duct 77 extends from the intake port 76 to the upstream space 74a. The upstream space 74a communicates with the intake port 76 via the intake duct 77.

The intake duct 77 extends rearward from the intake port 76. The intake duct 77 extends to the air cleaner 71.

The intake duct 77 penetrates the air cleaner 71. The intake duct 77 penetrates a front part of the air cleaner 71. The intake duct 77 penetrates the air cleaner case 72. The intake duct 77 penetrates the lower portion 72b.

The intake duct 77 is inserted into the air cleaner 71 from the outside of the air cleaner 71. The intake duct 77 is inserted into the internal space 74. The intake duct 77 is inserted into the upstream space 74a.

The intake duct 77 extends rearward in the upstream space 74a. Then, the intake duct 77 is curved upward in the upstream space 74a. The intake duct 77 extends upward in the upstream space 74a. Then, the intake duct 77 is curved forward in the upstream space 74a. The intake duct 77 extends forward in the upstream space 74a. Then, the intake duct 77 is opened to the upstream space 74a.

Refer to FIG. 4. The intake port 76 is disposed more forward than the first end 41a of the intake pipe 41. The entire intake port 76 is disposed more forward than the entire first end 41a.

The intake port 76 is disposed higher than the first end 41a. The entire intake port 76 is disposed higher than the entire first end 41a.

### 8. Flow of Air and Fuel

The flows of air and fuel will be described.

The intake port 76 takes in air. Air enters the air cleaner 71 through the intake port 76. The air flows from the air cleaner 71 to the intake pipe 41. The amount of air flowing through the intake pipe 41 is adjusted by the throttle valve 52. Air flows from the intake pipe 41 to the engine 10. The fuel is supplied from the fuel tank 69 to the engine 10 through the fuel injection device 61.

Specifically, the intake port 76 takes in air in front of the air cleaner 71. Air enters the intake duct 77 through the intake port 76 from the area in front of the air cleaner 71. The air flows from the intake duct 77 to the upstream space 74a. The air flows from the upstream space 74a to the downstream space 74b through the filter 75. The filter 75 filters air. The filter 75 purifies air. The air flows from the downstream space 74b to the second pipe 43. The air flows from the second pipe 43 to the throttle body 54. The throttle valve 52 adjusts the amount of air flowing through the throttle body 54. The air flows from the throttle body 54 to the first pipe 42. The air flows from the first pipe 42 to the intake passage 17. The air flows downward and forward in the first pipe 42. The air flows downward and rearward in the intake passage 17. The air flows from the intake passage 17 to the cylinder bore 16. The air flows from the intake passage 17 to the combustion chamber.

The fuel flows from the fuel tank 69 to the fuel pipe 63. Fuel flows from the fuel pipe 63 through the joint 67 to the fuel injection device 61. The fuel is supplied from the fuel injection device 61 to the downstream portion of the intake pipe 41. The fuel is injected from the fuel injection device 61. The fuel is injected into a downstream portion of the intake pipe 41. The fuel is injected into the first pipe 42, for example. The fuel is injected toward, for example, the intake connection port 17a. The fuel is injected toward, for example, the intake passage 17. The fuel is injected toward, for example, the intake valve 18. The fuel flows from the intake passage 17 to the cylinder bore 16 together with air. The fuel flows together with air from the intake passage 17 to the combustion chamber.

The air may become air-fuel mixture that contains fuel in at least one of the downstream portion of the intake pipe 41 and the intake passage 17. In this case, the air-fuel mixture flows from the intake passage 17 to the cylinder bore 16. The air-fuel mixture flows from the intake passage 17 to the combustion chamber.

### 9. Disposing Positions

The disposing position of each element of the straddled vehicle 1 will be described.

Refer to FIG. 2. The engine 10 is disposed below the seat 3. At least a part of the engine 10 is disposed below the seat 3. At least a part of the engine 10 is disposed lower than the entire seat 3. For example, the entire engine 10 is disposed lower than the entire seat 3. The engine 10 does not overlap the seat 3 in vehicle side view.

The storage box 25 is disposed below the seat 3. At least a part of the storage box 25 is disposed below the seat 3. At least a part of the storage box 25 is disposed lower than the entire seat 3. For example, the storage box 25 may have a portion overlapping the seat 3 in vehicle side view. Alternatively, the storage box 25 may not have a portion overlapping the seat 3 in vehicle side view.

For example, the storage box 25 has a first portion and a second portion. The first portion of the storage box 25 overlaps the seat 3 in vehicle side view. The second portion of the storage box 25 does not overlap the seat 3 in vehicle side view. The second portion of the storage box 25 is disposed below the seat 3. The second portion of the storage box 25 is disposed lower than the entire seat 3.

The storage box 25 does not have a portion disposed higher than the seat 3.

The storage box 25 is disposed above the engine 10. At least a part of the storage box 25 is disposed above the engine 10. At least a part of the storage box 25 is disposed higher than the entire engine 10. For example, the entire storage box 25 is disposed higher than the entire engine 10. The storage box 25 does not overlap the engine 10 in vehicle side view.

Refer to FIG. 3. The fuel pipe 63 is disposed below the seat 3. At least a part of the fuel pipe 63 is disposed lower than the entire seat 3. For example, the entire fuel pipe 63 is disposed lower than the entire seat 3. The fuel pipe 63 does not overlap the seat 3 in vehicle side view.

The fuel pipe 63 is disposed in front of the engine 10. At least a part of the fuel pipe 63 is disposed more forward than the entire engine 10. For example, the second end 65 of the fuel pipe 63 is disposed more forward than the entire engine 10. The fuel pipe 63 does not overlap the engine 10 in vehicle side view.

The fuel pipe 63 is disposed in front of the crankcase 11. At least a part of the fuel pipe 63 is disposed more forward than the entire crankcase 11. For example, the entire fuel pipe 63 is disposed more forward than the entire crankcase 11. The fuel pipe 63 does not overlap the crankcase 11 in vehicle side view.

The fuel pipe 63 is disposed in front of the cylinder body 13. At least a part of the fuel pipe 63 is disposed more forward than the entire cylinder body 13. For example, the entire fuel pipe 63 is disposed more forward than the entire cylinder body 13. The fuel pipe 63 does not overlap the cylinder body 13 in vehicle side view.

The fuel pipe 63 is disposed in front of the storage box 25. At least a part of the fuel pipe 63 is disposed more forward than the entire storage box 25. For example, the entire fuel pipe 63 is disposed more forward than the entire storage box 25. The fuel pipe 63 does not overlap the storage box 25 in vehicle side view.

The fuel tank 69 is disposed lower than the seat 3. At least a part of the fuel tank 69 is disposed lower than the entire seat 3. For example, the entire fuel tank 69 is disposed lower than the entire seat 3. The fuel tank 69 does not overlap the seat 3 in vehicle side view.

The fuel tank 69 is disposed in front of the engine 10. At least a part of the fuel tank 69 is disposed more forward than the entire engine 10. For example, the entire fuel tank 69 is disposed more forward than the entire engine 10. The fuel tank 69 does not overlap the engine 10 in vehicle side view.

The fuel tank 69 is disposed at the same height position as the engine 10. At least a part of the fuel tank 69 is disposed at the same height position as at least a part of the engine 10. Although not illustrated, the fuel tank 69 overlaps the engine 10 in vehicle front view.

The fuel tank 69 is disposed in front of the cylinder head 14. At least a part of the fuel tank 69 is disposed more forward than the entire cylinder head 14. For example, the entire fuel tank 69 is disposed more forward than the entire cylinder head 14. The fuel tank 69 does not overlap the cylinder head 14 in vehicle side view.

The fuel tank 69 is disposed at the same height position as the cylinder head 14. At least a part of the fuel tank 69 is disposed at the same height position as at least a part of the cylinder head 14. Although not illustrated, the fuel tank 69 overlaps the cylinder head 14 in vehicle front view.

For example, the fuel tank 69 extends from a position higher than the cylinder head 14 to a position lower than the cylinder head 14. The fuel tank 69 extends from a position higher than the entire cylinder head 14 to a position lower than the entire cylinder head 14. The fuel tank 69 has a portion located higher than the entire cylinder head 14, a portion located at the same height position as the cylinder head 14, and a portion located lower than the entire cylinder head 14.

The fuel tank 69 is disposed in front of the storage box 25. At least a part of the fuel tank 69 is disposed more forward than the entire storage box 25. For example, the entire fuel tank 69 is disposed more forward than the entire storage box 25. The fuel tank 69 does not overlap the storage box 25 in vehicle side view.

The fuel tank 69 is disposed at the same height position as the storage box 25. At least a part of the fuel tank 69 is disposed at the same height position as at least a part of the storage box 25. Although not illustrated, the fuel tank 69 overlaps the storage box 25 in vehicle front view.

The air cleaner 71 is disposed below the seat 3. At least a part of the air cleaner 71 is disposed below the seat 3. At least a part of the air cleaner 71 is disposed lower than the entire seat 3. The air cleaner 71 may have a portion overlapping the seat 3 in vehicle side view.

For example, at least a part of the upper portion 72a of the air cleaner case 72 overlaps the seat 3 in vehicle side view. For example, at least a part of the lower portion 72b is disposed lower than the entire seat 3. For example, the lower portion 72b of the air cleaner case 72 may have a portion overlapping the seat 3 in vehicle side view. Alternatively, the lower portion 72b of the air cleaner case 72 may not overlap the seat 3 in vehicle side view.

The air cleaner 71 does not have a portion disposed higher than the entire seat 3.

The air cleaner 71 is disposed above the engine 10. At least a part of the air cleaner 71 is disposed above the engine 10. At least a part of the air cleaner 71 is disposed higher than the entire engine 10. For example, the entire air cleaner 71 is disposed higher than the entire engine 10. The air cleaner 71 does not overlap the engine 10 in vehicle side view.

The air cleaner 71 is disposed above the cylinder head 14. At least a part of the air cleaner 71 is disposed above the cylinder head 14. At least a part of the air cleaner 71 is disposed higher than the entire cylinder head 14. For example, the entire air cleaner 71 is disposed higher than the entire cylinder head 14. The air cleaner 71 does not overlap the cylinder head 14 in vehicle side view.

The air cleaner 71 is disposed in front of the storage box 25. At least a part of the air cleaner 71 is disposed in front of the storage box 25. At least a part of the air cleaner 71 is disposed more forward than the entire storage box 25. For example, the air cleaner 71 may have a portion overlapping the storage box 25 in vehicle side view.

The air cleaner 71 does not have a portion located more rearward than the entire storage box 25.

At least a part of the storage box 25 is disposed more rearward than the entire air cleaner 71.

The air cleaner 71 is disposed at the same height position as the storage box 25. At least a part of the air cleaner 71 is disposed at the same height position as at least a part of the storage box 25.

The air cleaner 71 is disposed above the fuel pipe 63.

The air cleaner 71 is disposed behind the fuel tank 69. At least a part of the air cleaner 71 is disposed more rearward than the entire fuel tank 69.

The air cleaner 71 is disposed at the same height position as the fuel tank 69. At least a part of the air cleaner 71 is disposed at the same height position as at least a part of the fuel tank 69.

The fuel tank 69 has a portion located in front of the air cleaner 71. The fuel tank 69 has a portion located more forward than the entire air cleaner 71. Further, the fuel tank 69 has a portion located lower than the air cleaner 71. The fuel tank 69 has a portion located lower than the entire air cleaner 71.

The intake port 76 is disposed below the seat 3. At least a part of the intake port 76 is disposed lower than the entire seat 3. For example, the entire intake port 76 is disposed lower than the entire seat 3. The intake port 76 does not overlap the seat 3 in vehicle side view.

The intake port 76 is disposed higher than the engine 10. At least a part of the intake port 76 is disposed higher than the entire engine 10. For example, the entire intake port 76 is disposed higher than the entire engine 10. The intake port 76 does not overlap the engine 10 in vehicle side view.

The intake port 76 is disposed higher than the cylinder head 14. At least a part of the intake port 76 is disposed higher than the entire cylinder head 14. For example, the entire intake port 76 is disposed higher than the entire cylinder head 14. The intake port 76 does not overlap the cylinder head 14 in vehicle side view.

The intake port 76 is disposed more forward than the engine 10. At least a part of the intake port 76 is disposed more forward than the entire engine 10. For example, the entire intake port 76 is disposed more forward than the entire engine 10.

The intake port 76 is disposed more forward than the crankcase 11. At least a part of the intake port 76 is disposed more forward than the entire crankcase 11. For example, the entire intake port 76 is disposed more forward than the entire crankcase 11.

The intake port 76 is disposed more forward than the cylinder unit 12. At least a part of the intake port 76 is disposed more forward than the entire cylinder unit 12. For example, the entire intake port 76 is disposed more forward than the entire cylinder unit 12.

The intake port 76 is disposed more forward than the cylinder body 13. At least a part of the intake port 76 is disposed more forward than the entire cylinder body 13. For example, the entire intake port 76 is disposed more forward than the entire cylinder body 13.

The intake port 76 is disposed more forward than the cylinder head 14. At least a part of the intake port 76 is disposed more forward than the entire cylinder head 14. For example, the entire intake port 76 is disposed more forward than the entire cylinder head 14.

The intake port 76 is disposed more forward than the head cover 15. At least a part of the intake port 76 is disposed more forward than the entire head cover 15. For example, the entire intake port 76 is disposed more forward than the entire head cover 15.

The intake port 76 is disposed more forward than the storage box 25. At least a part of the intake port 76 is disposed more forward than the entire storage box 25. For example, the entire intake port 76 is disposed more forward than the entire storage box 25.

The intake port 76 is disposed at the same height position as the storage box 25. At least a part of the intake port 76 is disposed at the same height position as at least a part of the storage box 25.

The intake port 76 is disposed behind the fuel tank 69.

The intake port 76 is disposed at the same height position as the fuel tank 69. At least a part of the intake port 76 is disposed at the same height position as at least a part of the fuel tank 69.

The fuel tank 69 has a portion located in front of the intake port 76. The fuel tank 69 has a portion located more forward than the entire intake port 76. Further, the fuel tank 69 has a portion located lower than the intake port 76. The fuel tank 69 has a portion located lower than the entire intake port 76.

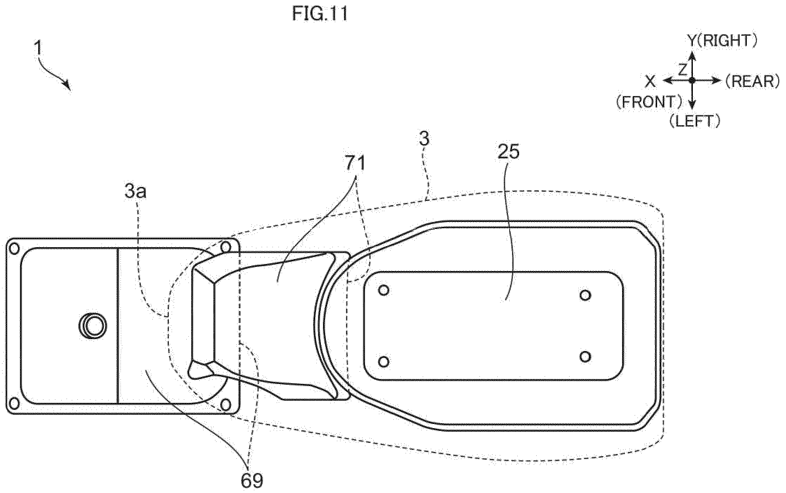

FIG. 11 is a plan view of the straddled vehicle 1. In FIG. 11, the seat 3 is indicated by a broken line.

The storage box 25 overlaps the seat 3 in vehicle plan view. At least a part of the storage box 25 overlaps the seat 3 in vehicle plan view. For example, the entire storage box 25 overlaps the seat 3 in vehicle plan view.

The seat 3 has a front end 3a. At least a part of the storage box 25 is disposed more rearward than the front end 3a. For example, the entire storage box 25 is disposed more rearward than the front end 3a.

The air cleaner 71 overlaps the seat 3 in vehicle plan view. At least a part of the air cleaner 71 overlaps the seat 3 in vehicle plan view. For example, the entire air cleaner 71 overlaps the seat 3 in vehicle plan view.

At least a part of the air cleaner 71 is disposed more rearward than the front end 3a. For example, the entire air cleaner 71 is disposed more rearward than the front end 3a.

The fuel tank 69 is disposed more forward than the seat 3. At least a part of the fuel tank 69 is disposed more forward than the entire seat 3. For example, the fuel tank 69 may have a portion overlapping the seat 3 in vehicle plan view.

For example, the fuel tank 69 has a first portion and a second portion. The first portion of the fuel tank 69 overlaps the seat 3 in vehicle plan view. The second portion of the fuel tank 69 does not overlap the seat 3 in vehicle plan view. The second portion of the fuel tank 69 is disposed more forward than the entire seat 3. The second portion of the fuel tank 69 is disposed in front of the seat 3 in vehicle plan view.

The fuel tank 69 does not have a portion disposed more rearward than the entire seat 3.

As described above, the recessed space 4 is located in front of the seat 3. For example, the second portion of the fuel tank 69 is disposed below the recessed space 4.

The fuel tank 69 is disposed in front of the storage box 25. At least a part of the fuel tank 69 is disposed more forward than the entire storage box 25. For example, the entire fuel tank 69 is disposed more forward than the entire storage box 25. The fuel tank 69 does not overlap the storage box 25 in vehicle plan view.

The fuel tank 69 is disposed in front of the air cleaner 71. At least a part of the fuel tank 69 is disposed more forward than the entire air cleaner 71. The fuel tank 69 may have a portion overlapping the air cleaner 71 in vehicle plan view.

For example, the fuel tank 69 has a third portion and a fourth portion. The third portion of the fuel tank 69 overlaps the air cleaner 71 in vehicle plan view. The fourth portion of the fuel tank 69 does not overlap the air cleaner 71 in vehicle plan view. The fourth portion of the fuel tank 69 is disposed more forward than the entire air cleaner 71. The fourth portion of the fuel tank 69 is disposed in front of the air cleaner 71 in vehicle plan view.

The third portion of the fuel tank 69 is a part of the first portion of the fuel tank 69. A part of the fourth portion of the fuel tank 69 is the second portion of the fuel tank 69.

The fuel tank 69 does not have a portion disposed more rearward than the entire air cleaner 71.

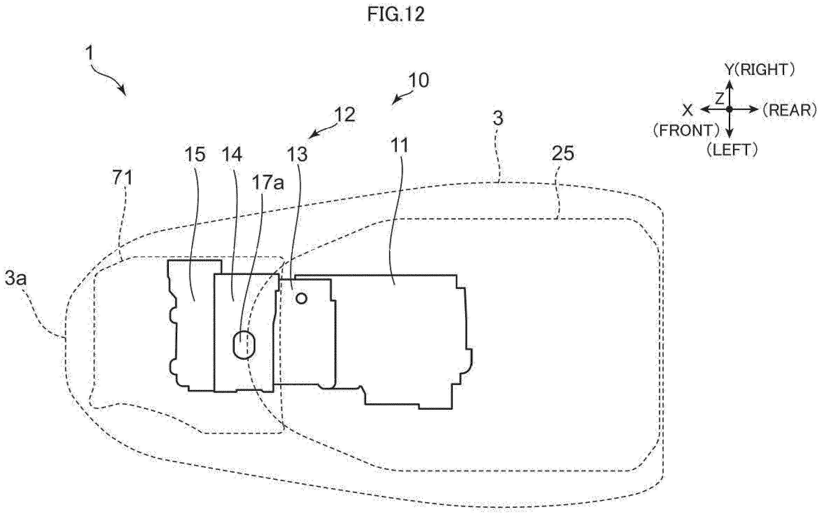

FIG. 12 is a plan view of the straddled vehicle 1. In FIG. 12, the seat 3, the air cleaner 71, and the storage box 25 are indicated by broken lines. FIG. 12 illustrates the engine 10.

The engine 10 overlaps the seat 3 in vehicle plan view. At least a part of the engine 10 overlaps the seat 3 in vehicle plan view. For example, the entire engine 10 overlaps the seat 3 in vehicle plan view.

The engine 10 is disposed more rearward than the front end 3a of the seat 3. At least a part of the engine 10 is disposed more rearward than the front end 3a of the seat 3. For example, the entire engine 10 is disposed more rearward than the front end 3a.

The crankcase 11 overlaps the seat 3 in vehicle plan view. At least a part of the crankcase 11 overlaps the seat 3 in vehicle plan view. For example, the entire crankcase 11 overlaps the seat 3 in vehicle plan view.

The crankcase 11 is disposed more rearward than the front end 3a. At least a part of the crankcase 11 is disposed more rearward than the front end 3a. For example, the entire crankcase 11 is disposed more rearward than the front end 3a.

The cylinder unit 12 overlaps the seat 3 in vehicle plan view. At least a part of the cylinder unit 12 overlaps the seat 3 in vehicle plan view. For example, the entire cylinder unit 12 overlaps the seat 3 in vehicle plan view.

The cylinder unit 12 is disposed more rearward than the front end 3a. At least a part of the cylinder unit 12 is disposed more rearward than the front end 3a. For example, the entire cylinder unit 12 is disposed more rearward than the front end 3a.

The cylinder body 13 overlaps the seat 3 in vehicle plan view. At least a part of the cylinder body 13 overlaps the seat 3 in vehicle plan view. For example, the entire cylinder body 13 overlaps the seat 3 in vehicle plan view.

The cylinder body 13 is disposed more rearward than the front end 3a. At least a part of the cylinder body 13 is disposed more rearward than the front end 3a. For example, the entire cylinder body 13 is disposed more rearward than the front end 3a.

The cylinder head 14 overlaps the seat 3 in vehicle plan view. At least a part of the cylinder head 14 overlaps the seat 3 in vehicle plan view. For example, the entire cylinder head 14 overlaps the seat 3 in vehicle plan view.

The cylinder head 14 is disposed more rearward than the front end 3a. At least a part of the cylinder head 14 is disposed more rearward than the front end 3a. For example, the entire cylinder head 14 is disposed more rearward than the front end 3a.

FIG. 12 clearly illustrates the intake connection port 17a. The intake connection port 17a overlaps the seat 3 in vehicle plan view. At least a part of the intake connection port 17a overlaps the seat 3 in vehicle plan view. For example, the entire intake connection port 17a overlaps the seat 3 in vehicle plan view.

The intake connection port 17a is disposed more rearward than the front end 3a. At least a part of the intake connection port 17a is disposed more rearward than the front end 3a. For example, the entire intake connection port 17a is disposed more rearward than the front end 3a.

The head cover 15 overlaps the seat 3 in vehicle plan view. At least a part of the head cover 15 overlaps the seat 3 in vehicle plan view. For example, the entire head cover 15 overlaps the seat 3 in vehicle plan view.

The head cover 15 is disposed more rearward than the front end 3a. At least a part of the head cover 15 is disposed more rearward than the front end 3a. For example, the entire head cover 15 is disposed more rearward than the front end 3a.

The storage box 25 overlaps the engine 10 in vehicle plan view. The storage box 25 overlaps at least a part of the engine 10 in vehicle plan view. For example, the storage box 25 overlaps only a part of the engine 10 in vehicle plan view.

The storage box 25 extends to a position more rearward than the engine 10. The storage box 25 extends to a position more rearward than the entire engine 10. The storage box 25 has a portion located more rearward than the engine 10. Specifically, the storage box 25 has a portion located more rearward than the entire engine 10. A part of the storage box 25 does not overlap the engine 10 in vehicle plan view. A part of the storage box 25 is disposed behind the engine 10 in vehicle plan view. A part of the storage box 25 is disposed behind the entire engine 10 in vehicle plan view.

The storage box 25 does not have a portion located more forward than the entire engine 10.

The storage box 25 overlaps the crankcase 11 in vehicle plan view. The storage box 25 overlaps at least a part of the crankcase 11 in vehicle plan view. For example, the storage box 25 overlaps the entire crankcase 11 in vehicle plan view.

The storage box 25 overlaps the cylinder unit 12 in vehicle plan view. The storage box 25 overlaps at least a part of the cylinder unit 12 in vehicle plan view. For example, the storage box 25 overlaps only a part of the cylinder unit 12 in vehicle plan view.

The storage box 25 overlaps the cylinder body 13 in vehicle plan view. The storage box 25 overlaps at least a part of the cylinder body 13 in vehicle plan view. For example, the storage box 25 overlaps the entire cylinder body 13 in vehicle plan view.

For example, the storage box 25 overlaps the cylinder head 14 in vehicle plan view. The storage box 25 overlaps at least a part of the cylinder head 14 in vehicle plan view. For example, the storage box 25 overlaps only a part of the cylinder head 14 in vehicle plan view.

For example, the storage box 25 overlaps the intake connection port 17a in vehicle plan view. The storage box 25 overlaps at least a part of the intake connection port 17a in vehicle plan view. For example, the storage box 25 overlaps only a part of the intake connection port 17a in vehicle plan view.

The storage box 25 does not overlap the head cover 15 in vehicle plan view. The storage box 25 is disposed more rearward than the head cover 15. The entire storage box 25 is disposed more rearward than the entire head cover 15.

The air cleaner 71 overlaps the engine 10 in vehicle plan view. The air cleaner 71 overlaps at least a part of the engine 10 in vehicle plan view. For example, the air cleaner 71 overlaps only a part of the engine 10 in vehicle plan view.

The air cleaner 71 extends to a position more forward than the engine 10. The air cleaner 71 extends to a position more forward than the entire engine 10. The air cleaner 71 has a portion located more forward than the engine 10. Specifically, the air cleaner 71 has a portion located more forward than the entire engine 10. A part of the air cleaner 71 does not overlap the engine 10 in vehicle plan view. A part of the air cleaner 71 is disposed in front of the engine 10 in vehicle plan view. A part of the air cleaner 71 is disposed in front of the entire engine 10 in vehicle plan view.

The air cleaner 71 does not have a portion located more rearward than the entire engine 10.

The air cleaner 71 is disposed in front of the crankcase 11. At least a part of the air cleaner 71 is disposed in front of the crankcase 11. For example, the entire air cleaner 71 is disposed more forward than the entire crankcase 11. The air cleaner 71 does not overlap the crankcase 11 in vehicle plan view.

The air cleaner 71 overlaps the cylinder unit 12 in vehicle plan view. The air cleaner 71 overlaps at least a part of the cylinder unit 12 in vehicle plan view. For example, the air cleaner 71 overlaps only a part of the cylinder unit 12 in vehicle plan view.

The air cleaner 71 overlaps the cylinder body 13 in vehicle plan view. The air cleaner 71 overlaps at least a part of the cylinder body 13 in vehicle plan view. For example, the air cleaner 71 overlaps only a part of the cylinder body 13 in vehicle plan view.

The air cleaner 71 overlaps the cylinder head 14 in vehicle plan view. The air cleaner 71 overlaps at least a part of the cylinder head 14 in vehicle plan view. For example, the air cleaner 71 overlaps the entire cylinder head 14 in vehicle plan view.

The air cleaner 71 overlaps the intake connection port 17a in vehicle plan view. The air cleaner 71 overlaps at least a part of the intake connection port 17a in vehicle plan view. For example, the air cleaner 71 overlaps the entire intake connection port 17a in vehicle plan view.

The air cleaner 71 extends to a position more forward than the cylinder head 14. The air cleaner 71 extends to a position more forward than the entire cylinder head 14. The air cleaner 71 has a portion located more forward than the cylinder head 14. Specifically, the air cleaner 71 has a portion located more forward than the entire cylinder head 14. A part of the air cleaner 71 does not overlap the cylinder head 14 in vehicle plan view. A part of the air cleaner 71 is disposed in front of the cylinder head 14 in vehicle plan view. A part of the air cleaner 71 is disposed in front of the entire cylinder head 14 in vehicle plan view.

The air cleaner 71 overlaps the head cover 15 in vehicle plan view. The air cleaner 71 overlaps at least a part of the head cover 15 in vehicle plan view. For example, the air cleaner 71 overlaps the entire head cover 15 in vehicle plan view.

The air cleaner 71 extends to a position more forward than the head cover 15. The air cleaner 71 extends to a position more forward than the entire head cover 15. The air cleaner 71 has a portion located more forward than the head cover 15. Specifically, the air cleaner 71 has a portion located more forward than the entire head cover 15. A part of the air cleaner 71 does not overlap the head cover 15 in vehicle plan view. A part of the air cleaner 71 is disposed in front of the head cover 15 in vehicle plan view. A part of the air cleaner 71 is disposed in front of the entire head cover 15 in vehicle plan view.

Although the fuel tank 69 is not illustrated in FIG. 12, the fuel tank 69 does not overlap the engine 10 in vehicle plan view. The fuel tank 69 is disposed more forward than the engine 10. The entire fuel tank 69 is disposed more forward than the entire engine 10.

The disposing position of the intake pipe 41 will be described.

Refer to FIG. 4. The intake pipe 41 is disposed below the seat 3. At least a part of the intake pipe 41 is disposed below the seat 3. At least a part of the intake pipe 41 is disposed lower than the entire seat 3. For example, the intake pipe 41 may have a portion overlapping the seat 3 in vehicle side view.

Specifically, the first end 41a is disposed below the seat 3. At least a part of the first end 41a is disposed lower than the entire the seat 3. For example, the entire first end 41a is disposed lower than the entire seat 3. The first end 41a does not overlap the seat 3 in vehicle side view.

The second end 41b is disposed below the seat 3. At least a part of the second end 41b is disposed lower than the entire seat 3. For example, the entire second end 41b is disposed lower than the entire seat 3. The second end 41b does not overlap the seat 3 in vehicle side view.

The first pipe 42 is disposed below the seat 3. At least a part of the first pipe 42 is disposed below the seat 3. For example, the entire first pipe 42 is disposed lower than the entire seat 3. The first pipe 42 does not overlap the seat 3 in vehicle side view.

The throttle body 54 is disposed below the seat 3. At least a part of the throttle body 54 is disposed lower than the entire seat 3. For example, the entire throttle body 54 is disposed lower than the entire seat 3. The throttle body 54 does not overlap the seat 3 in vehicle side view.

For example, the second pipe 43 overlaps the seat 3 in vehicle side view. A part of the second pipe 43 overlaps the seat 3 in vehicle side view. For example, the interior portion 45 overlaps the seat 3 in vehicle side view. A part of the interior portion 45 overlaps the seat 3 in vehicle side view. The exterior portion 44 does not overlap the seat 3 in vehicle side view. The exterior portion 44 is disposed below the seat 3. The entire exterior portion 44 is disposed lower than the entire seat 3.

The intake pipe 41 does not have a portion disposed higher than the entire seat 3.

The intake pipe 41 is disposed above the engine 10. At least a part of the intake pipe 41 is disposed above the engine 10. At least a part of the intake pipe 41 is disposed higher than the entire engine 10. At least a part of the intake pipe 41 is disposed higher than the upper end 11a of the crankcase 11. For example, the intake pipe 41 has a portion disposed higher than the upper end 11a and a portion disposed lower than the upper end 11a.

At least a part of the first end 41a of the intake pipe 41 is disposed lower than the upper end 11a. For example, the entire first end 41a is disposed lower than the upper end 11a.

At least a part of the second end 41b of the intake pipe 41 is disposed higher than the upper end 11a. For example, the entire second end 41b is disposed higher than the upper end 11a.

At least a part of the first pipe 42 is disposed higher than the upper end 11a. For example, the first pipe 42 has a portion disposed higher than the upper end 11a and a portion disposed lower than the upper end 11a.

At least a part of the throttle body 54 is disposed higher than the upper end 11a. For example, the entire throttle body 54 is disposed higher than the upper end 11a.

At least a part of the second pipe 43 is disposed higher than the upper end 11a. For example, the entire second pipe 43 is disposed higher than the upper end 11a.

The intake pipe 41 is disposed above the cylinder head 14. At least a part of the intake pipe 41 is disposed above the cylinder head 14. At least a part of the intake pipe 41 is disposed higher than the entire cylinder head 14. For example, the entire intake pipe 41 is disposed higher than the entire cylinder head 14.

The second end 41b of the intake pipe 41 is disposed above the cylinder head 14. At least a part of the second end 41b is disposed above the cylinder head 14. At least a part of the second end 41b is disposed higher than the entire cylinder head 14. For example, the entire second end 41b is disposed higher than the entire cylinder head 14.

The first pipe 42 is disposed above the cylinder head 14. At least a part of the first pipe 42 is disposed higher than the entire cylinder head 14. For example, the entire first pipe 42 is disposed higher than the entire cylinder head 14.

The throttle body 54 is disposed above the cylinder head 14. At least a part of the throttle body 54 is disposed higher than the entire cylinder head 14. For example, the entire throttle body 54 is disposed higher than the entire cylinder head 14.

The second pipe 43 is disposed above the cylinder head 14. At least a part of the second pipe 43 is disposed higher than the entire cylinder head 14. For example, the entire second pipe 43 is disposed higher than the entire cylinder head 14.

The intake pipe 41 is disposed more forward than the engine 10. At least a part of the intake pipe 41 is disposed more forward than the entire engine 10.

The second end 41b of the intake pipe 41 is disposed more forward than the engine 10. At least a part of the second end 41b is disposed more forward than the entire engine 10. For example, the entire second end 41b is disposed more forward than the entire engine 10. The second end 41b does not overlap the engine 10 in vehicle side view.

The intake pipe 41 is disposed more forward than the crankcase 11. At least a part of the intake pipe 41 is disposed more forward than the entire crankcase 11. For example, the entire intake pipe 41 is disposed more forward than the entire crankcase 11. The intake pipe 41 does not overlap the crankcase 11 in vehicle side view.

The first end 41a of the intake pipe 41 is disposed more forward than the crankcase 11. At least a part of the first end 41a is disposed more forward than the entire crankcase 11. For example, the entire first end 41a is disposed more forward than the entire crankcase 11. The first end 41a does not overlap the crankcase 11 in vehicle side view.

The second end 41b of the intake pipe 41 is disposed more forward than the crankcase 11. At least a part of the second end 41b is disposed more forward than the entire crankcase 11. For example, the entire second end 41b is disposed more forward than the entire crankcase 11. The second end 41b does not overlap the crankcase 11 in vehicle side view.

The first pipe 42 is disposed more forward than the crankcase 11. The first pipe 42 is disposed more forward than the entire crankcase 11. For example, the entire first pipe 42 is disposed more forward than the entire crankcase 11. The first pipe 42 does not overlap the crankcase 11 in vehicle side view.

The throttle body 54 is disposed more forward than the crankcase 11. The throttle body 54 is disposed more forward than the entire crankcase 11. For example, the entire throttle body 54 is disposed more forward than the entire crankcase 11. The throttle body 54 does not overlap the crankcase 11 in vehicle side view.

The second pipe 43 is disposed more forward than the crankcase 11. The second pipe 43 is disposed more forward than the entire crankcase 11. For example, the entire second pipe 43 is disposed more forward than the entire crankcase 11. The second pipe 43 does not overlap the crankcase 11 in vehicle side view.

The intake pipe 41 is disposed more forward than the cylinder head 14. At least a part of the intake pipe 41 is disposed more forward than the entire cylinder head 14.

The second end 41b of the intake pipe 41 is disposed more forward than the cylinder head 14. At least a part of the second end 41b is disposed more forward than the entire cylinder head 14. For example, the entire second end 41b is disposed more forward than the entire cylinder head 14.

The intake pipe 41 is disposed in front of the storage box 25. At least a part of the intake pipe 41 is disposed in front of the storage box 25. At least a part of the intake pipe 41 is disposed more forward than the entire storage box 25. In other words, the storage box 25 includes the front end 25a. At least a part of the intake pipe 41 is disposed more forward than the front end 25a. For example, the intake pipe 41 has a portion located more forward than the front end 25a and a portion located more rearward than the front end 25a. The intake pipe 41 does not overlap the storage box 25 in vehicle side view.

The first end 41a of the intake pipe 41 is disposed in front of the storage box 25. At least a part of the first end 41a is disposed in front of the storage box 25. At least a part of the first end 41a is disposed more forward than the entire storage box 25. In other words, at least a part of the first end 41a is disposed more forward than the front end 25a. For example, the first end 41a has a portion located more forward than the front end 25a and a portion located more rearward than the front end 25a. The first end 41a does not overlap the storage box 25 in vehicle side view.

The second end 41b of the intake pipe 41 is disposed in front of the storage box 25. At least a part of the second end 41b is disposed in front of the storage box 25. At least a part of the second end 41b is disposed more forward than the entire storage box 25. In other words, at least a part of the second end 41b is disposed more forward than the front end 25a. For example, the entire second end 41b is disposed more forward than the entire storage box 25. The entire second end 41b is disposed more forward than the front end 25a. The second end 41b does not overlap the storage box 25 in vehicle side view.

The first pipe 42 is disposed in front of the storage box 25. At least a part of the first pipe 42 is disposed in front of the storage box 25. At least a part of the first pipe 42 is disposed more forward than the entire storage box 25. In other words, at least a part of the first pipe 42 is disposed more forward than the front end 25a. For example, the first pipe 42 has a portion located more forward than the front end 25a and a portion located more rearward than the front end 25a. The first pipe 42 does not overlap the storage box 25 in vehicle side view.

The throttle body 54 is disposed in front of the storage box 25. At least a part of the throttle body 54 is disposed in front of the storage box 25. At least a part of the throttle body 54 is disposed more forward than the entire storage box 25. In other words, at least a part of the throttle body 54 is disposed more forward than the front end 25a. For example, the throttle body 54 has a portion located more forward than the front end 25a and a portion located more rearward than the front end 25a. The throttle body 54 does not overlap the storage box 25 in vehicle side view.

The second pipe 43 is disposed in front of the storage box 25. At least a part of the second pipe 43 is disposed in front of the storage box 25. At least a part of the second pipe 43 is disposed more forward than the entire storage box 25. In other words, at least a part of the second pipe 43 is disposed more forward than the front end 25a. For example, the second pipe 43 has a portion located more forward than the front end 25a and a portion located more rearward than the front end 25a. The second pipe 43 does not overlap the storage box 25 in vehicle side view.

The storage box 25 is disposed behind the intake pipe 41. At least a part of the storage box 25 is disposed more rearward than the entire intake pipe 41.

The intake pipe 41 is disposed at the same height position as the storage box 25. At least a part of the intake pipe 41 is disposed at the same height position as at least a part of the storage box 25.

The storage box 25 has a lower end 25b. At least a part of the intake pipe 41 is disposed higher than the lower end 25b. For example, the intake pipe 41 has a portion located higher than the lower end 25b and a portion located lower than the lower end 25b.

At least a part of the first end 41a of the intake pipe 41 is located lower than the lower end 25b. For example, the entire first end 41a is located lower than the lower end 25b.

At least a part of the second end 41b of the intake pipe 41 is located higher than the lower end 25b. For example, the entire second end 41b is located higher than the lower end 25b.

At least a part of the first pipe 42 is disposed higher than the lower end 25b. For example, the first pipe 42 has a portion located higher than the lower end 25b and a portion located lower than the lower end 25b.

At least a part of the throttle body 54 is disposed higher than the lower end 25b. For example, the entire throttle body 54 is disposed higher than the lower end 25b.

At least a part of the second pipe 43 is disposed higher than the lower end 25b. For example, the entire second pipe 43 is disposed higher than the lower end 25b.

At least a part of the air cleaner 71 is disposed higher than the lower end 25b. For example, the entire air cleaner 71 is disposed higher than the lower end 25b.

The intake pipe 41 is disposed below the air cleaner 71. For example, at least a part of the intake pipe 41 is disposed below the air cleaner 71. For example, at least a part of the intake pipe 41 is disposed lower than the entire air cleaner 71. The intake pipe 41 may have a portion overlapping the air cleaner 71 in vehicle side view.

Specifically, the first pipe 42 is disposed below the air cleaner 71. For example, at least a part of the first pipe 42 is disposed lower than the entire air cleaner 71. For example, the entire first pipe 42 is disposed lower than the entire air cleaner 71. The first pipe 42 does not overlap the air cleaner 71 in vehicle side view.

The throttle body 54 is disposed below the air cleaner 71. For example, at least a part of the throttle body 54 is disposed lower than the air cleaner 71. For example, the entire throttle body 54 is disposed lower than the entire air cleaner 71. The throttle body 54 does not overlap the air cleaner 71 in vehicle side view.

The second pipe 43 overlaps the air cleaner 71 in vehicle side view. At least a part of the second pipe 43 overlaps the air cleaner 71 in vehicle side view. For example, the interior portion 45 overlaps the air cleaner 71 in vehicle side view. The entire interior portion 45 overlaps the air cleaner 71 in vehicle side view. The exterior portion 44 does not overlap the air cleaner 71 in vehicle side view. The exterior portion 44 is disposed below the air cleaner 71. At least a part of the exterior portion 44 is disposed lower than the air cleaner 71.

The intake pipe 41 does not have a portion disposed higher than the entire air cleaner 71.

The disposing position of the throttle device 51 will be described.

Refer to FIG. 4. The throttle device 51 is disposed below the seat 3. At least a part of the throttle device 51 is disposed lower than the entire seat 3. For example, the entire throttle device 51 is disposed lower than the entire seat 3. The throttle device 51 does not overlap the seat 3 in vehicle side view.

The throttle valve 52 is disposed below the seat 3. At least a part of the throttle valve 52 is disposed lower than the entire seat 3. For example, the entire throttle valve 52 is disposed lower than the entire seat 3. The throttle valve 52 does not overlap the seat 3 in vehicle side view.

As described above, the throttle body 54 is disposed below the seat 3. At least a part of the throttle body 54 is disposed lower than the entire seat 3. For example, the entire throttle body 54 is disposed lower than the entire seat 3. The throttle body 54 does not overlap the seat 3 in vehicle side view.

The gear box 55 is disposed below the seat 3. At least a part of the gear box 55 is disposed lower than the entire seat 3. For example, the entire gear box 55 is disposed lower than the entire seat 3. The gear box 55 does not overlap the seat 3 in vehicle side view.

The motor 58 is disposed below the seat 3. At least a part of the motor 58 is disposed below the seat 3. At least a part of the motor 58 is disposed lower than the entire seat 3. For example, the entire motor 58 is disposed lower than the entire seat 3. The motor 58 does not overlap the seat 3 in vehicle side view.

The throttle device 51 is disposed above the engine 10. At least a part of the throttle device 51 is disposed higher than the entire engine 10. For example, the entire throttle device 51 is disposed higher than the entire engine 10. The throttle device 51 does not overlap the engine 10 in vehicle side view.

The throttle valve 52 is disposed above the engine 10. At least a part of the throttle valve 52 is disposed higher than the entire engine 10. For example, the entire throttle valve 52 is disposed higher than the entire engine 10. The throttle valve 52 does not overlap the engine 10 in vehicle side view.

The throttle body 54 is disposed above the engine 10. At least a part of the throttle body 54 is disposed higher than the entire engine 10. For example, the entire throttle body 54 is disposed higher than the entire engine 10. The throttle body 54 does not overlap the engine 10 in vehicle side view.

The gear box 55 is disposed above the engine 10. At least a part of the gear box 55 is disposed higher than the entire engine 10. For example, the entire gear box 55 is disposed higher than the entire engine 10. The gear box 55 does not overlap the engine 10 in vehicle side view.

The motor 58 is disposed above the engine 10. At least a part of the motor 58 is disposed above the engine 10. At least a part of the motor 58 is disposed higher than the entire engine 10. For example, the entire motor 58 is disposed higher than the entire engine 10. The motor 58 does not overlap the engine 10 in vehicle side view.

The throttle device 51 is disposed above the cylinder head 14. At least a part of the throttle device 51 is disposed higher than the entire cylinder head 14. For example, the entire throttle device 51 is disposed higher than the entire cylinder head 14. The throttle device 51 does not overlap the cylinder head 14 in vehicle side view.

The throttle valve 52 is disposed above the cylinder head 14. At least a part of the throttle valve 52 is disposed higher than the entire cylinder head 14. For example, the entire throttle valve 52 is disposed higher than the entire cylinder head 14. The throttle valve 52 does not overlap the cylinder head 14 in vehicle side view.

The throttle body 54 is disposed above the cylinder head 14. At least a part of the throttle body 54 is disposed higher than the entire cylinder head 14. For example, the entire throttle body 54 is disposed higher than the entire cylinder head 14. The throttle body 54 does not overlap the cylinder head 14 in vehicle side view.

The gear box 55 is disposed above the cylinder head 14. At least a part of the gear box 55 is disposed higher than the entire cylinder head 14. For example, the entire gear box 55 is disposed higher than the entire cylinder head 14. The gear box 55 does not overlap the cylinder head 14 in vehicle side view.

The motor 58 is disposed above the cylinder head 14. At least a part of the motor 58 is disposed higher than the entire cylinder head 14. For example, the entire motor 58 is disposed higher than the entire cylinder head 14. The motor 58 does not overlap the cylinder head 14 in vehicle side view.

The throttle device 51 is disposed more forward than the crankcase 11. At least a part of the throttle device 51 is disposed more forward than the entire crankcase 11. For example, the entire throttle device 51 is disposed more forward than the entire crankcase 11. The throttle device 51 does not overlap the crankcase 11 in vehicle side view.

The throttle valve 52 is disposed more forward than the crankcase 11. At least a part of the throttle valve 52 is disposed more forward than the entire crankcase 11. For example, the entire throttle valve 52 is disposed more forward than the entire crankcase 11. The throttle valve 52 does not overlap the crankcase 11 in vehicle side view.

The throttle body 54 is disposed more forward than the crankcase 11. At least a part of the throttle body 54 is disposed more forward than the entire crankcase 11. For example, the entire throttle body 54 is disposed more forward than the entire crankcase 11. The throttle body 54 does not overlap the crankcase 11 in vehicle side view.

The gear box 55 is disposed more forward than the crankcase 11. At least a part of the gear box 55 is disposed more forward than the entire crankcase 11. For example, the entire gear box 55 is disposed more forward than the entire crankcase 11. The gear box 55 does not overlap the crankcase 11 in vehicle side view.

The motor 58 is disposed more forward than the crankcase 11. At least a part of the motor 58 is disposed more forward than the entire crankcase 11. For example, the entire motor 58 is disposed more forward than the entire crankcase 11. The motor 58 does not overlap the crankcase 11 in vehicle side view.

The throttle device 51 is disposed in front of the storage box 25. At least a part of the throttle device 51 is disposed more forward than the storage box 25. At least a part of the throttle device 51 is disposed more forward than the entire storage box 25. In other words, at least a part of the throttle device 51 is disposed more forward than the front end 25a of the storage box 25. For example, the throttle device 51 has a portion located more forward than the front end 25a and a portion located more rearward than the front end 25a. The throttle device 51 does not overlap the storage box 25 in vehicle side view.

The throttle valve 52 is disposed in front of the storage box 25. At least a part of the throttle valve 52 is disposed more forward than the storage box 25. At least a part of the throttle valve 52 is disposed more forward than the entire storage box 25. In other words, at least a part of the throttle valve 52 is disposed more forward than the front end 25a. For example, the throttle valve 52 has a portion located more forward than the front end 25a and a portion located more rearward than the front end 25a. The throttle valve 52 does not overlap the storage box 25 in vehicle side view.

As described above, the throttle body 54 is disposed in front of the storage box 25. At least a part of the throttle body 54 is disposed more forward than the storage box 25. At least a part of the throttle body 54 is disposed more forward than the entire storage box 25. In other words, at least a part of the throttle body 54 is disposed more forward than the front end 25a. For example, the throttle body 54 has a portion located more forward than the front end 25a and a portion located more rearward than the front end 25a. The throttle body 54 does not overlap the storage box 25 in vehicle side view.

The gear box 55 is disposed in front of the storage box 25. At least a part of the gear box 55 is disposed more forward than the storage box 25. At least a part of the gear box 55 is disposed more forward than the entire storage box 25. In other words, at least a part of the gear box 55 is disposed more forward than the front end 25a. For example, the gear box 55 has a portion located more forward than the front end 25a and a portion located more rearward than the front end 25a. The gear box 55 does not overlap the storage box 25 in vehicle side view.

The motor 58 is disposed in front of the storage box 25. At least a part of the motor 58 is disposed in front of the storage box 25. At least a part of the motor 58 is disposed more forward than the entire storage box 25. In other words, at least a part of the motor 58 is disposed more forward than the front end 25a. For example, the entire motor 58 is disposed more forward than the entire storage box 25. The entire motor 58 is disposed more forward than the front end 25a. The motor 58 does not overlap the storage box 25 in vehicle side view.

The throttle device 51 is disposed at the same height position as the storage box 25. At least a part of the throttle device 51 is disposed at the same height position as at least a part of the storage box 25.

At least a part of the throttle device 51 is disposed higher than the lower end 25b of the storage box 25. For example, the entire throttle device 51 is disposed higher than the lower end 25b.

At least a part of the throttle valve 52 is disposed higher than the lower end 25b. For example, the entire throttle valve 52 is disposed higher than the lower end 25b.

As described above, at least a part of the throttle body 54 is disposed higher than the lower end 25b. For example, the entire throttle body 54 is disposed higher than the lower end 25b.

At least a part of the gear box 55 is disposed higher than the lower end 25b. For example, the entire gear box 55 is disposed higher than the lower end 25b.

At least a part of the motor 58 is disposed higher than the lower end 25b. For example, the entire motor 58 is disposed higher than the lower end 25b.

For example, the throttle device 51 is disposed below the air cleaner 71. For example, at least a part of the throttle device 51 is disposed below the air cleaner 71. For example, the throttle device 51 may have a portion overlapping the air cleaner 71 in vehicle side view.

Specifically, for example, the throttle valve 52 is disposed below the air cleaner 71. For example, at least a part of the throttle valve 52 is disposed below the air cleaner 71. For example, the throttle valve 52 does not overlap the air cleaner 71 in vehicle side view.

As described above, for example, the throttle body 54 is disposed below the air cleaner 71. For example, at least a part of the throttle body 54 is disposed below the air cleaner 71. For example, the entire throttle body 54 is disposed lower than the air cleaner 71. For example, the throttle body 54 does not overlap the air cleaner 71 in vehicle side view.

For example, the gear box 55 is disposed below the air cleaner 71. For example, at least a part of the gear box 55 is disposed below the air cleaner 71. For example, the gear box 55 overlaps the air cleaner 71 in vehicle side view. For example, a part of the gear box 55 overlaps the air cleaner 71 in vehicle side view.

For example, the motor 58 is disposed below the air cleaner 71. For example, at least a part of the motor 58 is disposed below the air cleaner 71. For example, the motor 58 overlaps the air cleaner 71 in vehicle side view. For example, a part of the motor 58 overlaps the air cleaner 71 in vehicle side view.

The throttle device 51 does not have a portion disposed higher than the entire air cleaner 71.

The throttle device 51 is disposed higher than the first end 41a of the intake pipe 41. At least a part of the throttle device 51 is disposed higher than the entire first end 41a. For example, the entire throttle device 51 is disposed higher than the entire first end 41a. The throttle device 51 does not overlap the first end 41a in vehicle side view.

The throttle valve 52 is disposed higher than the first end 41a. At least a part of the throttle valve 52 is disposed higher than the entire first end 41a. For example, the entire throttle valve 52 is disposed higher than the entire first end 41a. The throttle valve 52 does not overlap the first end 41a in vehicle side view.

The throttle body 54 is disposed higher than the first end 41a. At least a part of the throttle body 54 is disposed higher than the entire first end 41a. For example, the entire throttle body 54 is disposed higher than the entire first end 41a. The throttle body 54 does not overlap the first end 41a in vehicle side view.

The gear box 55 is disposed higher than the first end 41a. At least a part of the gear box 55 is disposed higher than the entire first end 41a. For example, the entire gear box 55 is disposed higher than the entire first end 41a. The gear box 55 does not overlap the first end 41a in vehicle side view.

The motor 58 is disposed higher than the first end 41a. At least a part of the motor 58 is disposed higher than the entire first end 41a. For example, the entire motor 58 is disposed higher than the entire first end 41a. The motor 58 does not overlap the first end 41a in vehicle side view.

The throttle device 51 is disposed more forward than the first end 41a. At least a part of the throttle device 51 is disposed more forward than the entire first end 41a of the intake pipe 41.

The gear box 55 is disposed more forward than the first end 41a. At least a part of the gear box 55 is disposed more forward than the entire first end 41a.

The motor 58 is disposed more forward than the first end 41a. At least a part of the motor 58 is disposed more forward than the entire first end 41a. For example, the entire motor 58 is disposed more forward than the entire first end 41a.

The throttle device 51 is disposed lower than the second end 41b of the intake pipe 41. At least a part of the throttle device 51 is disposed lower than the entire second end 41b. For example, the entire throttle device 51 is disposed lower than the entire second end 41b. The throttle device 51 does not overlap the second end 41b in vehicle side view.

The throttle valve 52 is disposed lower than the second end 41b. At least a part of the throttle valve 52 is disposed lower than the entire second end 41b. For example, the entire throttle valve 52 is disposed lower than the entire second end 41b. The throttle valve 52 does not overlap the second end 41b in vehicle side view.

The throttle body 54 is disposed lower than the second end 41b. At least a part of the throttle body 54 is disposed lower than the entire second end 41b. For example, the entire throttle body 54 is disposed lower than the entire second end 41b. The throttle body 54 does not overlap the second end 41b in vehicle side view.

The gear box 55 is disposed lower than the second end 41b. At least a part of the gear box 55 is disposed lower than the entire second end 41b. For example, the entire gear box 55 is disposed lower than the entire second end 41b. The gear box 55 does not overlap the second end 41b in vehicle side view.

The motor 58 is disposed lower than the second end 41b. At least a part of the motor 58 is disposed lower than the entire second end 41b. For example, the entire motor 58 is disposed lower than the entire second end 41b. The motor 58 does not overlap the second end 41b in vehicle side view.

The throttle device 51 is disposed more rearward than the second end 41b. At least a part of the throttle device 51 is disposed more rearward than the entire second end 41b. For example, the entire throttle device 51 is disposed more rearward than the second end 41b.

The throttle valve 52 is disposed more rearward than the second end 41b. At least a part of the throttle valve 52 is disposed more rearward than the entire second end 41b. For example, the entire throttle valve 52 is disposed more rearward than the entire second end 41b.

The throttle body 54 is disposed more rearward than the second end 41b. At least a part of the throttle body 54 is disposed more rearward than the entire second end 41b. For example, the entire throttle body 54 is disposed more rearward than the entire second end 41b.

The gear box 55 is disposed more rearward than the second end 41b. At least a part of the gear box 55 is disposed more rearward than the entire second end 41b. For example, the entire gear box 55 is disposed more rearward than the entire second end 41b.

The motor 58 is disposed more rearward than the second end 41b. At least a part of the motor 58 is disposed more rearward than the entire second end 41b. For example, the entire motor 58 is disposed more rearward than the entire second end 41b.

The throttle device 51 is disposed above the first pipe 42. At least a part of the throttle device 51 is disposed higher than the entire first pipe 42. For example, the entire throttle device 51 is disposed higher than the entire first pipe 42.

The throttle valve 52 is disposed above the first pipe 42. At least a part of the throttle valve 52 is disposed higher than the entire first pipe 42. For example, the entire throttle valve 52 is disposed higher than the entire first pipe 42. The throttle valve 52 does not overlap the first pipe 42 in vehicle side view.

The throttle body 54 is disposed above the first pipe 42. At least a part of the throttle body 54 is disposed higher than the entire first pipe 42. For example, the entire throttle body 54 is disposed higher than the entire first pipe 42.

The gear box 55 is disposed above the first pipe 42. At least a part of the gear box 55 is disposed higher than the entire first pipe 42. For example, the entire gear box 55 is disposed higher than the entire first pipe 42.

The motor 58 is disposed above the first pipe 42. At least a part of the motor 58 is disposed higher than the entire first pipe 42. For example, the entire motor 58 is disposed higher than the entire first pipe 42. The motor 58 does not overlap the first pipe 42 in vehicle side view.

The throttle device 51 is disposed more forward than the first pipe 42. At least a part of the throttle device 51 is disposed more forward than the first pipe 42.

The gear box 55 is disposed more forward than the first pipe 42. At least a part of the gear box 55 is disposed more forward than the entire first pipe 42.

The motor 58 is disposed more forward than the first pipe 42. At least a part of the motor 58 is disposed more forward than the entire first pipe 42. For example, the entire motor 58 is disposed more forward than the entire first pipe 42.

A part of the throttle device 51 is disposed more forward than the throttle body 54. A part of the throttle device 51 is disposed more forward than the entire throttle body 54.

The gear box 55 is disposed more forward than the throttle body 54. A part of the gear box 55 is disposed more forward than the entire throttle body 54.

As described above, the motor 58 is disposed in front of the throttle body 54. At least a part of the motor 58 is disposed in front of the entire throttle body 54. For example, the entire motor 58 is disposed in front of the entire throttle body 54.

The motor 58 does not have a portion located more rearward than the entire throttle body 54.

The throttle device 51 is disposed lower than the second pipe 43. At least a part of the throttle device 51 is disposed lower than the entire second pipe 43. For example, the entire throttle device 51 is disposed lower than the entire second pipe 43.

The throttle valve 52 is disposed lower than the second pipe 43. At least a part of the throttle valve 52 is disposed lower than the entire second pipe 43. For example, the entire throttle valve 52 is disposed lower than the entire second pipe 43. The throttle valve 52 does not overlap the second pipe 43 in vehicle side view.

The throttle body 54 is disposed lower than the second pipe 43. At least a part of the throttle body 54 is disposed lower than the entire second pipe 43. For example, the entire throttle body 54 is disposed lower than the entire second pipe 43.

The gear box 55 is disposed lower than the second pipe 43. At least a part of the gear box 55 is disposed lower than the entire second pipe 43. For example, the entire gear box 55 is disposed lower than the entire second pipe 43.

The motor 58 is disposed lower than the second pipe 43. At least a part of the motor 58 is disposed lower than the entire second pipe 43. For example, the entire motor 58 is disposed lower than the entire second pipe 43. The motor 58 does not overlap the second pipe 43 in vehicle side view.

The intake pipe 41 surrounds the motor 58 in vehicle side view. The first pipe 42 is located lower than and more rearward than the entire motor 58. The throttle body 54 is located more rearward than the entire motor 58. The second pipe 43 is located higher than the entire motor 58. The second end 43b of the second pipe 43 is located more forward than the entire motor 58.

The intake pipe 41 passes through a position behind the motor 58 and extends from a position lower than the motor 58 to a position higher than the motor 58. Specifically, the first pipe 42, the throttle body 54, and the second pipe 43 pass through a position behind the motor 58 and extend from a position lower than the motor 58 to a position higher than the motor 58. The intake pipe 41 passes through a position above the motor 58 and extends from a position more rearward than the motor 58 to a position more forward than the motor 58. Specifically, the second pipe 43 passes through a position above the motor 58 and extends from a position more rearward than the motor 58 to a position more forward than the motor 58.

The intake pipe 41 does not overlap the motor 58 in vehicle side view.

The motor 58 does not have a portion located more rearward than the entire intake pipe 41.

The disposing position of the fuel injection device 61 will be described.

Refer to FIG. 4. The fuel injection device 61 is disposed below the seat 3. At least a part of the fuel injection device 61 is disposed lower than the entire seat 3. For example, the entire fuel injection device 61 is disposed lower than the entire seat 3. The fuel injection device 61 does not overlap the seat 3 in vehicle side view.

The fuel injection device 61 is disposed above the engine 10. At least a part of the fuel injection device 61 is disposed above the engine 10. At least a part of the fuel injection device 61 is disposed higher than the entire engine 10. In other words, at least a part of the fuel injection device 61 is disposed higher than the upper end 11a of the crankcase 11. For example, the fuel injection device 61 has a portion disposed higher than the upper end 11a and a portion disposed lower than the upper end 11a. The fuel injection device 61 does not overlap the engine 10 in vehicle side view.

The fuel injection device 61 is disposed above the cylinder head 14. At least a part of the fuel injection device 61 is disposed higher than the entire cylinder head 14. For example, the entire fuel injection device 61 is disposed higher than the entire cylinder head 14. The fuel injection device 61 does not overlap the cylinder head 14 in vehicle side view.

The fuel injection device 61 is disposed in front of the crankcase 11. At least a part of the fuel injection device 61 is disposed more forward than the entire crankcase 11. For example, the entire fuel injection device 61 is disposed more forward than the entire crankcase 11. The fuel injection device 61 does not overlap the crankcase 11 in vehicle side view.

The fuel injection device 61 is disposed in front of the storage box 25. At least a part of the fuel injection device 61 is disposed more forward than the entire storage box 25. In other words, at least a part of the fuel injection device 61 is disposed more forward than the front end 25a. For example, the entire fuel injection device 61 is disposed more forward than the entire storage box 25. The entire fuel injection device 61 is disposed more forward than the front end 25a. The fuel injection device 61 does not overlap the storage box 25 in vehicle side view.

The fuel injection device 61 is disposed at the same height position as the storage box 25. At least a part of the fuel injection device 61 is disposed at the same height position as at least a part of the storage box 25.

At least a part of the fuel injection device 61 is disposed higher than the lower end 25b of the storage box 25. For example, the fuel injection device 61 has a portion disposed higher than the lower end 25b and a portion disposed lower than the lower end 25b.

The fuel injection device 61 is disposed below the air cleaner 71. For example, at least a part of the fuel injection device 61 is disposed lower than the entire air cleaner 71. For example, the entire fuel injection device 61 is disposed lower than the entire air cleaner 71. For example, the fuel injection device 61 does not overlap the air cleaner 71 in vehicle side view.

The fuel injection device 61 extends forward from the intake pipe 41. The fuel injection device 61 extends forward and upward from the intake pipe 41. The fuel injection device 61 does not have a portion located more rearward than the entire intake pipe 41.

The fuel injection device 61 penetrates the first pipe 42. The fuel injection device 61 is inserted into the first pipe 42 from the outside of the first pipe 42.

The fuel injection device 61 is disposed in front of the first pipe 42. The fuel injection device 61 penetrates the front part of the first pipe 42.

The fuel injection device 61 injects fuel rearward. The fuel injection device 61 injects fuel rearward and downward. The fuel injection device 61 injects fuel toward the intake passage 17, for example. The fuel injection device 61 injects fuel toward the cylinder bore 16, for example. The fuel injection device 61 injects fuel toward the combustion chamber, for example.

The fuel injection device 61 is disposed lower than the second end 41b of the intake pipe 41. At least a part of the fuel injection device 61 is disposed lower than the entire second end 41b. For example, the entire fuel injection device 61 is disposed lower than the entire second end 41b.

The fuel injection device 61 is disposed more rearward than the second end 41b. At least a part of the fuel injection device 61 is disposed more rearward than the entire second end 41b. For example, the entire fuel injection device 61 is disposed more rearward than the entire second end 41b.

The fuel injection device 61 is disposed lower than the second pipe 43. At least a part of the fuel injection device 61 is disposed lower than the entire second pipe 43. For example, the entire fuel injection device 61 is disposed lower than the entire second pipe 43. The fuel injection device 61 does not overlap the second pipe 43 in vehicle side view.

The fuel injection device 61 is disposed below the throttle device 51. At least a part of the fuel injection device 61 is disposed lower than the entire throttle device 51. For example, the entire fuel injection device 61 is disposed lower than the entire throttle device 51. The fuel injection device 61 does not overlap the throttle device 51 in vehicle side view.

The fuel injection device 61 is disposed lower than the throttle valve 52. At least a part of the fuel injection device 61 is disposed lower than the entire throttle valve 52. For example, the entire fuel injection device 61 is disposed lower than the entire throttle valve 52. The fuel injection device 61 does not overlap the throttle valve 52 in vehicle side view.

In other words, the throttle valve 52 is disposed higher than the fuel injection device 61. At least a part of the throttle valve 52 is disposed higher than the entire fuel injection device 61.

The fuel injection device 61 is disposed more forward than the throttle valve 52. At least a part of the fuel injection device 61 is disposed more forward than the entire throttle valve 52. For example, the entire fuel injection device 61 is disposed more forward than the entire throttle valve 52.

Refer to FIG. 7. The fuel injection device 61 is disposed higher than the first end 41a of the intake pipe 41. At least a part of the fuel injection device 61 is disposed higher than the entire first end 41a. For example, the entire fuel injection device 61 is disposed higher than the entire first end 41a.

The fuel injection device 61 is disposed more forward than the first end 41a. At least a part of the fuel injection device 61 is disposed more forward than the entire first end 41a.

The fuel injection device 61 extends forward from a downstream portion of the intake pipe 41. The fuel injection device 61 extends forward and upward from a downstream portion of the intake pipe 41.

For example, the fuel injection device 61 extends forward from the first pipe 42. The fuel injection device 61 extends forward and upward from the first pipe 42.

At least a part of the fuel injection device 61 is disposed in front of the entire first pipe 42. The fuel injection device 61 does not have a portion located more rearward than the entire first pipe 42.

Refer to FIG. 7. The fuel injection device 61 is disposed lower than the throttle body 54. At least a part of the fuel injection device 61 is disposed lower than the entire throttle body 54. For example, the entire fuel injection device 61 is disposed lower than the entire throttle body 54. The fuel injection device 61 does not overlap the throttle body 54 in vehicle side view.

The fuel injection device 61 is disposed more forward than the throttle body 54. At least a part of the fuel injection device 61 is disposed more forward than the entire throttle body 54. The fuel injection device 61 does not have a portion located more rearward than the entire throttle body 54.

The fuel injection device 61 is disposed lower than the gear box 55. At least a part of the fuel injection device 61 is disposed lower than the entire gear box 55. For example, the entire fuel injection device 61 is disposed lower than the entire gear box 55. The fuel injection device 61 does not overlap the gear box 55 in vehicle side view.

The fuel injection device 61 is disposed below the gear cover 57. At least a part of the fuel injection device 61 is disposed lower than the entire gear cover 57. For example, the entire fuel injection device 61 is disposed lower than the entire gear cover 57. The fuel injection device 61 does not overlap the gear cover 57 in vehicle side view.

The fuel injection device 61 is disposed below the motor 58. At least a part of the fuel injection device 61 is disposed lower than the entire motor 58. For example, the entire fuel injection device 61 is disposed lower than the entire motor 58. The fuel injection device 61 does not overlap the motor 58 in vehicle side view.

In other words, the motor 58 is disposed higher than the fuel injection device 61. At least a part of the motor 58 is disposed higher than the fuel injection device 61. At least a part of the motor 58 is disposed higher than the entire fuel injection device 61. For example, the entire motor 58 is disposed higher than the entire fuel injection device 61.

The fuel injection device 61 is disposed below the motor case 58c. At least a part of the fuel injection device 61 is disposed lower than the entire motor case 58c. For example, the entire fuel injection device 61 is disposed lower than the entire motor case 58c. The fuel injection device 61 does not overlap the motor case 58c in vehicle side view.

The disposing position of the joint 67 will be described.

The joint 67 is disposed higher than the first end 41a of the intake pipe 41. At least a part of the joint 67 is disposed higher than the entire first end 41a. For example, the entire joint 67 is disposed higher than the entire first end 41a.

The joint 67 is disposed more forward than the first end 41a. At least a part of the joint 67 is disposed more forward than the entire first end 41a.

The joint 67 is disposed more forward than the first pipe 42. At least a part of the joint 67 is disposed more forward than the entire first pipe 42. For example, the entire joint 67 is disposed more forward than the entire first pipe 42. The joint 67 does not overlap the first pipe 42 in vehicle side view.

The joint 67 is disposed at the same height position as the throttle device 51. At least a part of the joint 67 is disposed at the same height position as at least a part of the throttle device 51. The joint 67 overlaps the throttle device 51 in vehicle side view. The joint 67 overlaps only a part of the throttle device 51 in vehicle side view.

Specifically, the joint 67 is disposed lower than the throttle body 54. At least a part of the joint 67 is disposed lower than the entire throttle body 54. For example, the entire joint 67 is disposed lower than the entire throttle body 54. The joint 67 does not overlap the throttle body 54 in vehicle side view.

The joint 67 is disposed more forward than the throttle body 54. At least a part of the joint 67 is disposed more forward than the entire throttle body 54. For example, the entire joint 67 is disposed more forward than the entire throttle body 54.

FIG. 7 does not illustrate the throttle valve 52. The throttle valve 52 is disposed in the throttle body 54. Therefore, the joint 67 is disposed lower than the throttle valve 52. At least a part of the joint 67 is disposed lower than the entire throttle valve 52. For example, the entire joint 67 is disposed lower than the entire throttle valve 52. The joint 67 does not overlap the throttle valve 52 in vehicle side view.

The joint 67 is disposed more forward than the throttle valve 52. At least a part of the joint 67 is disposed more forward than the entire throttle valve 52. For example, the entire joint 67 is disposed more forward than the entire throttle valve 52.

Although the second pipe 43 is not illustrated in FIG. 7, the second pipe 43 is disposed above the throttle body 54. Therefore, the joint 67 is disposed lower than the second pipe 43. At least a part of the joint 67 is disposed lower than the entire second pipe 43. For example, the entire joint 67 is disposed lower than the entire second pipe 43. The joint 67 does not overlap the second pipe 43 in vehicle side view.

Therefore, the joint 67 does not overlap the intake pipe 41 in vehicle side view.

The joint 67 overlaps the gear box 55 in vehicle side view. The joint 67 overlaps the lower portion of the gear box 55 described above in vehicle side view.

The joint 67 overlaps the gear cover 57 in vehicle side view. The joint 67 overlaps a part of the gear cover 57 in vehicle side view.

The joint 67 is disposed lower than the motor 58. At least a part of the joint 67 is disposed lower than the entire motor 58. For example, the entire joint 67 is disposed lower than the entire motor 58. The joint 67 does not overlap the motor 58 in vehicle side view.

In other words, the motor 58 is disposed higher than the joint 67. At least a part of the motor 58 is disposed higher than the joint 67. At least a part of the motor 58 is disposed higher than the entire joint 67. For example, the entire motor 58 is disposed higher than the entire joint 67.

The joint 67 is disposed below the motor case 58c. At least a part of the joint 67 is disposed lower than the entire motor case 58c. For example, the entire joint 67 is disposed lower than the entire motor case 58c. The joint 67 does not overlap the motor case 58c in vehicle side view.

The disposing position of the first end 64 of the fuel pipe 63 will be described.

The first end 64 of the fuel pipe 63 is disposed higher than the first end 41a of the intake pipe 41. At least a part of the first end 64 is disposed higher than the entire first end 41a. For example, the entire first end 64 is disposed higher than the entire first end 41a.

The first end 64 is disposed more forward than the first end 41a. At least a part of the first end 64 is disposed more forward than the entire first end 41a.

The first end 64 is disposed more forward than the first pipe 42. At least a part of the first end 64 is disposed more forward than the entire first pipe 42. For example, the entire first end 64 is disposed more forward than the entire first pipe 42. The first end 64 does not overlap the first pipe 42 in vehicle side view.

The first end 64 is disposed at the same height position as the throttle device 51. At least a part of the first end 64 is disposed at the same height position as at least a part of the throttle device 51. The first end 64 overlaps the throttle device 51 in vehicle side view. The first end 64 overlaps only a part of the throttle device 51 in vehicle side view.

The first end 64 is disposed lower than the throttle body 54. At least a part of the first end 64 is disposed lower than the entire throttle body 54. For example, the entire first end 64 is disposed lower than the entire throttle body 54. The first end 64 does not overlap the throttle body 54 in vehicle side view.

The first end 64 is disposed more forward than the throttle body 54. At least a part of the first end 64 is disposed more forward than the entire throttle body 54. For example, the entire first end 64 is disposed more forward than the entire throttle body 54.

The throttle valve 52 is disposed in the throttle body 54. Therefore, the first end 64 is disposed lower than the throttle valve 52. At least a part of the first end 64 is disposed lower than the entire throttle valve 52. For example, the entire first end 64 is disposed lower than the entire throttle valve 52. The first end 64 does not overlap the throttle valve 52 in vehicle side view.

The first end 64 is disposed more forward than the throttle valve 52. At least a part of the first end 64 is disposed more forward than the entire throttle valve 52. For example, the entire first end 64 is disposed more forward than the entire throttle valve 52.

Although the second pipe 43 is not illustrated in FIG. 7, the second pipe 43 is disposed above the throttle body 54. Therefore, the first end 64 is disposed lower than the second pipe 43. At least a part of the first end 64 is disposed lower than the entire second pipe 43. For example, the entire first end 64 is disposed lower than the entire second pipe 43. The first end 64 does not overlap the second pipe 43 in vehicle side view.

Therefore, the first end 64 does not overlap the intake pipe 41 in vehicle side view.

The first end 64 overlaps the gear box 55 in vehicle side view. The first end 64 overlaps the lower portion of the gear box 55 described above in vehicle side view.

The first end 64 overlaps the gear cover 57 in vehicle side view. The first end 64 overlaps a part of the gear cover 57 in vehicle side view.

The first end 64 is disposed lower than the motor 58. At least a part of the first end 64 is disposed lower than the entire motor 58. For example, the entire first end 64 is disposed lower than the entire motor 58. The first end 64 does not overlap the motor 58 in vehicle side view.

In other words, the motor 58 is disposed higher than the first end 64. At least a part of the motor 58 is disposed higher than the first end 64. At least a part of the motor 58 is disposed higher than the entire first end 64. For example, the entire motor 58 is disposed higher than the entire first end 64.

The first end 64 is disposed below the motor case 58c. At least a part of the first end 64 is disposed lower than the entire motor case 58c. For example, the entire first end 64 is disposed lower than the entire motor case 58c. The first end 64 does not overlap the motor case 58c in vehicle side view.

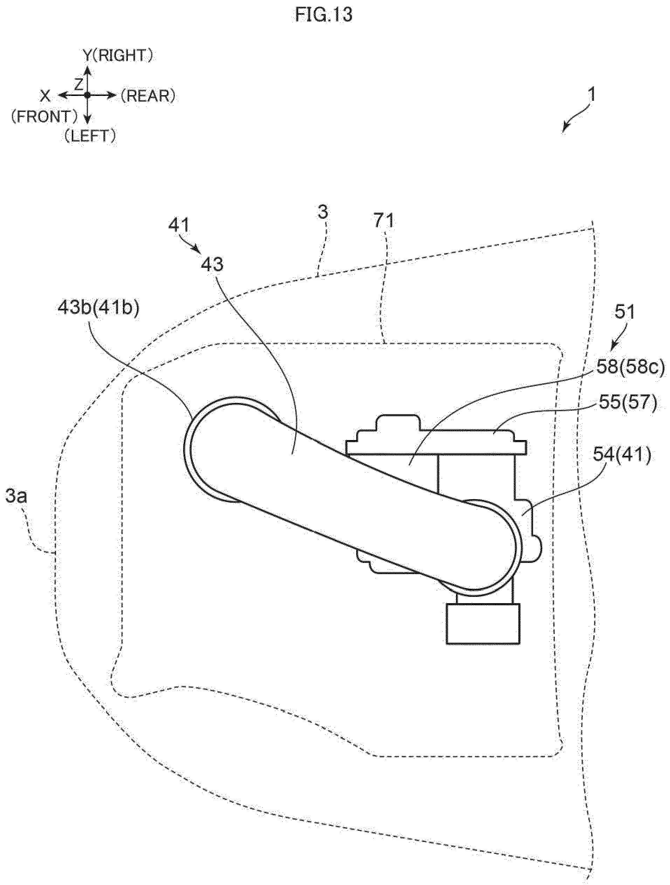

FIG. 13 is a plan view of the straddled vehicle 1. In FIG. 13, the seat 3 and the air cleaner 71 are indicated by broken lines. FIG. 13 clearly illustrates the intake pipe 41 and the throttle device 51.

The intake pipe 41 overlaps the seat 3 in vehicle plan view. At least a part of the intake pipe 41 overlaps the seat 3 in vehicle plan view. For example, the entire intake pipe 41 overlaps the seat 3 in vehicle plan view.

The intake pipe 41 is disposed more rearward than the front end 3a of the seat 3. At least a part of the intake pipe 41 is disposed more rearward than the front end 3a. For example, the entire intake pipe 41 is disposed more rearward than the front end 3a.

The second end 41b of the intake pipe 41 overlaps the seat 3 in vehicle plan view. At least a part of the second end 41b overlaps the seat 3 in vehicle plan view. For example, the entire second end 41b overlaps the seat 3 in vehicle plan view.

The second end 41b is disposed more rearward than the front end 3a. At least a part of the second end 41b is disposed more rearward than the front end 3a. For example, the entire second end 41b is disposed more rearward than the front end 3a.

FIG. 13 does not illustrate the first pipe 42. The first pipe 42 is disposed below the throttle device 51. Therefore, the first pipe 42 overlaps the seat 3 in vehicle plan view. At least a part of the first pipe 42 overlaps the seat 3 in vehicle plan view. For example, the entire first pipe 42 overlaps the seat 3 in vehicle plan view.

The first pipe 42 is disposed more rearward than the front end 3a. At least a part of the first pipe 42 is disposed more rearward than the front end 3a. For example, the entire first pipe 42 is disposed more rearward than the front end 3a.

The second pipe 43 overlaps the seat 3 in vehicle plan view. At least a part of the second pipe 43 overlaps the seat 3 in vehicle plan view. For example, the entire second pipe 43 overlaps the seat 3 in vehicle plan view.

The second pipe 43 is disposed more rearward than the front end 3a. At least a part of the second pipe 43 is disposed more rearward than the front end 3a. For example, the entire second pipe 43 is disposed more rearward than the front end 3a.

The intake pipe 41 overlaps the air cleaner 71 in vehicle plan view. At least a part of the intake pipe 41 overlaps the air cleaner 71 in vehicle plan view. For example, the entire intake pipe 41 overlaps the air cleaner 71 in vehicle plan view.

The second end 41b of the intake pipe 41 overlaps the air cleaner 71 in vehicle plan view. At least a part of the second end 41b overlaps the air cleaner 71 in vehicle plan view. For example, the entire second end 41b overlaps the air cleaner 71 in vehicle plan view.

The first pipe 42 is disposed below the throttle device 51. Thus, the first pipe 42 overlaps the air cleaner 71 in vehicle plan view. At least a part of the first pipe 42 overlaps the air cleaner 71 in vehicle plan view. For example, the entire first pipe 42 overlaps the air cleaner 71 in vehicle plan view.

The second pipe 43 overlaps the air cleaner 71 in vehicle plan view. At least a part of the second pipe 43 overlaps the air cleaner 71 in vehicle plan view. For example, the entire second pipe 43 overlaps the air cleaner 71 in vehicle plan view.

The air cleaner 71 extends to a position more forward than the intake pipe 41. The air cleaner 71 extends to a position more forward than the entire intake pipe 41. The air cleaner 71 has a portion located more forward than the intake pipe 41. Specifically, the air cleaner 71 has a portion located more forward than the entire intake pipe 41. A part of the air cleaner 71 does not overlap the intake pipe 41 in vehicle plan view. A part of the air cleaner 71 is disposed in front of the intake pipe 41 in vehicle plan view. A part of the air cleaner 71 is disposed in front of the entire intake pipe 41 in vehicle plan view.

The air cleaner 71 extends to a position more forward than the first pipe 42. The air cleaner 71 extends to a position more forward than the entire first pipe 42. The air cleaner 71 has a portion located more forward than the first pipe 42. Specifically, the air cleaner 71 has a portion located more forward than the entire first pipe 42. A part of the air cleaner 71 does not overlap the first pipe 42 in vehicle plan view. A part of the air cleaner 71 is disposed in front of the first pipe 42 in vehicle plan view. A part of the air cleaner 71 is disposed in front of the entire first pipe 42 in vehicle plan view.

The air cleaner 71 extends to a position more forward than the second pipe 43. The air cleaner 71 extends to a position more forward than the entire second pipe 43. The air cleaner 71 has a portion located more forward than the second pipe 43. Specifically, the air cleaner 71 has a portion located more forward than the entire second pipe 43. A part of the air cleaner 71 does not overlap the second pipe 43 in vehicle plan view. A part of the air cleaner 71 is disposed in front of the second pipe 43 in vehicle plan view. A part of the air cleaner 71 is disposed in front of the entire second pipe 43 in vehicle plan view.

The second pipe 43 extends forward from the throttle body 54 in vehicle side view.

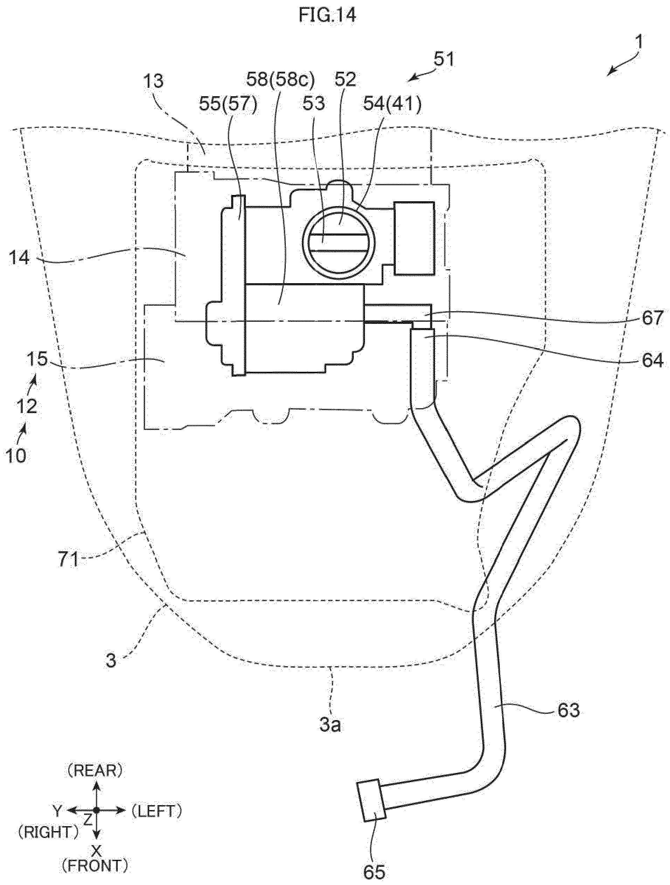

FIG. 14 is a plan view of the straddled vehicle 1. In FIG. 14, the seat 3 is indicated by a broken line. FIG. 14 clearly illustrates the throttle device 51.

The throttle device 51 overlaps the seat 3 in vehicle plan view. At least a part of the throttle device 51 overlaps the seat 3 in vehicle plan view. For example, the entire throttle device 51 overlaps the seat 3 in vehicle plan view.

The throttle device 51 is disposed more rearward than the front end 3a of the seat 3. At least a part of the throttle device 51 is disposed more rearward than the front end 3a. For example, the entire throttle device 51 is disposed more rearward than the front end 3a.

The throttle valve 52 overlaps the seat 3 in vehicle plan view. At least a part of the throttle valve 52 overlaps the seat 3 in vehicle plan view. For example, the entire throttle valve 52 overlaps the seat 3 in vehicle plan view.

The throttle valve 52 is disposed more rearward than the front end 3a. At least a part of the throttle valve 52 is disposed more rearward than the front end 3a. For example, the entire throttle valve 52 is disposed more rearward than the front end 3a.

The throttle body 54 overlaps the seat 3 in vehicle plan view. At least a part of the throttle body 54 overlaps the seat 3 in vehicle plan view. For example, the entire throttle body 54 overlaps the seat 3 in vehicle plan view.

The throttle body 54 is disposed more rearward than the front end 3a. At least a part of the throttle body 54 is disposed more rearward than the front end 3a. For example, the entire throttle body 54 is disposed more rearward than the front end 3a.

The gear box 55 overlaps the seat 3 in vehicle plan view. At least a part of the gear box 55 overlaps the seat 3 in vehicle plan view. For example, the entire gear box 55 overlaps the seat 3 in vehicle plan view.

The gear box 55 is disposed more rearward than the front end 3a. At least a part of the gear box 55 is disposed more rearward than the front end 3a of the seat 3. For example, the entire gear box 55 is disposed more rearward than the front end 3a.

The motor 58 overlaps the seat 3 in vehicle plan view. At least a part of the motor 58 overlaps the seat 3 in vehicle plan view. For example, the entire motor 58 overlaps the seat 3 in vehicle plan view.

The motor 58 is disposed more rearward than the front end 3a. At least a part of the motor 58 is disposed more rearward than the front end 3a of the seat 3. For example, the entire motor 58 is disposed more rearward than the front end 3a.

FIG. 14 illustrates the engine 10 by an alternate long and short dash line. The throttle device 51 overlaps the engine 10 in vehicle plan view. At least a part of the throttle device 51 overlaps the engine 10 in vehicle plan view. For example, the entire throttle device 51 overlaps the engine 10 in vehicle plan view.

The throttle valve 52 overlaps the engine 10 in vehicle plan view. At least a part of the throttle valve 52 overlaps the engine 10 in vehicle plan view. For example, the entire throttle valve 52 overlaps the engine 10 in vehicle plan view.

The throttle body 54 overlaps the engine 10 in vehicle plan view. At least a part of the throttle body 54 overlaps the engine 10 in vehicle plan view. For example, the entire throttle body 54 overlaps the engine 10 in vehicle plan view.

The gear box 55 overlaps the engine 10 in vehicle plan view. At least a part of the gear box 55 overlaps the engine 10 in vehicle plan view. For example, the entire gear box 55 overlaps the engine 10 in vehicle plan view.

The motor 58 overlaps the engine 10 in vehicle plan view. At least a part of the motor 58 overlaps the engine 10 in vehicle plan view. For example, the entire motor 58 overlaps the engine 10 in vehicle plan view.

The throttle device 51 overlaps the cylinder head 14 in vehicle plan view. At least a part of the throttle device 51 overlaps the cylinder head 14 in vehicle plan view.

The throttle valve 52 overlaps the cylinder head 14 in vehicle plan view. At least a part of the throttle valve 52 overlaps the cylinder head 14 in vehicle plan view. For example, the entire throttle valve 52 overlaps the cylinder head 14 in vehicle plan view.

The throttle body 54 overlaps the cylinder head 14 in vehicle plan view. At least a part of the throttle body 54 overlaps the cylinder head 14 in vehicle plan view. For example, the entire throttle body 54 overlaps the cylinder head 14 in vehicle plan view.

The gear box 55 overlaps the cylinder head 14 in vehicle plan view. At least a part of the gear box 55 overlaps the cylinder head 14 in vehicle plan view.

The motor 58 overlaps the cylinder head 14 in vehicle plan view. At least a part of the motor 58 overlaps the cylinder head 14 in vehicle plan view.

FIG. 14 does not illustrate the crankcase 11. The crankcase 11 is disposed behind the cylinder head 14. The crankcase 11 is disposed behind the cylinder body 13. The crankcase 11 is disposed behind the cylinder unit 12. Therefore, the throttle device 51 does not overlap the crankcase 11 in vehicle plan view.

The throttle valve 52 does not overlap the crankcase 11 in vehicle plan view.

The throttle body 54 does not overlap the crankcase 11 in vehicle plan view.

The gear box 55 does not overlap the crankcase 11 in vehicle plan view.

The motor 58 does not overlap the crankcase 11 in vehicle plan view.

FIG. 14 does not illustrate the first pipe 42. The first pipe 42 is disposed below the throttle device 51. Therefore, at least a part of the first pipe 42 overlaps the engine 10 in vehicle plan view. For example, the entire first pipe 42 overlaps the engine 10 in vehicle plan view.

Although the second pipe 43 is not illustrated in FIG. 14, the second pipe 43 extends forward from the throttle body 54 in vehicle plan view. Therefore, at least a part of the second pipe 43 overlaps the engine 10 in vehicle plan view.

Therefore, at least a part of the intake pipe 41 overlaps the engine 10 in vehicle plan view.

At least a part of the first pipe 42 overlaps the cylinder head 14 in vehicle plan view. For example, the entire first pipe 42 overlaps the cylinder head 14 in vehicle plan view.

At least a part of the second pipe 43 overlaps the cylinder head 14 in vehicle plan view.

Therefore, at least a part of the intake pipe 41 overlaps the cylinder head 14 in vehicle plan view.

The first pipe 42 does not overlap the crankcase 11 in vehicle plan view.

The second pipe 43 does not overlap the crankcase 11 in vehicle plan view.

Therefore, the intake pipe 41 does not overlap the crankcase 11 in vehicle plan view.

In FIG. 14, the air cleaner 71 is indicated by a broken line. The throttle device 51 overlaps the air cleaner 71 in vehicle plan view. At least a part of the throttle device 51 overlaps the air cleaner 71 in vehicle plan view. For example, the entire throttle device 51 overlaps the air cleaner 71 in vehicle plan view.

The throttle valve 52 overlaps the air cleaner 71 in vehicle plan view. At least a part of the throttle valve 52 overlaps the air cleaner 71 in vehicle plan view. For example, the entire throttle valve 52 overlaps the air cleaner 71 in vehicle plan view.

The throttle body 54 overlaps the air cleaner 71 in vehicle plan view. At least a part of the throttle body 54 overlaps the air cleaner 71 in vehicle plan view. For example, the entire throttle body 54 overlaps the air cleaner 71 in vehicle plan view.

The gear box 55 overlaps the air cleaner 71 in vehicle plan view. At least a part of the gear box 55 overlaps the air cleaner 71 in vehicle plan view. For example, the entire gear box 55 overlaps the air cleaner 71 in vehicle plan view.

The motor 58 overlaps the air cleaner 71 in vehicle plan view. At least a part of the motor 58 overlaps the air cleaner 71 in vehicle plan view. For example, the entire motor 58 overlaps the air cleaner 71 in vehicle plan view.

The air cleaner 71 extends to a position more forward than the throttle device 51. The air cleaner 71 extends to a position more forward than the entire throttle device 51. The air cleaner 71 has a portion located more forward than the throttle device 51. Specifically, the air cleaner 71 has a portion located more forward than the entire throttle device 51. A part of the air cleaner 71 does not overlap the throttle device 51 in vehicle plan view. A part of the air cleaner 71 is disposed in front of the throttle device 51 in vehicle plan view. A part of the air cleaner 71 is disposed in front of the entire throttle device 51 in vehicle plan view.

The air cleaner 71 extends to a position more forward than the throttle valve 52. The air cleaner 71 extends to a position more forward than the entire throttle valve 52. The air cleaner 71 has a portion located more forward than the throttle valve 52. Specifically, the air cleaner 71 has a portion located more forward than the entire throttle valve 52. A part of the air cleaner 71 does not overlap the throttle valve 52 in vehicle plan view. A part of the air cleaner 71 is disposed in front of the throttle valve 52 in vehicle plan view. A part of the air cleaner 71 is disposed in front of the entire throttle valve 52 in vehicle plan view.

The air cleaner 71 extends to a position more forward than the throttle body 54. The air cleaner 71 extends to a position more forward than the entire throttle body 54. The air cleaner 71 has a portion located more forward than the throttle body 54. Specifically, the air cleaner 71 has a portion located more forward than the entire throttle body 54. A part of the air cleaner 71 does not overlap the throttle body 54 in vehicle plan view. A part of the air cleaner 71 is disposed in front of the throttle body 54 in vehicle plan view. A part of the air cleaner 71 is disposed in front of the entire throttle body 54 in vehicle plan view.

The air cleaner 71 extends to a position more forward than the gear box 55. The air cleaner 71 extends to a position more forward than the entire gear box 55. The air cleaner 71 has a portion located more forward than the gear box 55. Specifically, the air cleaner 71 has a portion located more forward than the entire gear box 55. A part of the air cleaner 71 does not overlap the gear box 55 in vehicle plan view. A part of the air cleaner 71 is disposed in front of the gear box 55 in vehicle plan view. A part of the air cleaner 71 is disposed in front of the entire gear box 55 in vehicle plan view.

The air cleaner 71 extends to a position more forward than the motor 58. The air cleaner 71 extends to a position more forward than the entire motor 58. The air cleaner 71 has a portion located more forward than the motor 58. Specifically, the air cleaner 71 has a portion located more forward than the entire motor 58. A part of the air cleaner 71 does not overlap the motor 58 in vehicle plan view. A part of the air cleaner 71 is disposed in front of the motor 58 in vehicle plan view. A part of the air cleaner 71 is disposed in front of the entire motor 58 in vehicle plan view.

The fuel pipe 63 extends from the first end 64 to the second end 65. The second end 65 is disposed more forward than the first end 64. The entire second end 65 is disposed more forward than the entire first end 64.

The fuel pipe 63 overlaps the seat 3 in vehicle plan view. At least a part of the fuel pipe 63 overlaps the seat 3 in vehicle plan view.

Specifically, the first end 64 overlaps the seat 3 in vehicle plan view. The entire first end 64 overlaps the seat 3 in vehicle plan view.

The first end 64 is disposed more rearward than the front end 3a of the seat 3. The entire first end 64 is disposed more rearward than the front end 3a.

The second end 65 does not overlap the seat 3 in vehicle plan view. The second end 65 is disposed more forward than the seat 3. The entire second end 65 is disposed more forward than the entire seat 3.

The fuel pipe 63 overlaps the engine 10 in vehicle plan view. At least a part of the fuel pipe 63 overlaps the engine 10 in vehicle plan view.

The first end 64 overlaps the engine 10 in vehicle plan view. At least a part of the first end 64 overlaps the engine 10 in vehicle plan view.

The first end 64 overlaps the head cover 15 in vehicle plan view. At least a part of the first end 64 overlaps the head cover 15 in vehicle plan view.

The second end 65 does not overlap the engine 10 in vehicle plan view. The second end 65 is disposed more forward than the engine 10. The entire second end 65 is disposed more forward than the entire engine 10.

The fuel pipe 63 overlaps the air cleaner 71 in vehicle plan view. At least a part of the fuel pipe 63 overlaps the air cleaner 71 in vehicle plan view.

The first end 64 overlaps the air cleaner 71 in vehicle plan view. The entire first end 64 overlaps the air cleaner 71 in vehicle plan view.

The second end 65 does not overlap the air cleaner 71 in vehicle plan view. The second end 65 is disposed more forward than the air cleaner 71. The entire second end 65 is disposed more forward than the entire air cleaner 71.

The fuel pipe 63 does not overlap the throttle device 51 in vehicle plan view.

The fuel pipe 63 does not overlap the throttle valve 52 in vehicle plan view. The fuel pipe 63 is disposed more forward than the throttle valve 52. The entire fuel pipe 63 is disposed more forward than the entire throttle valve 52.

The fuel pipe 63 does not overlap the throttle body 54 in vehicle plan view. The fuel pipe 63 is disposed in front of the throttle body 54. The entire fuel pipe 63 is disposed more forward than the entire throttle body 54.

The fuel pipe 63 does not overlap the gear box 55 in vehicle plan view. The fuel pipe 63 is disposed leftward of the gear box 55. The entire fuel pipe 63 is disposed more leftward than the entire gear box 55.

The fuel pipe 63 does not overlap the gear cover 57 in vehicle plan view. The fuel pipe 63 is disposed leftward of the gear cover 57. The entire fuel pipe 63 is disposed more leftward than the entire gear cover 57.

The fuel pipe 63 does not overlap the motor 58 in vehicle plan view. The fuel pipe 63 is disposed leftward of the motor 58. The entire fuel pipe 63 is disposed more leftward than the entire motor 58.

The fuel pipe 63 does not overlap the motor case 58c in vehicle plan view. The fuel pipe 63 is disposed lower than the motor case 58c. The entire fuel pipe 63 is disposed lower than the entire motor case 58c.

The first end 64 of the fuel pipe 63 does not overlap the throttle device 51 in vehicle plan view.

The first end 64 does not overlap the throttle valve 52 in vehicle plan view. The first end 64 is disposed more forward than the throttle valve 52. The entire first end 64 is disposed more forward than the entire throttle valve 52.

The first end 64 does not overlap the throttle body 54 in vehicle plan view. The first end 64 is disposed more forward than the throttle body 54. The entire first end 64 is disposed more forward than the entire throttle body 54.

The first end 64 does not overlap the gear box 55 in vehicle plan view. The first end 64 is disposed more leftward than the gear box 55. The entire first end 64 is disposed more leftward than the entire gear box 55.

The first end 64 does not overlap the gear cover 57 in vehicle plan view. The first end 64 is disposed leftward of the gear cover 57. The entire first end 64 is disposed more leftward than the entire gear cover 57.

The first end 64 does not overlap the motor 58 in vehicle plan view. The first end 64 is disposed more leftward than the motor 58. The entire first end 64 is disposed more leftward than the entire motor 58.

The first end 64 does not overlap the motor case 58c in vehicle plan view. The first end 64 is disposed more leftward than the motor case 58c. The entire first end 64 is disposed more leftward than the entire motor case 58c.

The second end 65 of the fuel pipe 63 does not overlap the throttle device 51 in vehicle plan view. The second end 65 is disposed in front of the throttle device 51. The entire second end 65 is disposed more forward than the entire throttle device 51.

The second end 65 does not overlap the throttle valve 52 in vehicle plan view. The second end 65 is disposed in front of the throttle valve 52. The entire second end 65 is disposed more forward than the entire throttle valve 52.

The second end 65 does not overlap the throttle body 54 in vehicle plan view. The second end 65 is disposed in front of the throttle body 54. The entire second end 65 is disposed more forward than the entire throttle body 54.

The second end 65 does not overlap the gear box 55 in vehicle plan view. The second end 65 is disposed in front of the gear box 55. The entire second end 65 is disposed more forward than the entire gear box 55.

The second end 65 does not overlap the motor 58 in vehicle plan view. The second end 65 is disposed in front of the motor 58. The entire second end 65 is disposed more forward than the entire motor 58.

Refer to FIG. 6. FIG. 6 illustrates the fuel injection device 61 by a broken line. The fuel injection device 61 overlaps the throttle device 51 in vehicle plan view.

Specifically, the fuel injection device 61 does not overlap the throttle valve 52 in vehicle plan view.

The fuel injection device 61 may have a portion overlapping the throttle body 54 in vehicle plan view. Alternatively, the fuel injection device 61 may not overlap the throttle body 54 in vehicle plan view.

The fuel injection device 61 has a portion disposed more forward than the entire throttle body 54. The fuel injection device 61 does not have a portion disposed more rearward than the entire throttle body 54. The fuel injection device 61 does not have a portion disposed more rightward than the entire throttle body 54. The fuel injection device 61 does not have a portion disposed more leftward than the entire throttle body 54.

The fuel injection device 61 does not overlap the gear box 55 in vehicle plan view. The fuel injection device 61 is disposed leftward of the gear box 55. At least a part of the fuel injection device 61 is disposed more leftward than the entire gear box 55. For example, the entire fuel injection device 61 is disposed more leftward than the entire gear box 55.

The fuel injection device 61 does not overlap the gear cover 57 in vehicle plan view. The fuel injection device 61 is disposed leftward of the gear cover 57. At least a part of the fuel injection device 61 is disposed more leftward than the entire gear cover 57. For example, the entire fuel injection device 61 is disposed more leftward than the entire gear cover 57.

The fuel injection device 61 overlaps the motor 58 in vehicle plan view. At least a part of the fuel injection device 61 overlaps the motor 58 in vehicle plan view.

The fuel injection device 61 overlaps the motor body 58a in vehicle plan view. At least a part of the fuel injection device 61 overlaps the motor body 58a in vehicle plan view.

The fuel injection device 61 overlaps the motor case 58c in vehicle plan view. At least a part of the fuel injection device 61 overlaps the motor case 58c in vehicle plan view.

The joint 67 is disposed leftward of the throttle device 51. At least a part of the joint 67 is disposed leftward of the throttle device 51. The joint 67 may have a portion overlapping the throttle device 51 in vehicle plan view.

The joint 67 is disposed more leftward than the throttle valve 52. At least a part of the joint 67 is disposed more leftward than the throttle valve 52. The joint 67 does not overlap the throttle valve 52 in vehicle plan view.

The joint 67 is disposed in front of the throttle valve 52. The entire joint 67 is disposed more forward than the entire throttle valve 52.

The joint 67 is disposed more leftward than the throttle body 54. At least a part of the joint 67 is disposed more leftward than the throttle body 54. The joint 67 does not overlap the throttle body 54 in vehicle plan view.

The joint 67 is disposed more leftward than the gear box 55. The entire joint 67 is disposed more leftward than the entire gear box 55. The joint 67 does not overlap the gear box 55 in vehicle plan view.

The joint 67 is disposed more leftward than the gear cover 57. The entire joint 67 is disposed more leftward than the entire gear cover 57. The joint 67 does not overlap the gear cover 57 in vehicle plan view.

The joint 67 is disposed more leftward than the motor 58. At least a part of the joint 67 is disposed leftward of the motor 58. The joint 67 may have a portion overlapping the motor 58 in vehicle plan view.

For example, the joint 67 has a first portion and a second portion. The first portion of the joint 67 overlaps the motor 58 in vehicle plan view. The second portion of the joint 67 does not overlap the motor 58 in vehicle plan view. The second portion of the joint 67 is disposed leftward of the motor 58. The second portion of the joint 67 is disposed more leftward than the entire motor 58.

The joint 67 is disposed more leftward than the motor case 58c. At least a part of the joint 67 is disposed leftward of the motor case 58c. The joint 67 may have a portion overlapping the motor case 58c in vehicle plan view.

The area located rightward of the fuel injection device 61 is referred to as a "right area AR". The area located leftward of the fuel injection device 61 is referred to as a "left area AL".

FIG. 6 illustrates a boundary F. The boundary F is a virtual plane indicating the boundary between the right area AR and the left area AL. The boundary F passes through the fuel injection device 61. The boundary F is perpendicular to the transverse direction Y. The right area AR is located rightward of the boundary F. The left area AL is located leftward of the boundary F.

The gear box 55 is disposed in the right area AR. At least a part of the gear box 55 is disposed in the right area AR. For example, the entire gear box 55 is disposed in the right area AR.

The gear box 55 is disposed rightward of the boundary F. For example, the entire gear box 55 is disposed rightward of the boundary F.

The gear cover 57 is disposed in the right area AR. The entire gear cover 57 is disposed in the right area AR.

The gear cover 57 is disposed rightward of the boundary F. The entire gear cover 57 is disposed rightward of the boundary F.

The first end 64 of the fuel pipe 63 is disposed in the left area AL. At least a part of the first end 64 of the fuel pipe 63 is disposed in the left area AL. For example, the entire first end 64 is disposed in the left area AL.

The first end 64 is disposed leftward of the boundary F. For example, the entire first end 64 is disposed leftward of the boundary F.

The joint 67 is disposed in the left area AL. At least a part of the joint 67 is disposed in the left area AL.

The joint 67 is disposed leftward of the boundary F. At least a part of the joint 67 is disposed leftward of the boundary F.

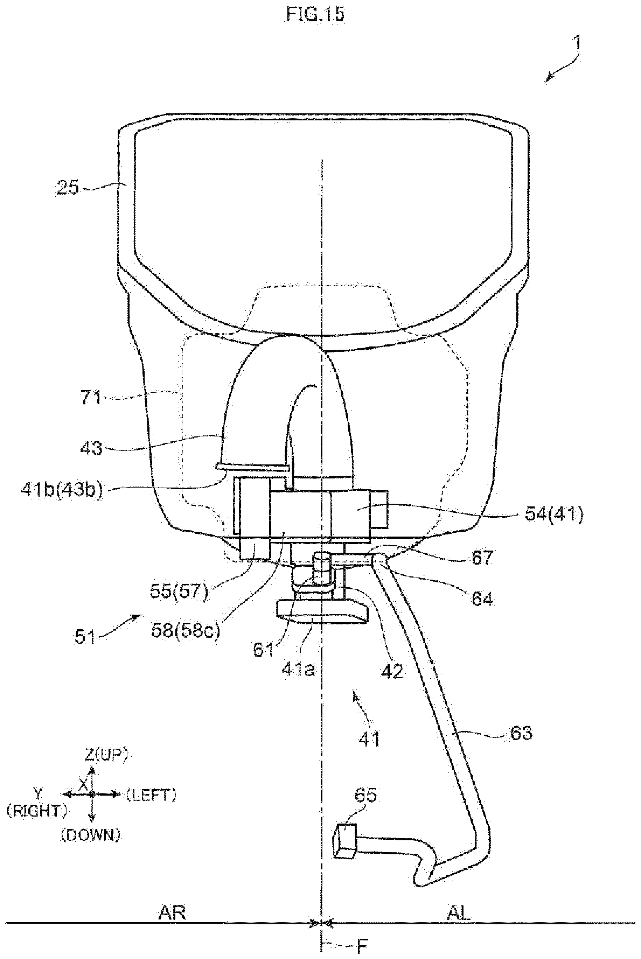

FIG. 15 is a front view of the straddled vehicle 1. The intake pipe 41 overlaps the storage box 25 in vehicle front view. At least a part of the intake pipe 41 overlaps the storage box 25 in vehicle front view.

The first pipe 42 overlaps the storage box 25 in vehicle front view. At least a part of the first pipe 42 overlaps the storage box 25 in vehicle front view.

The second pipe 43 overlaps the storage box 25 in vehicle front view. At least a part of the second pipe 43 overlaps the storage box 25 in vehicle front view. For example, the entire second pipe 43 overlaps the storage box 25 in vehicle front view.

In FIG. 15, the air cleaner 71 is indicated by a broken line. The air cleaner 71 overlaps the storage box 25 in vehicle front view. At least a part of the air cleaner 71 overlaps the storage box 25 in vehicle front view.

The intake pipe 41 overlaps the air cleaner 71 in vehicle front view. At least a part of the intake pipe 41 overlaps the air cleaner 71 in vehicle front view.

The first pipe 42 overlaps the air cleaner 71 in vehicle front view. At least a part of the first pipe 42 overlaps the air cleaner 71 in vehicle front view.

The second pipe 43 overlaps the air cleaner 71 in vehicle front view. At least a part of the second pipe 43 overlaps the air cleaner 71 in vehicle front view. For example, the entire second pipe 43 overlaps the air cleaner 71 in vehicle front view.

The throttle device 51 overlaps the storage box 25 in vehicle front view. At least a part of the throttle device 51 overlaps the storage box 25 in vehicle front view.

The throttle body 54 overlaps the storage box 25 in vehicle front view. At least a part of the throttle body 54 overlaps the storage box 25 in vehicle front view.

FIG. 15 does not illustrate the throttle valve 52. The throttle valve 52 is disposed in the throttle body 54. Therefore, the throttle valve 52 overlaps the storage box 25 in vehicle front view. At least a part of the throttle valve 52 overlaps the storage box 25 in vehicle front view.

The gear box 55 overlaps the storage box 25 in vehicle front view. At least a part of the gear box 55 overlaps the storage box 25 in vehicle front view.

The motor 58 overlaps the storage box 25 in vehicle front view. At least a part of the motor 58 overlaps the storage box 25 in vehicle front view.

At least a part of the throttle device 51 overlaps the air cleaner 71 in vehicle front view.

At least a part of the throttle body 54 overlaps the air cleaner 71 in vehicle front view.

The throttle valve 52 is disposed in the throttle body 54. Therefore, at least a part of the throttle valve 52 overlaps the air cleaner 71 in vehicle front view.

At least a part of the gear box 55 overlaps the air cleaner 71 in vehicle front view.

At least a part of the motor 58 overlaps the air cleaner 71 in vehicle front view.

The fuel pipe 63 is disposed in the left area AL. At least a part of the fuel pipe 63 is disposed in the left area AL. For example, the entire fuel pipe 63 is disposed in the left area AL.

The second end 65 is disposed in the left area AL. The entire second end 65 is disposed in the left area AL.

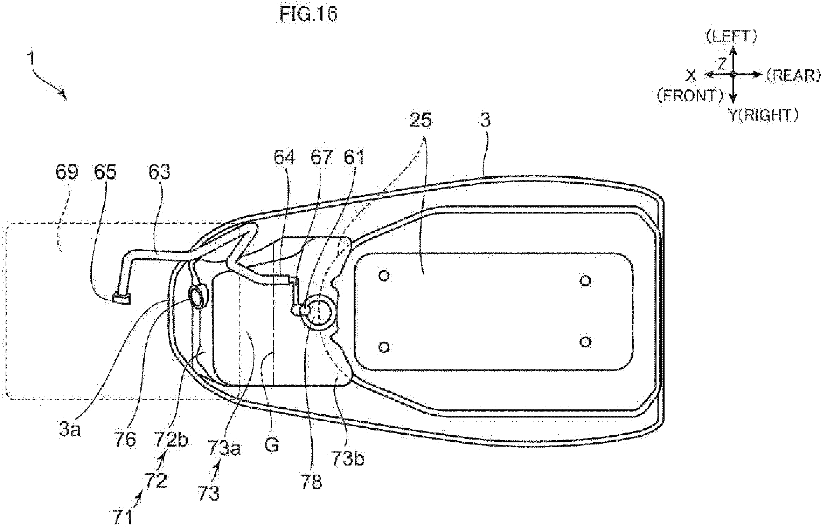

FIG. 16 is a bottom view of the straddled vehicle 1. FIG. 16 does not illustrate the engine 10 and the intake pipe 41. FIG. 16 clearly illustrates the seat 3, the storage box 25, the air cleaner 71, the fuel injection device 61, and the fuel pipe 63. In FIG. 16, the fuel tank 69 is indicated by a broken line.

The fuel injection device 61 overlaps the seat 3 in vehicle bottom view. At least a part of the fuel injection device 61 overlaps the seat 3 in vehicle bottom view. For example, the entire fuel injection device 61 overlaps the seat 3 in vehicle bottom view.

The fuel injection device 61 is disposed in front of the storage box 25. At least a part of the fuel injection device 61 is disposed more forward than the entire storage box 25. For example, the entire fuel injection device 61 is disposed more forward than the entire storage box 25. The fuel injection device 61 does not overlap the storage box 25 in vehicle bottom view.

The fuel injection device 61 is disposed behind the fuel tank 69. At least a part of the fuel injection device 61 is disposed more rearward than the entire fuel tank 69. For example, the entire fuel injection device 61 is disposed more rearward than the entire fuel tank 69. The fuel injection device 61 does not overlap the fuel tank 69 in vehicle bottom view.

The fuel injection device 61 overlaps the air cleaner 71 in vehicle bottom view. At least a part of the fuel injection device 61 overlaps the air cleaner 71 in vehicle bottom view. For example, the entire fuel injection device 61 overlaps the air cleaner 71 in vehicle bottom view.

The joint 67 overlaps the seat 3 in vehicle bottom view. At least a part of the joint 67 overlaps the seat 3 in vehicle bottom view. For example, the entire joint 67 overlaps the seat 3 in vehicle bottom view.

The joint 67 is disposed in front of the storage box 25. At least a part of the joint 67 is disposed more forward than the entire storage box 25. For example, the entire joint 67 is disposed more forward than the entire storage box 25. The joint 67 does not overlap the storage box 25 in vehicle bottom view.

The joint 67 is disposed behind the fuel tank 69. At least a part of the joint 67 is disposed more rearward than the entire fuel tank 69. For example, the entire joint 67 is disposed more rearward than the entire fuel tank 69. The joint 67 does not overlap the fuel tank 69 in vehicle bottom view.

The joint 67 overlaps the air cleaner 71 in vehicle bottom view. At least a part of the joint 67 overlaps the air cleaner 71 in vehicle bottom view. For example, the entire joint 67 overlaps the air cleaner 71 in vehicle bottom view.

The first end 64 of the fuel pipe 63 is disposed in front of the storage box 25. At least a part of the first end 64 is disposed more forward than the entire storage box 25. For example, the entire first end 64 is disposed more forward than the entire storage box 25. The first end 64 does not overlap the storage box 25 in vehicle bottom view.

The first end 64 is disposed behind the fuel tank 69. At least a part of the first end 64 is disposed more rearward than the entire fuel tank 69. For example, the entire first end 64 is disposed more rearward than the entire fuel tank 69. The first end 64 does not overlap the fuel tank 69 in vehicle bottom view.

The first end 64 overlaps the air cleaner 71 in vehicle bottom view. At least a part of the first end 64 overlaps the air cleaner 71 in vehicle bottom view. For example, the entire first end 64 overlaps the air cleaner 71 in vehicle bottom view.

The second end 65 of the fuel pipe 63 overlaps the fuel tank 69 in vehicle bottom view. At least a part of the second end 65 overlaps the fuel tank 69 in vehicle bottom view. For example, the entire second end 65 overlaps the fuel tank 69 in vehicle bottom view.

The fuel pipe 63 overlaps the air cleaner 71, the seat 3, and the fuel tank 69 in vehicle bottom view. The entire fuel pipe 63 overlaps at least one of the air cleaner 71, the seat 3, and the fuel tank 69 in vehicle bottom view.

The intake port 76 overlaps the seat 3 in vehicle bottom view. At least a part of the intake port 76 overlaps the seat 3 in vehicle bottom view. For example, the entire intake port 76 overlaps the seat 3 in vehicle bottom view.

The intake port 76 is disposed in front of the storage box 25. At least a part of the intake port 76 is disposed more forward than the entire storage box 25. For example, the entire intake port 76 is disposed more forward than the entire storage box 25. The intake port 76 does not overlap the storage box 25 in vehicle bottom view.

The intake port 76 overlaps the fuel tank 69 in vehicle bottom view. The entire intake port 76 overlaps the fuel tank 69 in vehicle bottom view.

The intake port 76 is disposed in front of the fuel injection device 61. At least a part of the intake port 76 is disposed more forward than the entire fuel injection device 61. For example, the entire intake port 76 is disposed more forward than the entire fuel injection device 61. The intake port 76 does not overlap the fuel injection device 61 in vehicle bottom view.

The intake port 76 is disposed in front of the joint 67. At least a part of the intake port 76 is disposed more forward than the entire joint 67. For example, the entire intake port 76 is disposed more forward than the entire joint 67. The intake port 76 does not overlap the joint 67 in vehicle bottom view.

The intake port 76 is disposed in front of the first end 64 of the fuel pipe 63. At least a part of the intake port 76 is disposed more forward than the entire first end 64. For example, the entire intake port 76 is disposed more forward than the entire first end 64. The intake port 76 does not overlap the first end 64 in vehicle bottom view.

The intake port 76 is disposed behind the second end 65 of the fuel pipe 63. At least a part of the intake port 76 is disposed more rearward than the entire second end 65. For example, the entire intake port 76 is disposed more rearward than the entire second end 65. The intake port 76 does not overlap the second end 65 in vehicle bottom view.

The fuel pipe 63 passes through a position leftward of the intake port 76 and extends from a position more rearward than the intake port 76 to a position more forward than the intake port 76. The fuel pipe 63 does not overlap the intake port 76 in vehicle bottom view.

The air cleaner 71 has a bottom 73. FIG. 16 clearly illustrates the bottom 73. The bottom 73 is a part of the air cleaner case 72. The bottom 73 is a part of the lower portion 72b.

The air cleaner 71 forms a through hole 78. The through hole 78 is disposed in the bottom 73. The entire through hole 78 is disposed in the bottom 73. The through hole 78 communicates with the internal space 74. The through hole 78 communicates with the downstream space 74b.

The bottom 73 has a front portion 73a and a rear portion 73b. The rear portion 73b is disposed behind the front portion 73a. The front portion 73a is, for example, a portion of the bottom 73 located in front of the center of the air cleaner 71 in the longitudinal direction X. The rear portion 73b is, for example, a portion of the bottom 73 located behind the center of the air cleaner 71 in the longitudinal direction X.

FIG. 16 illustrates a boundary G. The boundary G is an imaginary line indicating the boundary between the front portion 73a and the rear portion 73b. The boundary G passes through the center of the air cleaner 71 in the longitudinal direction X. The boundary G extends, for example, in the transverse direction Y. The front portion 73a is located in front of the boundary G. The rear portion 73b is located behind the boundary G.

The through hole 78 is disposed in the rear portion 73b. The entire through hole 78 is disposed in the rear portion 73b.

The through hole 78 is disposed behind the boundary G. The entire through hole 78 is disposed behind the boundary G.

The through hole 78 overlaps the seat 3 in vehicle bottom view. The entire through hole 78 overlaps the seat 3 in vehicle bottom view.

The through hole 78 is disposed in front of the storage box 25. At least a part of the through hole 78 is disposed more forward than the entire storage box 25. The through hole 78 may have a portion overlapping with the storage box 25 in vehicle bottom view. The through hole 78 does not have a portion disposed more rearward than the entire storage box 25.

The through hole 78 is disposed more rearward than the fuel tank 69. At least a part of the through hole 78 is disposed more rearward than the entire fuel tank 69. For example, the entire through hole 78 is disposed more rearward than the entire fuel tank 69. The through hole 78 does not overlap the fuel tank 69 in vehicle bottom view.

The through hole 78 is disposed more rearward than the fuel injection device 61. At least a part of the through hole 78 is disposed more rearward than the entire fuel injection device 61. The through hole 78 may have a portion overlapping the fuel injection device 61 in vehicle bottom view.

The through hole 78 is disposed more rearward than the joint 67. At least a part of the through hole 78 is disposed more rearward than the entire joint 67. For example, the entire through hole 78 is disposed more rearward than the entire joint 67. The through hole 78 does not overlap the joint 67 in vehicle bottom view.

The through hole 78 is disposed more rearward than the fuel pipe 63. At least a part of the through hole 78 is disposed more rearward than the entire fuel pipe 63. For example, the entire through hole 78 is disposed more rearward than the entire fuel pipe 63. The through hole 78 does not overlap the first end 64 in vehicle bottom view.

The through hole 78 is disposed more rearward than the first end 64 of the fuel pipe 63. At least a part of the through hole 78 is disposed more rearward than the entire first end 64. For example, the entire through hole 78 is disposed more rearward than the entire first end 64. The through hole 78 does not overlap the first end 64 in vehicle bottom view.

The through hole 78 is disposed rightward of the first end 64. At least a part of the through hole 78 is disposed more rightward than the entire first end 64. For example, the entire through hole 78 is disposed more rightward than the entire first end 64.

The through hole 78 is disposed more rearward than the second end 65 of the fuel pipe 63. At least a part of the through hole 78 is disposed more rearward than the entire second end 65. For example, the entire through hole 78 is disposed more rearward than the entire second end 65. The through hole 78 does not overlap the second end 65 in vehicle bottom view.

The through hole 78 is disposed more rearward than the intake port 76. At least a part of the through hole 78 is disposed more rearward than the entire intake port 76. For example, the entire through hole 78 is disposed more rearward than the entire intake port 76. The through hole 78 does not overlap the intake port 76 in vehicle bottom view.

Although the second pipe 43 is not illustrated in FIG. 16, the second pipe 43 is inserted into the through hole 78. Therefore, the second pipe 43 penetrates the bottom 73. The second pipe 43 penetrates the rear portion 73b of the bottom 73.

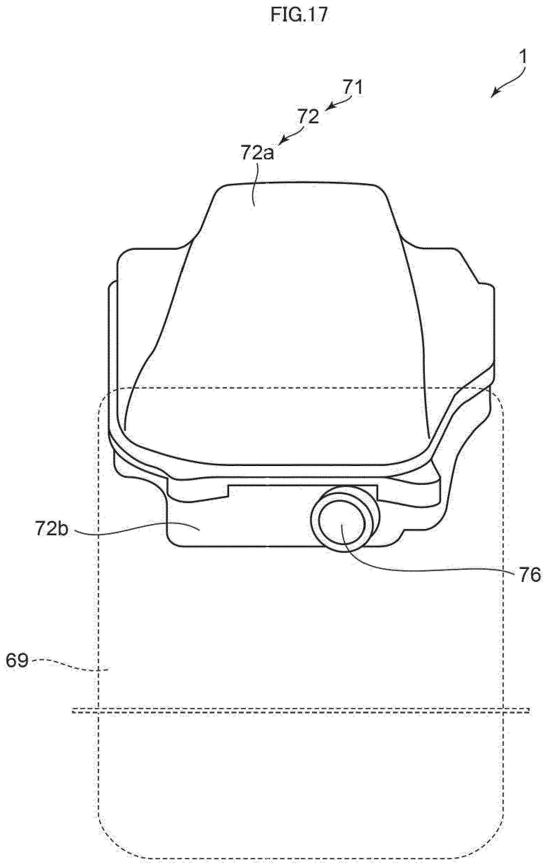

FIG. 17 is a front view of the air cleaner 71 and the fuel tank 69. In FIG. 17, the fuel tank 69 is indicated by a broken line. The air cleaner 71 overlaps the fuel tank 69 in vehicle front view. A part of the air cleaner 71 overlaps the fuel tank 69 in vehicle front view.

The air cleaner case 72 overlaps the fuel tank 69 in vehicle front view. A part of the air cleaner case 72 overlaps the fuel tank 69 in vehicle front view.

The upper portion 72a overlaps the fuel tank 69 in vehicle front view. A part of the upper portion 72a overlaps the fuel tank 69 in vehicle front view.

The lower portion 72b overlaps the fuel tank 69 in vehicle front view. A part of the lower portion 72b overlaps the fuel tank 69 in vehicle front view.

The intake port 76 overlaps the fuel tank 69 in vehicle front view. At least a part of the intake port 76 overlaps the fuel tank 69 in vehicle front view. For example, the entire intake port 76 overlaps the fuel tank 69 in vehicle front view.

### 10. Effects of Embodiments

Effects of the embodiments will be described.

The straddled vehicle 1 includes an engine 10, an intake pipe 41, a throttle valve 52, a gear box 55, a motor 58, a fuel injection device 61, and a fuel pipe 63. The intake pipe 41 is connected to the engine 10. The throttle valve 52 is provided in the intake pipe 41. The gear box 55 is coupled to the throttle valve 52. The motor 58 is coupled to the gear box 55. The motor 58 drives the throttle valve 52 via the gear box 55. The fuel injection device 61 is attached to a downstream portion of the intake pipe 41. Specifically, the fuel injection device 61 is attached to a portion of the intake pipe 41 from the throttle valve 52 to the engine 10. The fuel pipe 63 has a first end 64. The first end 64 is connected to the fuel injection device 61.

The gear box 55 overlaps the first end 64 in vehicle side view. As described above, the gear box 55 is coupled to the throttle valve 52. The first end 64 is connected to the fuel injection device 61. Therefore, it is easy to dispose the throttle valve 52 at a position close to the fuel injection device 61. In other words, it is easy to shorten the portion of the intake pipe 41 from the throttle valve 52 to the fuel injection device 61. The portion of the intake pipe 41 from the throttle valve 52 to the fuel injection device 61 is included in the downstream portion. Therefore, it is easy to shorten the downstream portion.

The right area AR is an area located rightward of the fuel injection device 61. The left area AL is an area located leftward of the fuel injection device 61. The gear box 55 is disposed in one of the right area AR and the left area AL. The first end 64 is disposed in the other of the right area AR and the left area AL. Specifically, the gear box 55 is disposed in the right area AR. The first end 64 is disposed in the left area AL. Thus, the gear box 55 and the first end 64 do not interfere with each other. Therefore, it is easy to prevent interference between the gear box 55 and the fuel pipe 63.

In summary, it is easy for the straddled vehicle 1 to shorten the downstream portion of the intake pipe 41. Furthermore, it is easy for the straddled vehicle 1 to prevent interference between the gear box 55 and the fuel pipe 63.

As described above, in the straddled vehicle 1, the downstream portion of the intake pipe 41 is short. Thus, the downstream portion has a small volume. More particularly, the downstream portion has air flow path with a small volume. Therefore, for example, it is easy to quickly change the amount of intake air of the engine 10 by the throttle valve 52. It is easy to reduce the time delay between the change in the opening degree of the throttle valve 52 and the change in the amount of intake air of the engine 10.

In the straddled vehicle 1, the downstream portion of the intake pipe 41 is short. Thus, the downstream portion has a small volume. Therefore, for example, it is difficult for the gas to return from the engine 10 to the downstream portion. The unburned gas or the exhaust gas hardly flows back from the combustion chamber to the downstream portion. Therefore, the fuel consumption of the engine 10 is hardly reduced. Furthermore, it is easy to purify the exhaust gas of the engine 10.

The entire fuel pipe 63 is disposed in the left area AL. Therefore, it is easier to prevent interference between the gear box 55 and the fuel pipe 63.

The entire gear box 55 is disposed in the right area AR. Therefore, it is easier to prevent interference between the gear box 55 and the fuel pipe 63.

The gear box 55 overlaps the fuel injection device 61 in vehicle side view. Therefore, it is easier to dispose the throttle valve 52 at a position close to the fuel injection device 61. Therefore, it is easier to shorten the downstream portion of the intake pipe 41.

The intake pipe 41 extends upward from the engine 10. The fuel injection device 61 is disposed above the engine 10. The throttle valve 52 is disposed higher than the fuel injection device 61. Therefore, it is easy to attach the fuel injection device 61 to the downstream portion of the intake pipe 41.

The throttle valve 52 is disposed at the same height position as the gear box 55. Therefore, it is easier to dispose the throttle valve 52 at a position close to the fuel injection device 61.

The fuel injection device 61 extends forward and upward from the intake pipe 41. The gear box 55 extends forward from the throttle valve 52. Therefore, it is easy for the gear box 55 to overlap the first end 64 in vehicle side view.

The first end 64 of the fuel pipe 63 extends forward from the fuel injection device 61. Therefore, it is easier for the gear box 55 to overlap the first end 64 in vehicle side view.

The intake pipe 41 includes a throttle body 54. The throttle body 54 accommodates the throttle valve 52. Therefore, it is easy to provide the throttle valve 52 in the intake pipe 41. The intake pipe 41 includes a first pipe 42. The first pipe 42 extends from the engine 10 to the throttle body 54. Therefore, the first pipe 42 is included in the downstream portion. The fuel injection device 61 is attached to the first pipe 42. Therefore, it is easy to attach the fuel injection device 61 to the downstream portion.

The first pipe 42 extends upward and rearward from the engine 10. Therefore, it is easy to lower the height position of the throttle body 54. In other words, it is easy to reduce the distance in the up-down direction Z between the engine 10 and the throttle body 54.

The first pipe 42 extends upward and rearward from the engine 10. Therefore, it is easy for the fuel injection device 61 to extend forward and upward from the first pipe 42.

The throttle body 54 extends upward from the first pipe 42. Therefore, it is easier for the gear box 55 to overlap the first end 64 in vehicle side view.

The throttle body 54 extends upward from the first pipe 42. Therefore, it is easy for the gear box 55 to extend forward from the throttle valve 52.

The engine 10 has an intake passage 17 connected to the first pipe 42. The first pipe 42 extends upward and rearward from the intake passage 17. The intake passage 17 extends downward and rearward from the first pipe 42. Therefore, the air smoothly flows from the first pipe 42 to the intake passage 17.

The motor 58 is disposed in front of the throttle valve 52. Therefore, it is easy to dispose the motor 58 at a position close to the throttle valve 52. Therefore, it is easy for the motor 58 to drive the throttle valve 52.

The motor 58 is disposed higher than the engine 10. Therefore, the motor 58 and the engine 10 do not interfere with each other.

The motor 58 is disposed higher than the first end 64 of the fuel pipe 63. Therefore, the motor 58 and the first end 64 do not interfere with each other.

The motor 58 is disposed higher than the fuel injection device 61. Therefore, the motor 58 and the fuel injection device 61 do not interfere with each other.

The motor 58 overlaps the fuel injection device 61 in vehicle plan view. Therefore, it is easy to dispose the motor 58 at a position close to the fuel injection device 61. As described above, the motor 58 is coupled to the gear box 55. The fuel injection device 61 is connected to the first end 64. Therefore, it is easy to dispose the gear box 55 at a position close to the first end 64. Therefore, it is easy for the gear box 55 to overlap the first end 64 in vehicle side view.

The straddled vehicle 1 includes a seat 3 and a storage box 25. The storage box 25 is disposed below the seat 3. The intake pipe 41 is disposed in front of the storage box 25. Therefore, the intake pipe 41 and the storage box 25 do not interfere with each other.

The fuel injection device 61 extends forward and upward from the intake pipe 41. The intake pipe 41 is disposed in front of the storage box 25. Therefore, the fuel injection device 61 is disposed in front of the storage box 25. Therefore, the fuel injection device 61 and the storage box 25 do not interfere with each other.

The gear box 55 extends forward from the throttle valve 52. The throttle valve 52 is provided in the intake pipe 41. The intake pipe 41 is disposed in front of the storage box 25. Thus, the gear box 55 is disposed in front of the storage box 25. Thus, the gear box 55 and storage box 25 do not interfere with each other.

The motor 58 is disposed in front of the storage box 25. Therefore, the motor 58 and the storage box 25 do not interfere with each other.

The motor 58 is disposed in front of the throttle valve 52. The throttle valve 52 is provided in the intake pipe 41. The intake pipe 41 is disposed in front of the storage box 25. Therefore, the motor 58 is disposed in front of the storage box 25. Therefore, the motor 58 and the storage box 25 do not interfere with each other.

The intake pipe 41 is disposed below the seat 3. Therefore, the intake pipe 41 and the seat 3 do not interfere with each other.

The motor 58 is disposed below the seat 3. Therefore, the motor 58 and the seat 3 do not interfere with each other.

The straddled vehicle 1 includes an air cleaner 71. The air cleaner 71 is connected to the intake pipe 41. The motor 58 is disposed below the air cleaner 71. The motor 58 and the air cleaner 71 thus do not interfere with each other.

The straddled vehicle 1 includes a vehicle body frame 30, an engine 10, an intake pipe 41, an air cleaner 71, a seat 3, and a storage box 25. The engine 10 is fixed to the vehicle body frame 30. The air cleaner 71 is connected to the intake pipe 41. The seat 3 is disposed above the engine 10. The storage box 25 is disposed below the seat 3. The engine 10 includes a cylinder head 14. The cylinder head 14 is connected to the intake pipe 41.

At least a part of the cylinder head 14 overlaps the seat 3 in vehicle plan view. The air cleaner 71 is disposed above the cylinder head 14, below the seat 3, and in front of the storage box 25. Here, the cylinder head 14 is relatively small. Therefore, the space above the cylinder head 14, below the seat 3, and in front of the storage box 25 is relatively large. Accordingly, it is easy to properly install the air cleaner 71. For example, it is easy to increase the size of the air cleaner 71.

As described above, the straddled vehicle 1 allows appropriate installation of the air cleaner 71.

The entire cylinder head 14 overlaps the seat 3 in vehicle plan view. Therefore, the space above the cylinder head 14, below the seat 3, and in front of the storage box 25 is still larger. Accordingly, it is easier to properly install the air cleaner 71.

The entire engine 10 is disposed more rearward than the front end 3a of the seat 3. Therefore, the space above the cylinder head 14, below the seat 3, and in front of the storage box 25 is still larger. Accordingly, it is easier to properly install the air cleaner 71.

The air cleaner 71 overlaps at least a part of the cylinder head 14 in vehicle plan view. Therefore, it is easy to dispose the air cleaner 71 above the cylinder head 14.

The air cleaner 71 has a portion located more forward than the entire cylinder head 14. Accordingly, it is easier to properly install the air cleaner 71.

At least a part of the air cleaner 71 overlaps the seat 3 in vehicle plan view. Accordingly, it is easy to dispose the air cleaner 71 below the seat 3.

The entire air cleaner 71 overlaps the seat 3 in vehicle plan view. Accordingly, it is easy to dispose the air cleaner 71 below the seat 3.

At least a part of the air cleaner 71 overlaps the storage box 25 in vehicle front view. Therefore, it is easy to dispose the air cleaner 71 in front of the storage box 25.

The air cleaner 71 has a portion located more forward than the entire engine 10. Accordingly, it is easier to properly install the air cleaner 71.

The air cleaner 71 has a portion located more forward than the entire intake pipe 41. Accordingly, it is easier to properly install the air cleaner 71.

The intake pipe 41 extends upward from the cylinder head 14. As described above, the air cleaner 71 is disposed above the cylinder head 14. Accordingly, it is easy to connect the intake pipe 41 to the air cleaner 71.

The intake pipe 41 is disposed above the cylinder head 14, below the air cleaner 71, and in front of the storage box 25. Therefore, it is easy to connect the intake pipe 41 to the cylinder head 14. It is easy to connect the intake pipe 41 to the air cleaner 71.

At least a part of the intake pipe 41 overlaps the cylinder head 14 in vehicle plan view. Therefore, it is easy to dispose the intake pipe 41 above the cylinder head 14. Therefore, it is easier to connect the intake pipe 41 to the cylinder head 14.

At least a part of the intake pipe 41 overlaps the air cleaner 71 in vehicle plan view. Accordingly, it is easy to dispose the intake pipe 41 below the air cleaner 71. Accordingly, it is easier to connect the intake pipe 41 to the air cleaner 71.

At least a part of the intake pipe 41 overlaps the storage box 25 in vehicle front view. Therefore, it is easy to dispose the intake pipe 41 in front of the storage box 25.

The intake pipe 41 is disposed below the seat 3. Accordingly, it is easy to connect the intake pipe 41 to the air cleaner 71.

At least a part of the intake pipe 41 overlaps the seat 3 in vehicle plan view. Therefore, it is easy to dispose the intake pipe 41 below the seat 3. Accordingly, it is easier to connect the intake pipe 41 to the air cleaner 71.

The intake pipe 41 includes the throttle body 54 and a first pipe 42. The first pipe 42 extends from the engine 10 to the throttle body 54. Therefore, it is easy to connect the intake pipe 41 to the cylinder head 14.

The first pipe 42 extends from the cylinder head 14 to the throttle body 54. Therefore, it is easy to connect the intake pipe 41 to the cylinder head 14.

The throttle body 54 is disposed above the cylinder head 14. The throttle body 54 overlaps the cylinder head 14 in vehicle plan view. Therefore, it is easy for the first pipe 42 to extend from the cylinder head 14 to the throttle body 54.

The intake pipe 41 includes a second pipe 43. The second pipe 43 extends from the throttle body 54 to the air cleaner 71. Accordingly, it is easy to connect the intake pipe 41 to the air cleaner 71.

The throttle body 54 is disposed below the air cleaner 71. The throttle body 54 overlaps the air cleaner 71 in vehicle plan view. Therefore, it is easy for the second pipe 43 to extend from the throttle body 54 to the air cleaner 71.

The second pipe 43 penetrates the bottom 73 of the air cleaner 71. The second pipe 43 includes an exterior portion 44 and an interior portion 45. The exterior portion 44 is a portion of the second pipe 43 located outside the air cleaner 71. The interior portion 45 is a portion of the second pipe 43 located in the air cleaner 71. The interior portion 45 is longer than the exterior portion 44. Therefore, the second pipe 43 is not excessively short. In other words, it is easy for the second pipe 43 to have an appropriate length. On the other hand, the exterior portion 44 is shorter than the interior portion 45. Accordingly, the air cleaner 71 is disposed at a position close to the throttle body 54. Therefore, it is easy to downsize the entirety of the throttle body 54, the second pipe 43, and the air cleaner 71. For example, it is easy to reduce the length of the entirety of the throttle body 54, the second pipe 43, and the air cleaner 71 in the up-down direction Z. In summary, the entirety of the throttle body 54, the second pipe 43, and the air cleaner 71 is compact while the second pipe 43 has an appropriate length.

As described above, it is easy for the second pipe 43 to have an appropriate length. Therefore, for example, it is easy to improve the output of the engine 10. It is easy to improve the torque characteristics of the engine 10.

The interior portion 45 curves forward in the air cleaner 71. For this reason, it is easy to make the interior portion 45 longer than the exterior portion 44.

The second pipe 43 penetrates the rear portion 73b of the bottom 73 of the air cleaner 71. Therefore, it is easy to curve the interior portion 45 forward in the air cleaner 71. Thus, it is easier to make the interior portion 45 longer than the exterior portion 44.

The first pipe 42 extends upward and rearward from the cylinder head 14. Therefore, the first pipe 42 shifts the throttle body 54 and the exterior portion 44 rearward. For example, the throttle body 54 and the exterior portion 44 are disposed more rearward than the first end 41a of the intake pipe 41. Further, the throttle body 54 extends upward from the first pipe 42. The exterior portion 44 extends upward from the throttle body 54. Accordingly, the second pipe 43 easily penetrates the rear portion 73b of the bottom 73 of the air cleaner 71.

The air cleaner 71 has an intake port 76 for taking in air. The intake port 76 is disposed more forward than the cylinder head 14. Therefore, it is difficult for the air warmed by the engine 10 to reach the intake port 76. Therefore, it is difficult for the intake port 76 to take in the air warmed by the engine 10. As a result, the temperature of the air taken in by the intake port 76 is relatively low. In other words, the temperature of the air introduced into the air cleaner 71 by the intake port 76 is relatively low.

The intake port 76 is disposed at a front part of the air cleaner 71. Therefore, it is easy to dispose the intake port 76 more forward than the cylinder head 14.

The intake port 76 takes in air in front of the air cleaner 71. Here, it is difficult for the air warmed by the engine 10 to reach the area in front of the air cleaner 71. Therefore, it is difficult for the intake port 76 to take in the air warmed by the engine 10. As a result, it is easy for the intake port 76 to take in air having a relatively low temperature. In other words, it is easy for the intake port 76 to introduce air having a relatively low temperature into the air cleaner 71.

The straddled vehicle 1 includes a fuel tank 69. The fuel tank 69 is disposed in front of the air cleaner 71. The intake port 76 overlaps the fuel tank 69 in vehicle front view. Therefore, the fuel tank 69 prevents water, dust, or dirt from entering the intake port 76. Therefore, it is easy for the intake port 76 to take in clean air. Even if the structure of the intake port 76 is simple, it is easy for the intake port 76 to take in clean air.

The engine 10 is classified as single cylinder engine. Therefore, it is easy to simplify the configuration of the intake pipe 41.

The engine 10 includes a crankcase 11. The crankcase 11 is provided behind the cylinder head 14. Therefore, the cylinder head 14 is disposed at substantially the same height position as the crankcase 11. Therefore, the cylinder head 14 is disposed at a relatively low position. Therefore, the space above the cylinder head 14, below the seat 3, and in front of the storage box 25 is still larger. Accordingly, it is easier to properly install the air cleaner 71.

The cylinder head 14 is smaller than the crankcase 11. Therefore, the space above the cylinder head 14, below the seat 3, and in front of the storage box 25 is still larger. Accordingly, it is easier to properly install the air cleaner 71.

The engine 10 includes a cylinder body 13. The cylinder body 13 forms a cylinder bore 16. The cylinder body 13 is provided behind the cylinder head 14. Therefore, the cylinder head 14 is disposed at substantially the same height position as the cylinder body 13. Therefore, the cylinder head 14 is disposed at a relatively low position. Therefore, the space above the cylinder head 14, below the seat 3, and in front of the storage box 25 is still larger. Accordingly, it is easier to properly install the air cleaner 71.

### 11. Modifications

The embodiment described above may be modified as follows.
(1) In the embodiment, the gear box 55 is disposed in the right area AR, and the first end 64 of the fuel pipe 63 is disposed in the left area AL. Alternatively, the gear box 55 may be disposed in the left area AL and the first end 64 of the fuel pipe 63 may be disposed in the right area AR.
(2) In the embodiment, the entire gear box 55 is disposed in the right area AR. Alternatively, at least a portion of the gear box 55 may be disposed in the left area AL.
(3) In the embodiment, the entire first end 64 of the fuel pipe 63 is disposed in the left area AL. Alternatively, at least a part of the first end 64 of the fuel pipe 63 may be disposed in the right area AR.
(4) In the embodiment, the entire fuel pipe 63 is disposed in the left area AL. Alternatively, at least a part of the fuel pipe 63 may be disposed in the right area AR.
(5) In the embodiment, the downstream portion of the intake pipe 41 includes the first pipe 42 and the throttle body 54. Alternatively, the downstream portion of the intake pipe 41 may further include a member other than the first pipe 42 and the throttle body 54. Alternatively, the downstream portion of the intake pipe 41 may be composed of only the first pipe 42. Alternatively, the downstream portion of the intake pipe 41 may be composed of only the throttle body 54.
(6) In the embodiment, the intake pipe 41 overlaps the seat 3 in vehicle side view. Alternatively, the intake pipe 41 may not overlap the seat 3 in vehicle side view. For example, the entire intake pipe 41 may be disposed lower than the entire seat 3.
(7) In the embodiment, the second pipe 43 overlaps the seat 3 in vehicle side view. Alternatively, the second pipe 43 may not overlap the seat 3 in vehicle side view. For example, the entire second pipe 43 may be disposed lower than the entire seat 3.
(8) In the embodiment, the intake pipe 41 has a portion located more forward than the front end 25a of the storage box 25 and a portion located more rearward than the front end 25a. Alternatively, the entire intake pipe 41 may be disposed more forward than the front end 25a. For example, the entire intake pipe 41 may be disposed more forward than the entire storage box 25.
(9) In the embodiment, the first end 41a has a portion located more forward than the front end 25a of the storage box 25 and a portion located more rearward than the front end 25a. Alternatively, the entire first end 41a may be disposed more forward than the front end 25a. For example, the entire first end 41a may be disposed more forward than the entire storage box 25.
(10) In the embodiment, the first pipe 42 has a portion located more forward than the front end 25a of the storage box 25 and a portion located more rearward than the front end 25a. Alternatively, the entire first pipe 42 may be disposed more forward than the front end 25a. For example, the entire first pipe 42 may be disposed more forward than the entire storage box 25.
(11) In the embodiment, the throttle body 54 has a portion located more forward than the front end 25a of the storage box 25 and a portion located more rearward than the front end 25a. Alternatively, the entire throttle body 54 may be disposed more forward than the front end 25a. For example, the entire throttle body 54 may be disposed more forward than the entire storage box 25.
(12) In the embodiment, the second pipe 43 has a portion located more forward than the front end 25a of the storage box 25 and a portion more rearward than the front end 25a. Alternatively, the entire second pipe 43 may be disposed more forward than the front end 25a. For example, the entire second pipe 43 may be disposed more forward than the entire storage box 25.
(13) In the embodiment, the throttle device 51 has a portion located more forward than the front end 25a of the storage box 25 and a portion located more rearward than the front end 25a. Alternatively, the entire throttle device 51 may be disposed more forward than the front end 25a. For example, the entire throttle device 51 may be disposed more forward than the entire storage box 25.
(14) In the embodiment, the throttle valve 52 has a portion located more forward than the front end 25a of the storage box 25 and a portion located more rearward than the front end 25a. Alternatively, the entire throttle valve 52 may be disposed more forward than the front end 25a. For example, the entire throttle valve 52 may be disposed more forward than the entire storage box 25.
(15) In the embodiment, the gear box 55 has a portion located more forward than the front end 25a of the storage box 25 and a portion located more rearward than the front end 25a. Alternatively, the entire gear box 55 may be disposed more forward than the front end 25a. For example, the entire gear box 55 may be disposed more forward than the entire storage box 25.
(16) In the embodiment, at least a part of the intake pipe 41 is disposed lower than the entire air cleaner 71. Alternatively, the air cleaner 71 may have a portion located lower than the entire intake pipe 41. For example, the air cleaner 71 may extend from a position higher than the entire intake pipe 41 to a position lower than the entire intake pipe 41. For example, the entire intake pipe 41 may be disposed higher than a lower end of the air cleaner 71.
(17) In the embodiment, at least a part of the first pipe 42 is disposed lower than the entire air cleaner 71. Alternatively, the air cleaner 71 may have a portion located lower than the entire first pipe 42. For example, the air cleaner 71 may extend from a position higher than the entire first pipe 42 to a position lower than the entire first pipe 42. For example, the entire first pipe 42 may be disposed higher than the lower end of the air cleaner 71.
(18) In the embodiment, at least a part of the throttle body 54 is disposed lower than the air cleaner 71. Alternatively, the air cleaner 71 may have a portion located lower than the entire throttle body 54. For example, the air cleaner 71 may extend from a position higher than the entire throttle body 54 to a position lower than the entire throttle body 54. For example, the entire throttle body 54 may be disposed higher than the lower end of the air cleaner 71.
(19) In the embodiment, at least a part of the fuel injection device 61 is disposed lower than the entire air cleaner 71. Alternatively, the air cleaner 71 may have a portion located lower than the entire fuel injection device 61. For example, the air cleaner 71 may extend from a position higher than the entire fuel injection device 61 to a position lower than the entire fuel injection device 61. For example, the entire fuel injection device 61 may be disposed higher than the lower end of the air cleaner 71.
(20) In the embodiment, the fuel injection device 61 is attached to the first pipe 42. Alternatively, the fuel injection device 61 may be attached to the throttle body 54.
(21) In the embodiment, the first end 64 of the fuel pipe 63 was connected to the fuel injection device 61 via the joint 67. Alternatively, the first end 64 may be connected to the fuel injection device 61 without the joint 67. For example, the first end 64 may be directly connected to the fuel injection device 61.
(22) In the embodiment, the fuel injection device 61 does not overlap the gear box 55 in vehicle side view. Alternatively, the fuel injection device 61 may overlap the gear box 55 in vehicle side view. For example, at least a portion of the fuel injection device 61 may overlap the gear box 55 in vehicle side view.
(23) In the embodiment, the fuel injection device 61 does not overlap the gear cover 57 in vehicle side view. Alternatively, the fuel injection device 61 may overlap the gear cover 57 in vehicle side view. For example, at least a part of the fuel injection device 61 may overlap the gear cover 57 in vehicle side view.
(24) In the embodiment, the first end 64 of the fuel pipe 63 does not overlap the throttle device 51 in vehicle side view. Alternatively, the first end 64 may overlap the throttle device 51 in vehicle side view. For example, at least a part of the first end 64 may overlap the motor 58 in vehicle side view. For example, the first end 64 may overlap the motor 58 in vehicle side view.
(25) In the embodiment, the entire air cleaner 71 overlaps the seat 3 in a vehicle plan view. Alternatively, the air cleaner 71 may have a first portion and a second portion. The first portion of the air cleaner 71 overlaps the seat 3 in vehicle plan view. The second portion of the air cleaner 71 does not overlap the seat 3 in vehicle plan view. The second portion of the air cleaner 71 is disposed in front of the seat 3 in vehicle plan view, for example. The second portion of the air cleaner 71 is disposed, for example, rightward of the seat 3 in vehicle plan view. The second portion of the air cleaner 71 is disposed, for example, leftward of the seat 3 in a vehicle plan view.
(26) In the embodiment, the entire air cleaner 71 is disposed more rearward than the front end 3a of the seat 3. Alternatively, the air cleaner 71 may include a portion disposed more forward than the front end 3a of the seat 3 in addition to a portion disposed more rearward than the front end 3a of the seat 3.
(27) In the embodiment, the air cleaner 71 overlaps the storage box 25 in vehicle side view. Alternatively, the air cleaner 71 may not overlap the storage box 25 in vehicle side view. The entire air cleaner 71 is disposed more forward than the entire storage box 25.
(28) In the embodiment, the entire air cleaner 71 is disposed higher than the lower end 25b. Alternatively, the air cleaner 71 may be included in a portion disposed lower than the lower end 25b in addition to a portion disposed higher than the lower end 25b.
(29) In the embodiment, the storage box 25 overlaps the cylinder head 14 in vehicle plan view. Alternatively, the storage box 25 may not overlap the cylinder head 14 in vehicle plan view. The storage box 25 may be disposed more rearward than the cylinder head 14. The entire storage box 25 may be disposed more rearward than the entire cylinder head 14.
(30) In the embodiment, the storage box 25 overlaps the intake connection port 17a in vehicle plan view. Alternatively, the storage box 25 may not overlap the intake connection port 17a in vehicle plan view. The storage box 25 may be disposed more rearward than the intake connection port 17a. The entire storage box 25 may be disposed more rearward than the entire intake connection port 17a.
(31) In the embodiment, the entire cylinder unit 12 is disposed lower than the upper end 11a of the crankcase 11. Alternatively, the cylinder unit 12 may have a portion disposed higher than the upper end 11a.
(32) In the embodiment, the entire cylinder head 14 is disposed lower than the upper end 11a. Alternatively, the cylinder head 14 may have a portion disposed higher than the upper end 11a.
(33) In the embodiment, the entire upper surface of the cylinder head 14 is disposed lower than the upper end 11a. Alternatively, the upper surface of the cylinder head 14 may have a portion disposed higher than the upper end 11a.
(34) In the embodiment, the seat 3 was not supported by the storage box 25. The seat 3 was supported by the vehicle body frame 30 without the storage box 25 interposed therebetween. Alternatively, the seat 3 may be supported by the storage box 25. The seat 3 may be supported by the vehicle body frame 30 via the storage box 25.
(35) In the embodiment, the vehicle body frame 30 includes the head pipe 31, the main frame 32, the rear frame 33, and the back stay 34. Alternatively, the vehicle body frame 30 may further include a down frame (not illustrated). The down frame is connected to the head pipe 31. The down frame extends downward and rearward from the head pipe 31. The down frame is disposed lower than the main frame 32. For example, the vehicle body frame 30 may further include a reinforcing member (not illustrated). The reinforcing member is coupled to at least one of the head pipe 31, the main frame 32, the rear frame 33, the back stay 34, and the down frame.
(36) In the embodiment, the number of front wheels 7 is one. Alternatively, the number of front wheels 7 may be two. In the embodiment, the number of rear wheels 22 is one. Alternatively, the number of rear wheels 22 may be two.
(37) In the embodiment, a scooter-type vehicle as the straddled vehicle 1 has been exemplified. Alternatively, the straddled vehicle 1 may be changed to another type of vehicle such as a street type, a sports type, an off-road type, or an irregular ground traveling vehicle (all-terrain vehicle).
(38) The foregoing embodiment and each of the modifications described in paragraphs (1) to (37) above may be further varied as appropriate by replacing or combining their constructions with the constructions of the other modifications.

### [Description of Reference Numerals]

1: Straddled vehicle
3: Seat
4: Recessed space
7: Front wheel
10: Engine
11: Crankcase
11a: Upper end of crankcase
12: Cylinder unit
13: Cylinder body
14: Cylinder head
15: Head cover
C: Cylinder axis
16: Cylinder bore
17: Intake Passage
17a: Intake connection port
18: Intake valve
22: Rear wheel
25: Storage box
30: Vehicle body frame
41: Intake pipe
41a: First end of intake pipe
41b: Second end of intake pipe
42: First pipe
43: Second pipe
44: Exterior portion
45: Interior portion
51: Throttle device
52: Throttle valve
53: Valve shaft
54: Throttle body
55: Gear box
56: Gear mechanism
57: Gear cover
58: Motor
58a: Motor body
58b: Output shaft
58c: Motor case
61: Fuel injection device
63: Fuel pipe
64: First end of fuel pipe
65: Second end of fuel pipe
67: Joint
69: Fuel tank
71: Air cleaner
72: Air cleaner case
72a: Upper portion
72b: Lower portion
73: Bottom
73a: Front portion of bottom
73b: Rear portion of bottom
G: Boundary between front portion of bottom and rear portion of bottom
74: Internal space
74a: Upstream space
74b: Downstream space
75: Filter
76: Intake port
77: Intake duct
78: Through hole
AR: Right area
AL: Left area
F: Boundary of right area and left area
X: Longitudinal direction of straddled vehicle
Y: Transverse direction of straddled vehicle
Z: Up-down direction of straddled vehicle

## Claims

1. A straddled vehicle (1) comprising:
an engine (10);
an intake pipe (41) connected to the engine (10);
a throttle valve (52) provided in the intake pipe (41);
a gear box (55) coupled to the throttle valve (52);
a motor (58) coupled to the gear box (55) and configured to drive the throttle valve (52) via the gear box (55);
a fuel injection device (61) attached to a portion of the intake pipe (41) from the throttle valve (52) to the engine (10); and
a fuel pipe (63) having a first end (64) connected to the fuel injection device (61), wherein
the gear box (55) is disposed in one of a right area (AR) located rightward of the fuel injection device (61) and a left area (AL) located leftward of the fuel injection device (61) with regard to a transverse direction (Y) of the straddled vehicle (1), **characterized in that**
the gear box (55) overlaps the first end (64) of the fuel pipe (63) in side view of the straddled vehicle (1), and
the first end (64) of the fuel pipe (63) is disposed in the other of the right area (AR) and the left area (AL) with regard to the transverse direction (Y) of the straddled vehicle (1).

2. The straddled vehicle (1) according to claim 1, **characterized in that** the gear box (55) overlaps the fuel injection device (61) in side view of the straddled vehicle (1).

3. The straddled vehicle (1) according to claim 1 or 2, **characterized in that** the intake pipe (41) extends upward from the engine (10) with regard to an up-down direction (Z) of the straddled vehicle (1),
the fuel injection device (61) is disposed above the engine (10) with regard to the up-down direction (Z) of the straddled vehicle (1), and
the throttle valve (52) is disposed higher than the fuel injection device (61) with regard to the up-down direction (Z) of the straddled vehicle (1).

4. The straddled vehicle (1) according to any one of claims 1 to 3, **characterized in that** the throttle valve (52) is disposed at a same height position as the gear box (55) with regard to the up-down direction (Z) of the straddled vehicle (1).

5. The straddled vehicle (1) according to any one of claims 1 to 4, **characterized in that** the fuel injection device (61) extends forward from the intake pipe (41) with regard to a longitudinal direction (X) of the straddled vehicle (1) and upward from the intake pipe (41) with regard to the up-down direction (Z) of the straddled vehicle (1), and
the gear box (55) extends forward from the throttle valve (52) with regard to the longitudinal direction (X) of the straddled vehicle (1).

6. The straddled vehicle (1) according to any one of claims 1 to 5, **characterized in that** the first end (64) of the fuel pipe (63) extends forward from the fuel injection device (61) with regard to the longitudinal direction (X) of the straddled vehicle (1).

7. The straddled vehicle (1) according to any one of claims 1 to 6, **characterized in that** the intake pipe (41) includes
a throttle body (54) that accommodates the throttle valve (52), and
a first pipe (42) extending from the engine (10) to the throttle body (54), and
the fuel injection device (61) is attached to the first pipe (42).

8. The straddled vehicle (1) according to claim 7, **characterized in that** the first pipe (42) extends upward from the engine (10) with regard to the up-down direction (Z) of the straddled vehicle (1) and rearward from the engine (10) with regard to the longitudinal direction (X) of the straddled vehicle (1), and
the throttle body (54) extends upward from the first pipe (42) with regard to the up-down direction (Z) of the straddled vehicle (1).

9. The straddled vehicle (1) according to any one of claims 1 to 8, **characterized in that** the motor (58) is disposed in front of the throttle valve (52) with regard to the longitudinal direction (X) of the straddled vehicle (1).

10. The straddled vehicle (1) according to any one of claims 1 to 9, **characterized in that** the motor (58) is disposed higher than the engine (10) with regard to the up-down direction (Z) of the straddled vehicle (1).

11. The straddled vehicle (1) according to any one of claims 1 to 10, **characterized in that** the motor (58) is disposed higher than the first end (64) of the fuel pipe (63) with regard to the up-down direction (Z) of the straddled vehicle (1).

12. The straddled vehicle (1) according to any one of claims 1 to 11, **characterized in that** the motor (58) is disposed higher than the fuel injection device (61) with regard to the up-down direction (Z) of the straddled vehicle (1).

13. The straddled vehicle (1) according to any one of claims 1 to 12, **characterized in that** the straddled vehicle (1) includes
the seat (3), and
a storage box (25) disposed below the seat (3) with regard to the up-down direction (Z) of the straddled vehicle (1), and
the intake pipe (41) is disposed in front of the storage box (25) with regard to the longitudinal direction (X) of the straddled vehicle (1).

14. The straddled vehicle (1) according to claim 13, **characterized in that** the motor (58) is disposed in front of the storage box (25) with regard to the longitudinal direction (X) of the straddled vehicle (1).

15. The straddled vehicle (1) according to any one of claims 1 to 14, **characterized in that** the straddled vehicle (1) further includes an air cleaner (71) connected to the intake pipe (41), and
the motor (58) is disposed below the air cleaner (71) with regard to the up-down direction (Z) of the straddled vehicle (1).

## Patentansprüche

1. Ein Spreizsitzfahrzeug (1), das umfasst:
einen Motor (10);
ein Einlassrohr (41), das mit dem Motor (10) verbunden ist;
ein Drosselventil (52), das im Einlassrohr (41) vorgesehen ist;
ein Getriebe (55), das mit dem Drosselventil (52) gekoppelt ist;
einen Motor (58), der mit dem Getriebe (55) gekoppelt und so konfiguriert ist, dass er das Drosselventil (52) über das Getriebe (55) antreibt;
eine Kraftstoffeinspritzvorrichtung (61), die an einem Abschnitt des Einlassrohrs (41) vom Drosselventil (52) zum Motor (10) angebracht ist; und
eine Kraftstoffleitung (63) mit einem ersten Ende (64), das mit der Kraftstoffeinspritzvorrichtung (61) verbunden ist, wobei
das Getriebe (55) in einen von einem rechten Bereich (AR), der sich rechts von der Kraftstoffeinspritzvorrichtung (61) befindet, und einem linken Bereich (AL), der sich links von der Kraftstoffeinspritzvorrichtung (61) befindet, in Bezug auf eine Querrichtung (Y) des Spreizsitzfahrzeugs (1) angeordnet ist, **dadurch gekennzeichnet, dass**
das Getriebe (55) in der Seitenansicht des Spreizsitzfahrzeugs (1) das erste Ende (64) der Kraftstoffleitung (63) überlappt, und
das erste Ende (64) der Kraftstoffleitung (63) in Bezug auf die Querrichtung (Y) des Spreizsitzfahrzeugs (1) in dem anderen Bereich, von dem rechten Bereich (AR) und dem linken Bereich (AL), angeordnet ist.

2. Das Spreizsitzfahrzeug (1) gemäß Anspruch 1, **dadurch gekennzeichnet, dass** das Getriebe (55) in der Seitenansicht des Spreizsitzfahrzeugs (1) die Kraftstoffeinspritzvorrichtung (61) überlappt.

3. Das Spreizsitzfahrzeug (1) gemäß Anspruch 1 oder 2, **dadurch gekennzeichnet, dass** sich das Einlassrohr (41) in Bezug auf die Auf-Ab-Richtung (Z) des Spreizsitzfahrzeugs (1) vom Motor (10) nach oben erstreckt,
die Kraftstoffeinspritzvorrichtung (61) in Bezug auf die Auf-Ab-Richtung (Z) des Spreizsitzfahrzeugs (1) oberhalb des Motors (10) angeordnet ist und
das Drosselventil (52) in Bezug auf die Auf-Ab-Richtung (Z) des Spreizsitzfahrzeugs (1) höher als die Kraftstoffeinspritzvorrichtung (61) angeordnet ist.

4. Das Spreizsitzfahrzeug (1) gemäß irgendeinem der Ansprüche 1 bis 3, **dadurch gekennzeichnet, dass** das Drosselventil (52) in Bezug auf die Auf-Ab-Richtung (Z) des Spreizsitzfahrzeugs (1) auf derselben Höhe wie das Getriebe (55) angeordnet ist.

5. Das Spreizsitzfahrzeug (1) gemäß irgendeinem der Ansprüche 1 bis 4, **dadurch gekennzeichnet, dass** sich die Kraftstoffeinspritzeinrichtung (61) in Bezug auf die Längsrichtung (X) des Spreizsitzfahrzeugs (1) von dem Einlassrohr (41) nach vorne und in Bezug auf die Auf-Ab-Richtung (Z) des Spreizsitzfahrzeugs (1) von dem Einlassrohr (41) nach oben erstreckt, und
sich das Getriebe (55) in Bezug auf die Längsrichtung (X) des Spreizsitzfahrzeugs (1) von dem Drosselventil (52) nach vorne erstreckt.

6. Das Spreizsitzfahrzeug (1) gemäß irgendeinem der Ansprüche 1 bis 5, **dadurch gekennzeichnet, dass** sich das erste Ende (64) der Kraftstoffleitung (63) in Bezug auf die Längsrichtung (X) des Spreizsitzfahrzeugs (1) von der Kraftstoffeinspritzvorrichtung (61) nach vorne erstreckt.

7. Das Spreizsitzfahrzeug (1) gemäß irgendeinem der Ansprüche 1 bis 6, **dadurch gekennzeichnet, dass** das Einlassrohr (41) enthält
einen Drosselkörper (54), der das Drosselventil (52) aufnimmt, und
ein erstes Rohr (42), die sich vom Motor (10) zum Drosselkörper (54) erstreckt, und die Kraftstoffeinspritzvorrichtung (61) an dem ersten Rohr (42) angebracht ist.

8. Das Spreizsitzfahrzeug (1) gemäß Anspruch 7, **dadurch gekennzeichnet, dass** sich das erste Rohr (42) in Bezug auf die Auf-Ab-Richtung (Z) des Spreizsitzfahrzeugs (1) vom Motor (10) nach oben und in Bezug auf die Längsrichtung (X) des Spreizsitzfahrzeugs (1) vom Motor (10) nach hinten erstreckt, und
sich der Drosselkörper (54) in Bezug auf die Auf-Ab-Richtung (Z) des Spreizsitzfahrzeugs (1) von dem ersten Rohr (42) nach oben erstreckt.

9. Das Spreizsitzfahrzeug (1) gemäß irgendeinem der Ansprüche 1 bis 8, **dadurch gekennzeichnet, dass** der Motor (58) in Bezug auf die Längsrichtung (X) des Spreizsitzfahrzeugs (1) vor dem Drosselventil (52) angeordnet ist.

10. Das Spreizsitzfahrzeug (1) gemäß irgendeinem der Ansprüche 1 bis 9, **dadurch gekennzeichnet, dass** der Motor (58) in Bezug auf die Auf-Ab-Richtung (Z) des Spreizsitzfahrzeugs (1) höher angeordnet ist als der Motor (10).

11. Das Spreizsitzfahrzeug (1) gemäß irgendeinem der Ansprüche 1 bis 10, **dadurch gekennzeichnet, dass** der Motor (58) in Bezug auf die Auf-Ab-Richtung (Z) des Spreizsitzfahrzeugs (1) höher angeordnet ist als das erste Ende (64) der Kraftstoffleitung (63).

12. Das Spreizsitzfahrzeug (1) gemäß irgendeinem der Ansprüche 1 bis 11, **dadurch gekennzeichnet, dass** der Motor (58) in Bezug auf die Auf-Ab-Richtung (Z) des Spreizsitzfahrzeugs (1) höher angeordnet ist als die Kraftstoffeinspritzvorrichtung (61).

13. Das Spreizsitzfahrzeug (1) gemäß irgendeinem der Ansprüche 1 bis 12, **dadurch gekennzeichnet, dass** das Spreizsitzfahrzeug (1) enthält
den Sitz (3) und
einen Staukasten (25), der in Bezug auf die Auf-Ab-Richtung (Z) des Spreizsitzfahrzeugs (1) unterhalb des Sitzes (3) angeordnet ist, und
das Einlassrohr (41) in Bezug auf die Längsrichtung (X) des Spreizsitzfahrzeugs (1) vor dem Staukasten (25) angeordnet ist.

14. Das Spreizsitzfahrzeug (1) gemäß Anspruch 13, **dadurch gekennzeichnet, dass** der Motor (58) in Bezug auf die Längsrichtung (X) des Spreizsitzfahrzeugs (1) vor dem Staukasten (25) angeordnet ist.

15. Das Spreizsitzfahrzeug (1) gemäß irgendeinem der Ansprüche 1 bis 14, **dadurch gekennzeichnet, dass** das Spreizsitzfahrzeug (1) ferner einen Luftfilter (71) enthält, der mit dem Einlassrohr (41) verbunden ist, und
der Motor (58) in Bezug auf die Auf-Ab-Richtung (Z) des Spreizsitzfahrzeugs (1) unterhalb des Luftfilters (71) angeordnet ist.

## Revendications

1. Véhicule à enfourcher (1) comprenant :
un moteur thermique (10) ;
un tuyau d'admission (41) relié au moteur thermique (10) ;
une papillon des gaz (52) agencé dans le tuyau d'admission (41) ;
une boîte de vitesses (55) couplée au papillon des gaz (52) ;
un moteur (58) couplé à la boîte de vitesses (55) et configuré pour entraîner le papillon des gaz (52) via la boîte de vitesses (55) ;
un dispositif d'injection de carburant (61) fixé à une portion du tuyau d'admission (41) allant du papillon des gaz (52) au moteur thermique (10) ; et
un tuyau de carburant (63) ayant une première extrémité (64) reliée au dispositif d'injection de carburant (61), dans lequel
la boîte de vitesses (55) est disposée dans l'une d'une zone droite (AR) située à droite du dispositif d'injection de carburant (61) et d'une zone gauche (AL) située à gauche du dispositif d'injection de carburant (61) par rapport à une direction transversale (Y) du véhicule à enfourcher (1),
**caractérisé en ce que**
la boîte de vitesses (55) chevauche la première extrémité (64) du tuyau de carburant (63) sur une vue de côté du véhicule à enfourcher (1), et
la première extrémité (64) du tuyau de carburant (63) est disposée dans l'autre zone de la zone de droite (AR) et de la zone gauche (AL) par rapport à la direction transversale (Y) du véhicule à enfourcher (1).

2. Véhicule à enfourcher (1) selon la revendication 1, **caractérisé en ce que** que la boîte de vitesses (55) chevauche le dispositif d'injection de carburant (61) sur une vue de côté du véhicule à enfourcher (1).

3. Véhicule à enfourcher (1) selon la revendication 1 ou 2, **caractérisé en ce que** le tuyau d'admission (41) s'étend vers le haut depuis le moteur thermique (10) par rapport à une direction haut-bas (Z) du véhicule à enfourcher (1),
le dispositif d'injection de carburant (61) est disposé au-dessus du moteur thermique (10) par rapport à la direction haut-bas (Z) du véhicule à enfourcher (1), et
le papillon des gaz (52) est disposé plus haut que le dispositif d'injection de carburant (61) par rapport à la direction haut-bas (Z) du véhicule à enfourcher (1).

4. Véhicule à enfourcher (1) selon l'une quelconque des revendications 1 à 3, **caractérisé en ce que** le papillon des gaz (52) est disposé à une même position en hauteur que la boîte de vitesses (55) par rapport à la direction haut-bas (Z) du véhicule à enfourcher (1).

5. Véhicule à enfourcher (1) selon l'une quelconque des revendications 1 à 4, **caractérisé en ce que** le dispositif d'injection de carburant (61) s'étend vers l'avant depuis le tuyau d'admission (41) par rapport à une direction longitudinale (X) du véhicule à enfourcher (1) et vers le haut depuis le tuyau d'admission (41) par rapport à la direction haut-bas (Z) du véhicule à enfourcher (1), et
la boîte de vitesses (55) s'étend vers l'avant depuis le papillon des gaz (52) par rapport à la direction longitudinale (X) du véhicule à enfourcher (1).

6. Véhicule à enfourcher (1) selon l'une quelconque des revendications 1 à 5, **caractérisé en ce que** la première extrémité (64) du tuyau de carburant (63) s'étend vers l'avant depuis le dispositif d'injection de carburant (61) par rapport à la direction longitudinale (X) du véhicule à enfourcher (1).

7. Véhicule à enfourcher (1) selon l'une quelconque des revendications 1 à 6, **caractérisé en ce que** le tuyau d'admission (41) comporte
un corps de papillon (54) qui héberge le papillon des gaz (52), et
un premier tuyau (42) s'étendant du moteur thermique (10) au corps de papillon (54), et
le dispositif d'injection de carburant (61) qui est fixé au premier tuyau (42).

8. Véhicule à enfourcher (1) selon la revendication 7, **caractérisé en ce que** le premier tuyau (42) s'étend vers le haut depuis le moteur thermique (10) par rapport à la direction haut-bas (Z) du véhicule à enfourcher (1) et vers l'arrière depuis le moteur thermique (10) par rapport à la direction longitudinale (X) du véhicule à enfourcher (1), et
le corps de papillon (54) s'étend vers le haut depuis le premier tuyau (42) par rapport à la direction haut-bas (Z) du véhicule à enfourcher (1).

9. Véhicule à enfourcher (1) selon l'une quelconque des revendications 1 à 8, **caractérisé en ce que** le moteur (58) est disposé devant le papillon des gaz (52) par rapport à la direction longitudinale (X) du véhicule à enfourcher (1).

10. Véhicule à enfourcher (1) selon l'une quelconque des revendications 1 à 9, **caractérisé en ce que** le moteur (58) est placé plus haut que le moteur thermique (10) par rapport à la direction haut-bas (Z) du véhicule à enfourcher (1).

11. Véhicule à enfourcher (1) selon l'une quelconque des revendications 1 à 10, **caractérisé en ce que** le moteur (58) est disposé plus haut que la première extrémité (64) du tuyau de carburant (63) par rapport à la direction haut-bas (Z) du véhicule à enfourcher (1).

12. Véhicule à enfourcher (1) selon l'une quelconque des revendications 1 à 11, **caractérisé en ce que** le moteur (58) est disposé plus haut que le dispositif d'injection de carburant (61) par rapport à la direction haut-bas (Z) du véhicule à enfourcher (1).

13. Véhicule à enfourcher (1) selon l'une quelconque des revendications 1 à 12, **caractérisé en ce que** le véhicule à enfourcher (1) comporte
le siège (3), et
une boîte de rangement (25) disposée sous le siège (3) par rapport à la direction haut-bas (Z) du véhicule à enfourcher (1), et
le tuyau d'admission (41) est disposé devant la boîte de rangement (25) par rapport à la direction longitudinale (X) du véhicule à enfourcher (1).

14. Véhicule à enfourcher (1) selon la revendication 13, **caractérisé en ce que** le moteur (58) est disposé devant la boîte de rangement (25) par rapport à la direction longitudinale (X) du véhicule à enfourcher (1).

15. Véhicule à enfourcher (1) selon l'une quelconque des revendications 1 à 14, **caractérisé en ce que** le véhicule à enfourcher (1) comporte en outre un filtre à air (71) relié au tuyau d'admission (41), et
le moteur (58) est placé sous le filtre à air (71) par rapport à la direction haut-bas (Z) du véhicule à enfourcher (1).
